# EUROPÄISCHE PATENTSCHRIFT

(11) **EP 2 674 389 B1**
(45) Veröffentlichungstag und Bekanntmachung des Hinweises auf die Patenterteilung: **15.03.2017**
(21) Anmeldenummer: 13169756.7
(22) Anmeldetag: 29.05.2013
(51) Int. Cl.: B66F 9/075, B60S 5/06

(54) **Elektrisch betriebenes Fahrzeug und System zum Wechsel von Energieversorgungsmodulen für den Betrieb des Fahrzeugs**
Electrically operated vehicle and system for exchanging energy supply modules for the vehicle drive
Véhicule électrique et système de changement des modules d'alimentation en énergie pour l'entraînement du véhicule

(30) Priorität: 12.06.2012 DE 102012209801
(43) Veröffentlichungstag der Anmeldung: 18.12.2013
(73) Patentinhaber: Jungheinrich Aktiengesellschaft, 22047 Hamburg (DE)
(72) Erfinder: Magens, Ernst-Peter, 22949 Ammersbek (DE); Wetegrove, Ralf, 22850 Norderstedt (DE)
(74) Vertreter: Weickmann & Weickmann PartmbB

(56) Entgegenhaltungen:
- EP-A2- 1 876 075
- EP-A2- 2 011 761
- DE-A1- 19 956 623
- DE-A1-102010 035 553

## Beschreibung

Die Erfindung betrifft nach einem ersten Aspekt ein elektrisch betriebenes Fahrzeug, welches zur Bereitstellung von elektrischer Energie für den Betrieb des Fahrzeugs in wenigstens einem Aufnahmeraum einer Modulaufnahmestruktur des Fahrzeugs wenigstens ein mindestens eine elektrische Energiequelle oder/und mindestens einen ladbaren elektrischen Energiespeicher enthaltendes Energieversorgungsmodul aufnimmt,
wobei das Energieversorgungsmodul von einer Zuführseite in Bezug auf die Modulaufnahmestruktur her entlang einem Einführpfad in den Aufnahmeraum zuführbar und in einer definierten Betriebsstellung positionierbar ist und zur Zuführseite hin aus dem Aufnahmeraum entfernbar ist und wobei in der Betriebsstellung eine erste elektrische Kontaktanordnung der Modulaufnahmestruktur mit einer zweiten elektrischen Kontaktanordnung des Energieversorgungsmoduls eingreift oder in Eingriff bringbar ist, um eine an der ersten Kontaktanordnung angeschlossene erste elektrische Leiteranordnung an einer an der zweiten elektrischen Leiteranordnung angeschlossenen zweiten elektrischen Leiteranordnung anzuschließen,
wobei die Modulaufnahmestruktur den Aufnahmeraum begrenzende Innenflächen aufweist, denen zugeordnete Außenflächen des in der Betriebsstellung angeordneten Energieversorgungsmoduls gegenüber liegen,
wobei die Modulaufnahmestruktur mit ersten Führungsmitteln im Aufnahmeraum ausgeführt ist, die beim Zuführen des Energieversorgungsmoduls in den Aufnahmeraum mit zweiten Führungsmitteln des Energieversorgungsmoduls in Bezug auf die Positionierung des Energieversorgungsmoduls in der Betriebsstellung zusammen wirken, und
wobei das Energieversorgungsmodul in der Betriebsstellung translatorisch, in Bezug auf alle drei zueinander orthogonalen Raumrichtungen, und rotatorisch, in Bezug auf eine Neigung um drei zueinander orthogonale Neigungsachsen, definiert relativ zur Modufaufnahmestruktur und damit in dem Aufnahmeraum positioniert und orientiert ist, so dass das die Betriebsstellung einnehmende Energieversorgungsmodul zum Entfernen aus dem Aufnahmeraum zumindest zu Beginn der Bewegung des Energieversorgungsmoduls weg von der Betriebsstellung in einer vordefinierten, von der Gestaltung der Modulaufnahmestruktur und des Energieversorgungsmoduls bestimmten und im Folgenden als Referenzrichtung angesprochenen Bewegungsrichtung zu bewegen ist. Es wird vor allem, aber nicht ausschließlich an ein gewerbliches Fahrzeug wie etwa ein Flurförderzeug oder ein Gabelstapler gedacht.

Die Erfindung betrifft nach einem zweiten Aspekt eine Ladestation zum Laden eines mindestens einen ladbaren elektrischen Energiespeicher enthaltenen Energieversorgungsmoduls, welches für die Bereitstellung von elektrischer Energie für den Betrieb eines elektrisch betriebenen Fahrzeugs (insbesondere eines elektrisch betriebenen gewerblichen Fahrzeugs, wie etwa ein Flurförderzeug oder ein Gabelstapler; speziell des Fahrzeugs nach dem ersten Aspekt der Erfindung) vorgesehen ist, wobei eine Modulaufnahmestruktur der Ladestation wenigstens einen Aufnahmeraum aufweist, in dem ein zu ladendes Energieversorgungsmodul aufnehmbar ist, wobei das Energieversorgungsmodul von einer Zuführseite in Bezug auf die Modulaufnahmestruktur her entlang einem Einführpfad in den Aufnahmeraum zuführbar und in einer definierten Betriebsstellung positionierbar ist und zur Zuführseite hin aus dem Aufnahmeraum entfernbar ist und wobei in der Betriebsstellung eine erste elektrische Kontaktanordnung der Modulaufnahmestruktur mit einer zweiten elektrischen Kontaktanordnung des Energieversorgungsmoduls eingreift oder in Eingriff bringbar ist, um eine an der ersten Kontaktanordnung angeschlossene erste elektrische Leiteranordnung an einer an der zweiten elektrischen Leiteranordnung angeschlossenen zweiten elektrischen Leiteranordnung anzuschließen,
wobei die Modulaufnahmestruktur den Aufnahmeraum begrenzende Innenflächen aufweist, denen zugeordnete Außenflächen des in der Betriebsstellung angeordneten Energieversorgungsmoduls gegenüber liegen,
wobei die Modulaufnahmestruktur mit ersten Führungsmitteln im Aufnahmeraum ausgeführt ist, die beim Zuführen des Energieversorgungsmoduls in den Aufnahmeraum mit zweiten Führungsmitteln des Energieversorgungsmoduls in Bezug auf die Positionierung des Energieversorgungsmoduls in der Betriebsstellung zusammen wirken, und
wobei das Energieversorgungsmodul in der Betriebsstellung translatorisch, in Bezug auf alle drei zueinander orthogonalen Raumrichtungen, und rotatorisch, in Bezug auf eine Neigung um drei zueinander orthogonale Neigungsachsen, definiert relativ zur Modulaufnahmestruktur und damit in dem Aufnahmeraum positioniert und orientiert ist, so dass das die Betriebsstellung einnehmende Energieversorgungsmodul zum Entfernen aus dem Aufnahmeraum zumindest zu Beginn der Bewegung des Energieversorgungsmoduls weg von der Betriebsstellung in einer vordefinierten, von der Gestaltung der Modulaufnahmestruktur und des Energieversorgungsmoduls bestimmten und im Folgenden als Referenzrichtung angesprochenen Bewegungsrichtung zu bewegen ist.

Ein derartiges Fahrzeug und eine derartige Ladestation sind aus der DE 199 56 623 A1 bekannt. Das vorbekannte Energieversorgungsmodul weist ein trogartiges Gehäuse auf, welches eine ladbare Batterie enthält und an einer Seite mit Kontaktmitteln ausgeführt ist. Auf entgegengesetzten Seiten des Gehäuses sind Führungsmittel in Form von Rollen vorgesehen, die beim Zuführen und Entfernen des Energieversorgungsmoduls in bzw. aus einem zur Seite eines Rahmens des Fahrzeugs in Form eines Flurförderzeugs geöffneten Aufnahmeraum des Fahrzeugs mit annähernd horizontalen Führungsschienen an zueinander entgegengesetzten Innenflächen des Aufnahmeraums zusammenwirken. An beiden Innenflächen ist jeweils ein Paar von vertikal beabstandeten Schienen vorgesehen, die zu einem Einlaufende einen Einlauftrichter bilden, so dass der Führungseingriff zwischen den Rollen und den Schienen beim Zuführen des Energieversorgungsmoduls leichter herstellbar ist. Das Energieversorgungsmodul kann dann, wenn das Energieversorgungsmodul annähernd vollständig in den Aufnahmeraum eingeschoben ist, in seiner dann erreichten Betriebsstellung gesichert werden, durch eine von außen entriegelbare Verriegelungsvorrichtung an der Führung oder an der Batterie, die mit einem Verriegelungsansatz an der Batterie oder an der Führung automatisch zusammenwirkt, wenn das Energieversorgungsmodul die Betriebsstellung erreicht hat. Im Aufnahmeraum sind Gegen-Kontaktmittel vorgesehen, die automatisch mit den Kontaktmitteln des Energieversorgungsmoduls zusammenwirken, wenn sich das Energieversorgungsmodul in der Aufnahmeposition befindet.

Für ein zugehöriges, zum Wiederaufladen der Batterie vorgesehenes Ladegerät wird vorgeschlagen, dass dieses ähnliche Mittel wie das Flurförderzeug aufweisen kann, um das Einsetzen des Energieversorgungsmoduls in das Ladegerät und die Entnahme in der gleichen Weise zu bewerkstelligen, wie dies bei dem offenbarten Flurförderzeug der Fall ist.

Betreffend das Zuführen bzw. Entfernen des Energieversorgungsmoduls bzw. den im Betrieb notwendigen Modulwechsel wird vorgeschlagen, dass ein auf der Gabel eines Gabelhubwagens oder dergleichen aufgenommenes Transportgestell verwendet wird, mit dem das Energieversorgungsmodul auf die richtige Höhe gebracht wird, so dass die Rollen des Energieversorgungsmoduls durch die Einlauftrichter zwischen der jeweiligen oberen und unteren Schiene an den entgegengesetzten Innenflächen des Aufnahmeraums aufgenommen und das Modul in die Betriebsstellung gebracht wird, indem der Gabelhubwagen entsprechend vorwärts bewegt wird und vermittels eines Hubabschnitts des Transportgestells das Modul vorwärts in Richtung zur Betriebsstellung schiebt. Auf einer Oberseite weist das Transportgestell Tragrollenanordnungen auf, mit deren Hilfe das Energieversorgungsmodul seitlich verschoben werden kann, um es in Querrichtung, also in der Richtung, in denen die die die Schienen tragenden Innenwände des Aufnahmeraums beabstandet sind, richtig positionieren zu können. Eine gewisse Korrektur der seitlichen Ausrichtung der Batterie beim Einschieben erfolgt automatisch dadurch, dass die Schienen im Bereich des Einlauftrichters abgeschrägt sind, so dass auch in Querrichtung eine Art Einlauftrichter für das trogartige Gehäuse des Energieversorgungsmoduls gebildet ist.

Aus der DE 100 03 271 A1 ist ein Flurförderzeug mit einer elektrischen Antriebsvorrichtung bekannt, welches beidseits einer Längsachse des Flurförderzeugs in Form eines Gabelstaplers jeweils einen zur Seite hin zugänglichen Aufnahmeraum aufweist, in dem jeweils ein Energieversorgungsmodul aufnehmbar ist. In den Aufnahmeräumen ist jeweils eine fahrzeugfeste Kontaktiereinheit vorgesehen, und die Aufnahmeräume sind mit seitlichen Führungen zur Aufnahme von Rollenpaaren auf beiden Seiten eines Gehäuses des jeweiligen Energieversorgungsmoduls ausgeführt, so dass die Energieversorgungsmodule seitlich mit Hilfe eines Transportgeräts in den jeweiligen Aufnahmeraum eingeschoben werden können, wobei die Rollen und Führungen das Beladen und das Entladen erleichtern.

Als Energieversorgungsmodule sind Energieversorgungsmodule nach einem ersten Typ und nach einem zweiten Typ vorgesehen. Das Energieversorgungsmodul nach dem ersten Typ enthält einen verbrennungsmotorischen Stromerzeuger und einen Kraftstofftank und ist vor allem für einen Außenbetrieb des Flurförderzeugs vorgesehen. Das Energieversorgungsmodul des zweiten Typs enthält eine ladbare Batterie (einen Akkumulator) und ist vor allem für einen Innenbetrieb des Flurförderzeugs vorgesehen. Es kann dann ein Energieversorgungsmodul des ersten Typs in den einen Aufnahmeraum und ein Energieversorgungsmodul des zweiten Typs in den anderen Aufnahmeraum des Flurförderzeugs aufgenommen werden. Da beide Aufnahmeräume gleich ausgeführt sind, kann auch in beide Aufnahmeräume jeweils ein Energieversorgungsmodul des zweiten Typs aufgenommen werden.

Die DE 10 2010 035 553 A1 offenbart ein Flurförderzeug mit einem einen elektrischen Fahrantrieb aufweisenden Antriebsteil. Ein manuell handhabbares Energieversorgungsmodul, das eine Batterie hoher Energiedichte, insbesondere Lithium-Ionen-Technologie, enthält, und zur Versorgung des Fahrantriebs dient, ist in einem Batterieaufnahmeraum des Fahrzeugs einsetzbar. Im eingesetzten Zustand weist das Energieversorgungsmodul eine definierte Einbaulage auf. Die Batterieaufnahme umschließt das Energieversorgungsmodul im eingesetzten Zustand so, dass das Energieversorgungsmodul in der definierten Einbaulage nicht verschiebbar ist, sondern erst nach einem Verkippen in eine waagerechte Schwenkachse aus dem Batterieaufnahmeraum entnehmbar ist. Am Energieversorgungsmodul oder im Batterieaufnahmeraum sind federvorgespannte Kontakte angeordnet, die beim Einsetzen des Energiemoduls automatisch die nötigen elektrischen Verbindungen zwischen dem Energieversorgungsmodul und dem Flurförderzeug herstellen. Es wird die Möglichkeit erwähnt, dass eine Steckverbindung verwendet werden kann, die die federvorgespannten Kontakte aufweist.

Ein elektrisch betriebener Hubwagen, insbesondere Niederhubwagen, mit einem Batteriefach zur Aufnahme einer Batterie und einer Kupplung-Stecker-Vorrichtung zur elektrischen Verbindung der. Batterie mit einem elektrischen Antriebssystem des Hubwagens ist aus der DE 10 2007 034 743 A1 bekannt. Das Batteriefach weist eine Kontaktvorrichtung, insbesondere eine Kupplung, der Kupplung-Stecker-Vorrichtung auf, und die Batterie eine zugeordnete Gegen-Kontakteinrichtung, insbesondere einen Stecker, der Kupplung-Stecker-Vorrichtung. Bei Durchführung eines Batteriewechsels durch Bewegen der Batterie relativ zum Batteriefach ist die in der Batterie integrierte Gegen-Kontakteinrichtung mit der in das Batteriefach integrierten Kontakteinrichtung automatisch kontaktierbar.

Insbesondere dann, wenn zum Betrieb des jeweiligen Fahrzeug ein Energieversorgungsmodul vorgesehen ist, welches manuell nicht mehr handhabbar und zum Zuführen des Energieversorgungsmoduls in den Aufnahmeraum zur Positionierung in der Betriebsstellung und zum Entfernen des Energieversorgungsmoduls aus dem Aufnahmeraum eine Hilfseinrichtung nötig ist, ergeben sich Probleme daraus, dass das Fahrzeug nicht richtig ausgerichtet sein könnte. Insbesondere könnte das Fahrzeug in Quer- oder in Längsrichtung geneigt sein, so dass das Einsetzen und wieder Herausnehmen des wenigstens einen Energieversorgungsmoduls behindert sein könnte oder sogar überhaupt nicht möglich sein könnte, zumindest in einer praktischen Betrachtung. Auch im Falle einer Ladestation können sich ähnliche Probleme ergeben, wenn diese nicht ideal ausgerichtet ist.

Solche Fehlausrichtungen können die Folge von Bodenunebenheiten, ungleichmäßiger Einfederung infolge ungleicher Beladung beispielsweise eines Personenkraftwagens oder eines gewerblichen Fahrzeugs oder auch die Folge von unterschiedlich abgefahrenen Reifen sein.

Auch bodengeführte Hilfseinrichtungen zum Zuführen eines jeweiligen Energieversorgungsmoduls in den Aufnahmeraum und zum Entfernen des Energieversorgungsmoduls aus dem Aufnahmeraum können die durch die angesprochene Fehlausrichtung entstehenden Probleme nicht lösen, zumindest so lange man mit einfach ausgeführten Hilfseinrichtungen zurecht kommen möchte. Zu beachten in diesem Zusammenhang ist auch, dass die Zufuhr des Energieversorgungsmoduls in den Aufnahmeraum noch nicht ausreicht, um den ordnungsgemäßen Betrieb des Fahrzeugs zu ermöglichen. Das Energieversorgungsmodul muss auch richtig in der Betriebsstellung positioniert werden, und es müssen die vorgesehenen elektrischen Verbindungen zwischen dem Energieversorgungsmodul einerseits und dem elektrischen System des Fahrzeugs durch gegenseitige Kontaktierung von fahrzeugseitigen Kontakten und modulseitigen Kontakten hergestellt werden, was eine bestimmte definierte relative Ausrichtung und Zentrierung der Modulaufnahmestruktur des Fahrzeugs einerseits und dem Energieversorgungsmodul andererseits erfordert, was bei herkömmlichen Lösungen auch eine definierte Ausrichtung und Zentrierung der Hilfseinrichtung in Bezug auf die Modulaufnahmestruktur des Fahrzeug erforderte. Die Ausführung von Führungsschienen eines Aufnahmeraums mit in Vertikalrichtung und Querrichtung wirksamen Einlauftrichtern entsprechend DE 199 56 623 A1 kann nur gegenseitige Fehlpositionierungen des vom Transportgestell getragenen Energieversorgungsmoduls relativ zum Aufnahmeraum ausgleichen und scheitert bei in Betrieb eines Fahrzeugs regelmäßig auftretenden deutlichen Quer- und Längsneigungen des Fahrzeugs relativ zu einer idealen Stellung ohne solche Neigung. Wenn beim angesprochenen Stand der Technik das Batteriemodul beim Einschieben durch das dem Fahrzeug zugewandte Rollenpaar durch den Kontakt mit den Führungsschienen angehoben wird, dürfte zwar in einem gewissen Umfang eine Querneigung ausgleichbar sein. Demgegenüber gestaltet es sich wesentlich schwieriger, eine Längsneigung auszugleichen.

Demgegenüber ist es eine Aufgabe der vorliegenden Erfindung, die Modulaufnahmestruktur und das Energieversorgungsmodul derart in Bezug aufeinander auszuführen, dass das Zuführen des Energieversorgungsmoduls in den Aufnahmeraum und die Positionierung des Energieversorgungsmoduls in der Betriebsstellung darin sowie das Entfernen des in der Betriebsstellung angeordneten Energieversorgungsmoduls aus dem Aufnahmeraum einfach möglich bleibt, selbst wenn das Fahrzeug bzw. die Ladestation in beliebiger Richtung geneigt ist. Das Energieversorgungsmodul soll auch dann problemlos in den Aufnahmeraum zuführbar sein, wenn das Energieversorgungsmodul auf der Zuführseite in Höhen- oder/und Querrichtung nicht optimal in Bezug auf die Modulaufnahmestruktur bzw. deren Aufnahmeraum angeordnet ist, beispielsweise mittels einer Hilfseinrichtung. Allgemein sollen Fehlorientierungen des Energieversorgungsmoduls gegenüber einer sich aus der Referenzrichtung ergebenden optimalen Orientierung in einem praktisch relevanten Ausmaß beim Einführen in den Aufnahmeraum beherrschbar sein.

Zur Lösung dieser Aufgabe wird für das elektrisch betriebene Fahrzeug nach dem ersten Aspekt der Erfindung vorgeschlagen, dass die Modulaufnahmestruktur und das Energieversorgungsmodul derart in Bezug aufeinander ausgeführt sind, dass das Energieversorgungsmodul beim Zuführen in den Aufnahmeraum anfänglich, nach Einführung eines in einer Einführrichtung vorderen Endes des Energieversorgungsmoduls in den Aufnahmeraum oder einen zu diesem führenden Zuführkanal der Modulaufnahmestruktur, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls in den Aufnahmeraum zunehmend reduzieren, bis spätestens beim Erreichen der Betriebsstellung das relative translatorische Bewegungsspiel und das relative rotatorische Bewegungsspiel verschwinden oder auf ein minimales relatives Rest-Bewegungsspiel reduziert sind. Bevorzugt ist vorgesehen, dass sich das relative translatorische Bewegungsspiel und das relative rotatorische Bewegungsspiel beim weiteren Zuführen des Energieversorgungsmoduls in den Aufnahmeraum bis zum Beginn der gegenseitigen Kontaktierung einer modulseitigen und einer aufnahmeraumseitigen Kontaktierungseinrichtung reduzieren, und dass danach im Wesentlichen nur noch eine translatorische Bewegung in der Einführrichtung ohne überlagerte translatorische Querbewegungskomponente und rotatorische Bewegungskomponente bis zum Erreichen der Betriebsstellung erfolgt. Entscheidend ist also, dass das Energieversorgungsmodul zu dem Zeitpunkt, in dem sich die fahrzeugseitigen und die energieversorgungsmodulseitigen Teile der Kontaktierungseinrichtungen berührend, ausreichend ausgerichtet ist. Die Betriebsstellung wird dann vorzugsweise durch eine rein translatorische Bewegung erreicht. Es soll aber nicht ausgeschlossen sein, dass auch der Zustand der gegenseitigen Kontaktierung durch eine rein translatorische Bewegung ohne rotatorische Bewegungskomponente oder transversale Komponente erreicht wird. Das relative translatorische Bewegungsspiel und das relative rotatorische Bewegungsspiel reduzieren sich also zunehmend vorzugsweise so, dass spätestens im Zustand der gegenseitigen Kontaktierung das Bewegungsspiel verschwunden oder auch ein minimales relatives Bewegungsspiel reduziert sind.

In entsprechender Weise wird für die Ladestation nach dem zweiten Aspekt der Erfindung vorgeschlagen, dass die Modulaufnahmestruktur und das Energieversorgungsmodu! derart in Bezug aufeinander ausgeführt sind, dass das Energieversorgungsmodul beim Zuführen in den Aufnahmeraum anfänglich, nach Einführung eines in einer Einführrichtung vorderen Endes des Energieversorgungsmoduls in den Aufnahmeraum oder einen zu diesem führenden Zuführkanal der Modulaufnahmestruktur, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls in den Aufnahmeraum zunehmend reduzieren, bis spätestens beim Erreichen der Betriebsstellung das relative translatorische Bewegungsspiel und das relative rotatorische Bewegungsspiel verschwinden oder auf ein minimales relatives Rest-Bewegungsspiel reduziert sind. Bevorzugt ist vorgesehen, dass sich das relative translatorische Bewegungsspiel und das relative rotatorische Bewegungsspiel beim weiteren Zuführen des Energieversorgungsmoduls in den Aufnahmeraum bis zum Beginn der gegenseitigen Kontaktierung einer modulseitigen und einer aufnahmeraumseitigen Kontaktierungseinrichtung reduzieren, und dass danach im Wesentlichen nur noch eine Bewegung in der Einführrichtung ohne überlagerte translatorische Querbewegungskomponente und rotatorische Bewegungskomponente bis zum Erreichen der Betriebsstellung erfolgt. Entscheidend ist also, dass das Energieversorgungsmodul zu dem Zeitpunkt, in dem sich die fahrzeugseitigen und die energieversorgungsmodulseitigen Teile der Kontaktierungseinrichtungen berührend, ausreichend ausgerichtet ist. Die Betriebsstellung wird dann vorzugsweise durch eine rein translatorische Bewegung erreicht. Es soll aber nicht ausgeschlossen sein, dass auch der Zustand der gegenseitigen Kontaktierung durch eine rein translatorische Bewegung ohne rotatorische Bewegungskomponente oder transversale Komponente erreicht wird. Das relative translatorische Bewegungsspiel und das relative rotatorische Bewegungsspiel reduzieren sich also zunehmend vorzugsweise so, dass spätestens im Zustand der gegenseitigen Kontaktierung das Bewegungsspiel verschwunden oder auch ein minimales relatives Bewegungsspiel reduziert sind.

Nach dem Erfindungsvorschlag sind die Modulaufnahmestruktur und das Energieversorgungsmodul derart in Bezug aufeinander ausgeführt, dass eine im Prinzip beliebige Fehlorientierung des Energieversorgungsmoduls gegenüber einer idealen Stellung außerhalb der Modulaufnahmestruktur auf der Zuführseite (in welcher das Energieversorgungsmodul rein translatorisch gegenüber der Betriebsstellung in der Referenzrichtung verlagert ist, ohne Änderung der Orientierung und ohne Bewegung der Modulaufnahmestruktur in Seiten- oder Höhenrichtung), einer problemlosen Zuführung des Energieversorgungsmoduls in den Aufnahmeraum nicht entgegensteht, so lange die Abweichung von dieser Idealstellung nicht so groß ist, dass das vordere Ende des Energieversorgungsmoduls nicht mehr in den Aufnahmeraum oder den zu diesem führenden Zuführkanal einführbar ist. Man wird deswegen bei der Ausführung der Modufaufnahmestruktur und des Energieversorgungsmoduls in Bezug aufeinander in Betrieb auftretende Längs- und Querneigungen des Fahrzeugs berücksichtigen, so dass diese ohne weiteres beherrschbar sind und der Zuführung des Energieversorgungsmoduls in den Aufnahmeraum nicht entgegenstehen. Auch eine ohne großen Aufwand einfach erreichbare Positionierungsgenauigkeit in Höhen- und Seitenrichtung kann in diesem Zusammenhang berücksichtigt werden bzw. wird quasi automatisch durch die Berücksichtigung der im Betrieb auftretenden Quer- und Längsneigungen mitberücksichtigt, so dass auch translatorische Abweichungen des in den Aufnahmeraurn zuzuführenden Energiespeichermoduls von der angesprochenen idealen Stellung keine Probleme machen.

Dadurch, dass das relative translatorische Bewegungsspiel und das relative rotatorische Bewegungsspiel sich beim weiteren Zuführen des Energieversorgungsmoduls in den Aufnahmeraum zunehmend reduzieren, wird erreicht, dass das Energieversorgungsmodul trotzdem seine vordefinierte Betriebsstellung erreicht. Dabei kann die Zufuhrbewegung des Energieversorgungsmoduls in den Aufnahmeraum hinein translatorische oder/und rotatorische Korrekturbewegungen des Energieversorgungsmoduls auslösen, indem etwa das Energieversorgungsmodul an einem Flächenabschnitt oder Flächenabschnitten oder dezidierten Führungsmitteln der Aufnahmestruktur anstößt, an denen die Einführbewegung hinein in den Aufnahmeraum in die angesprochenen Korrekturbewegungen umgesetzt wird. Ferner kann es Korrekturbewegungen in rotatorischer und transversaler Richtung geben, die von außen etwa mittels einer das Energieversorgungsmodul haltenden Hilfseinrichtung herbeigeführt werden, die der Zuführbewegung in den Aufnahmeraum hinein überlagert sind und nach Maßgabe des sich reduzierenden relativen translatorischen Bewegungsspiels und relativen rotatorischen Bewegungsspiels erfolgen.

Alternativ zum vorstehend diskutierten Erfindungsvorschlag für das Fahrzeug und die Ladestation nach dem ersten und zweiten Aspekt, vorzugsweise aber den vorstehend diskutierten Erfindungsvorschlag weiterbildend wird für das Fahrzeug nach dem ersten Aspekt und die Ladestation nach dem zweiten Aspekt vorgeschlagen, dass die Außenflächen und die Innenflächen oder/und die ersten und zweiten Führungsmittel derart in Bezug aufeinander ausgeführt sind, dass das Energieversorgungsmodul beim Zuführen in den Aufnahmeraum anfänglich, nach Einführung eines in der/einer Einführrichtung vorderen Endes des Energieversorgungsmoduls in den Aufnahmeraum, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls in den Aufnahmeraum zunehmend reduzieren, bis spätestens beim Erreichen der Betriebsstellung (vorzugsweise spätestens im Zustand der gegenseitigen Kontaktierung) das relative translatorische Bewegungsspiel und das relative rotatorische Bewegungsspiel verschwinden oder auf ein minimales relatives Rest-Bewegungsspiel reduziert sind.

Wie schon angesprochen, wird vor allem daran gedacht, dass das anfängliche translatorische Bewegungsspiel oder/und das anfängliche relative rotatorische Bewegungsspiel an eine im Betrieb des Fahrzeugs zu erwartende maximale Querneigung des Fahrzeugs oder/und an eine im Betrieb des Fahrzeug zu erwartende maximale Längsneigung des Fahrzeugs angepasst ist, um auch bei geneigtem Fahrzeug die Zufuhr des Energieversorgungsmoduls in den Aufnahmeraum und die Entfernung des Energieversorgungsmoduls aus dem Aufnahmeraum zu ermöglichen.

Nach einer bevorzugten Ausgestaltung ist vorgesehen, dass wenigstens ein Paar von zwei in entgegengesetzten Richtungen den Aufnahmeraum entlang dem Einführpfad begrenzenden Innenflächen oder/und wenigstens ein Paar von zwei Außenflächen des Energieversorgungsmoduls, die jeweils einer von zwei in entgegengesetzte Richtungen den Aufnahmeraum entlang dem Einführpfad begrenzenden Innenflächen zugeordnet sind und in der Betriebsstellung dieser gegenüber liegen, zumindest bereichsweise entlang dem Einführpfad aufeinander zu laufen. Diese Ausgestaltung wird auch eigenständig, unabhängig von den vorangehend behandelten Erfindungsvorschlägen, als erfindungsgemäße Lösung für das Fahrzeug nach dem ersten Aspekt und die Ladestation nach dem zweiten Aspekt bereitgestellt.

Weiterbildend wird vorgeschlagen, dass der Verlauf wenigstens einer Innenfläche oder/und der Verlauf wenigstens einer Außenfläche an eine/die im Betrieb des Fahrzeugs zu erwartende maximale Querneigung des Fahrzeugs, wenn dieses auf einem horizontalen Untergrund steht, oder/und an eine/die im Betrieb des Fahrzeug zu erwartende maximale Längsneigung des Fahrzeugs, wenn dieses auf einem horizontalen Untergrund steht, angepasst ist, um auch bei geneigtem Fahrzeug die Zufuhr des Energieversorgungsmoduls in den Aufnahmeraum und die Entfernung des Energieversorgungsmoduls aus dem Aufnahmeraum zu ermöglichen. Beispielsweise kann man vorsehen, dass ein Neigungswinkel wenigstens eines Flächenabschnitts der wenigstens einen Innenfläche oder/und ein Neigungswinkel wenigstens eines Flächenabschnitts der wenigstens einen Außenfläche gegenüber der Referenzrichtung an die im Betrieb des Fahrzeugs zu erwartende maximale Querneigung des Fahrzeugs, wenn dieses auf einem horizontalen Untergrund steht, oder/und an die im Betrieb des Fahrzeug zu erwartende maximale Längsneigung des Fahrzeugs, wenn dieses auf einem horizontalen Untergrund steht, angepasst ist, vorzugsweise mindestens einem zu erwartendem maximalen Neigungswinkel des Fahrzeugs, wenn dieses auf einem horizontalen Untergrund steht, gegenüber der Horizontalen entspricht. Bezeichnet man einen Querneigungswinkel des Fahrzeugs mit α und einen Längsneigungswinkel des Fahrzeugs mit β, so können unmittelbar mit dem Neigungswinkel α korrespondierende Flächenneigungswinkel vorgesehen werden, wohingegen der Neigungswinkel β vor allem über die Öffnungsweite des Aufnahmeraums zu berücksichtigen ist und damit indirekt einen benötigten Flächenneigungswinkel beeinflusst.

In der Regel wird es zweckmäßig sein, wenn wenigstens eine den Aufnahmeraum entlang dem Einführpfad begrenzende Innenfläche zumindest bereichsweise als ein erstes Führungsmittel dient, welches beim Zuführen des Energieversorgungsmoduls in den Aufnahmeraum mit einem zweiten Führungsmittel des Energieversorgungsmoduls in Bezug auf die Positionierung des Energieversorgungsmoduls in der Betriebsstellung zusammenwirkt.

Eine besonders bevorzugte Ausgestaltung zeichnet sich dadurch aus, dass der Aufnahmeraum entlang dem Einführpfad von vier Innenflächen begrenzt ist, die paarweise einander entgegengesetzt sind und zumindest bereichsweise entlang dem Einführpfad aufeinander zu laufen. Die Innenflächen können selbst als Führungsmittel dienen, so dass spezielle Führungsmittel wie Führungsschiene und Führungsrollen nicht erforderlich sind, durchaus aber in Kombination mit den Führungsflächen in Form der Innenflächen vorgesehen sein können.

Im Prinzip können die Innenflächen beliebig gestaltet sein. Bevorzugt ist aber vorgesehen, dass die den Aufnahmeraum entlang dem Einführpfad begrenzenden Innenflächen plane Flächenabschnitte mit unterschiedlichen Orientierungswinkeln relativ zur Referenzrichtung aufweisen. Solch eine Modulaufnahmestruktur lässt sich einfach herstellen und ermöglicht eine gute Raumausnutzung.

Weiterbildend wird vorgeschlagen, dass die zumindest bereichsweise entlang dem Einführpfad aufeinander zu laufenden Innenflächen zumindest im Bereich eines jeweiligen planen Flächenabschnitts entlang dem Einführpfad aufeinander zu laufen, wobei von den entlang dem Einführpfad aufeinander zulaufenden planen Flächenabschnitte zumindest einer gegenüber der Referenzrichtung geneigt ist. Vorzugsweise sind die aufeinander zu laufenden planen Flächenabschnitte beide gegenüber der Referenzrichtung geneigt, und zwar in entgegengesetzte Richtungen.

Der hier verwendete Begriff "aufeinander zu laufend" in Bezug auf Flächen oder Flächenabschnitte meint, dass der Abstand zwischen den Flächen bzw. Flächenabschnitten in Richtung in den Aufnahmeraum hinein abnimmt. Im Falle von planen Flächen oder Flächenabschnitten würden diese sich bei einer gedachten Verlängerung in einer Richtung entsprechend der Richtung in den Aufnahmeraum hinein irgendwo in einer Geraden schneiden.

Eine zweckmäßige, besonders bevorzugte Ausgestaltung zeichnet sich dadurch aus, dass von den zumindest bereichsweise entlang dem Einführpfad aufeinander zu laufenden Innenflächen zumindest eine Innenfläche einen planen äußeren Innenflächenabschnitt, einen planen mittleren Innenflächenabschnitt mit gegenüber dem äußeren Innenflächenabschnitt unterschiedlichem Orientierungswinkel relativ zur Referenzrichtung und einen planen inneren Innenflächenabschnitt mit gegenüber dem mittleren Innenflächenabschnitt unterschiedlichem Orientierungswinkel relativ zur Referenzrichtung aufweist, wobei die Innenflächen zumindest im Bereich des mittleren Innenflächenabschnitts entlang dem Einführpfad aufeinander zu laufen. Dabei können die inneren Innenflächenabschnitte und die äußeren Innenflächenabschnitte von zwei in entgegengesetzte Richtungen den Aufnahmeraum entlang der Einführrichtung begrenzenden Innenflächen zueinander parallel orientiert sein.

Betreffend das Energieversorgungsmodul wird vorgeschlagen, dass dieses im Wesentlichen plane Außenflächen aufweist und beispielsweise im Wesentlichen quaderförmig ist, beispielsweise mit einem quadratischen oder rechteckigen Querschnitt.

Allgemein wird vorgeschlagen, dass das Energieversorgungsmodul in einem in Einführrichtung vorderen Abschnitt Außenflächenabschnitte aufweist, die im wesentlichen komplementär zu gegenüberliegenden Innenflächenabschnitten ausgeführt sind, insbesondere in der Betriebsstellung an diesen anliegen oder eng von diesen beabstandet sind oder/und parallel zu diesen sind.

Um das Energieversorgungsmodul leichter in den Aufnahmeraum zuführen zu können bzw. aus diesem wieder entfernen zu können, kann das Energieversorgungsmodul, vorzugsweise zumindest an einem in Einführrichtung vorderen Abschnitt des Energieversorgungsmoduls, mit wenigstens einer Rollelementanordnung ausgeführt sein, welche dafür geeignet ist, beim Zuführen des Energieversorgungsmoduls in den Aufnahmeraum zumindest über einen Teil des Zuführungswegs an einer zugeordneten Innenfläche des Aufnahmeraums abzurollen. Alternativ oder zusätzlich kann auch die Modulaufnahmestruktur, vorzugsweise zumindest in einem äußeren Bereich des Aufnahmeraums oder eines/des zu diesem führenden Zuführkanals der Modulaufnahmestruktur, mit wenigstens einer Rollelementanordnung ausgeführt sein, welche dafür geeignet ist, beim Zuführen des Energieversorgungsmodul in den Aufnahmeraum zumindest über einen Teil des Zuführungswegs an einer zugeordneten Führungsfläche des Energieversorgungsmoduls abzurollen.

Weiterbildend wird vorgeschlagen, dass die wenigstens eine Rollelementanordnung des Energieversorgungsmoduls oder/und die wenigstens eine Rollelementanordnung der Modulaufnahmestruktur für ein Abrollen in mehrere Rollrichtungen, vorzugsweise zumindest in zwei zueinander orthogonale Rollrichtungen, ausgeführt ist. Es können beispielsweise so genannte "Omnirollen" oder "Kugelrollen" zum Einsatz kommen.

Eine besonders bevorzugte Ausgestaltung des Energieversorgungsmoduls zeichnet sich dadurch aus, dass dieses an einem in Einführrichtung hinteren Abschnitt wenigstens eine Führungsstruktur aufweist, die von einer einer Innenfläche des Aufnahmeraums zugeordneten, in der Betriebsstellung des Energieversorgungsmoduls dieser gegenüberliegenden Außenfläche des Energieversorgungsmoduls vorsteht und dafür geeignet ist, in einer Endphase der Zufuhr des Energieversorgungsmoduls in den Aufnahmeraum mit wenigstens einem zugeordneten Führungsmittel der Modulaufnahmestruktur zusammenzuwirken, um das Energieversorgungsmoduls relativ zur Modulaufnahmestruktur auszurichten und zu positionieren zum Erreichen und ggf. Halten der Betriebsstellung. Es kann sich beispielsweise um sich in einer im Wesentlichen der Einführrichtung entsprechenden Längsrichtung des Energieversorgungsmoduls erstreckende, von der Außenfläche vorstehende Rippen handeln, die an einem Vorlaufende kontinuierlich zu der Außenfläche abfallen, beispielsweise in Form einer Schrägfläche. In einem mittleren und hinteren Bereich können die Rippen mit einer gegenüber der Außenfläche versetzten Anschlag- und Führungsfläche ausgeführt sein, die in der Betriebsstellung an einem gegenüberliegenden Innenflächenabschnitt des Aufnahmeraums anliegen oder eng von diesem beabstandet sind oder/und parallel zu diesem sind.

Gemäß einer ersten grundsätzlichen Ausführungsweise der erfindungsgemäßen Vorrichtung ist vorgesehen, dass - im Falle des Fahrzeugs bezogen auf das ohne Längs- oder Querneigung auf einem horizontalen Untergrund stehende Fahrzeug - die Referenzrichtung eine horizontale Richtung ist, oder/und dass - im Falle des Fahrzeugs bezogen auf das ohne Längs- oder Querneigung auf einem horizontalen Untergrund stehende Fahrzeug - das Energieversorgungsmodul in horizontaler Richtung von außerhalb der Vorrichtung in den Aufnahmeraum zuführbar ist.

Gemäß einer zweiten grundsätzlichen Ausführungsweise der erfindungsgemäßen Vorrichtung ist es vorgesehen, dass - im Falle des Fahrzeugs bezogen auf das ohne Längs- oder Querneigung auf einem horizontalen Untergrund stehende Fahrzeug - die Referenzrichtung eine vertikale Richtung ist, oder/und dass - im Falle des Fahrzeugs bezogen auf das ohne Längs- oder Querneigung auf einem horizontalen Untergrund stehende Fahrzeug - das Energieversorgungsmodul in vertikaler Richtung von außerhalb der Vorrichtung, insbesondere von unterhalb der Vorrichtung, in den Aufnahmeraum zuführbar ist.

Nach einem dritten Aspekt stellt die Erfindung ein Modulwechselgerät gemäß Anspruch 15 bereit, mit dem ein Energieversorgungsmodul in den Aufnahmeraum der Vorrichtung gemäß der ersten grundsätzlichen Ausführungsweise zuführbar und aus diesem entfernbar ist, umfassend einen auf einem dem Modulwechselgerät und der Vorrichtung gemeinsamen Untergrund bewegbaren Hauptrahmen, an dem ein Tragrahmen in einer Höhenrichtung verstellbar und in einer momentanen Höhe fixierbar geführt ist, welcher wenigstens einen Koppelabschnitt aufweist, wobei der Tragrahmen mit seinem wenigstens einen Koppelabschnitt mit wenigstens einem Gegen-Koppelabschnitt des Energieversorgungsmoduls in vorzugsweise formschlüssigen Koppeleingriff bringbar ist, um das Energieversorgungsmodul mit seinem vorderen Ende von dem Tragrahmen vorkragend an dem Tragrahmen zu halten, so dass das Energieversorgungsmodul durch Bewegen des Modulwechselgeräts auf dem Untergrund und ggf. Verstellen des das Energieversorgungsmodul haltenden Tragrahmens an dem Hauptrahmen in den Aufnahmeraum zuführbar und in der Betriebsstellung positionierbar ist, wobei nach der Positionierung des Energieversorgungsmoduls in der Betriebsstellung der Koppeleingriff lösbar und das Modulwechselgerät von der Vorrichtung wegbewegbar ist, und wobei der Koppeleingriff zwischen dem Tragrahmen und dem in der Betriebsstellung befindlichen Energieversorgungsmodul später wieder herstellbar ist, um durch Bewegen des Modulwechselgeräts auf dem Untergrund und ggf. Verstellen des das Energieversorgungsmodul haltenden Tragrahmens an dem Hauptrahmen das Energieversorgungsmodul aus dem Aufnahmeraum zu entfernen.

Die Handhabung des Energieversorgungsmoduls einschließlich Zuführen des Energieversorgungsmoduls in den Aufnahmeraum des Fahrzeugs, Entfernen des Energieversorgungsmoduls aus dem Aufnahmeraum des Fahrzeugs, Überführen des Energieversorgungsmoduls zur zugehörigen Ladestation, Zuführen des Energieversorgungsmoduls in den Aufnahmeraum der Ladestation, Entfernen des Energieversorgungsmoduls aus dem Aufnahmeraum der Ladestation und Überführung des Energieversorgungsmoduls zurück zum Fahrzeug wird so wesentlich erleichtert.

Das Zuführen in den betreffenden Aufnahmeraum und wieder Entfernen aus dem Aufnahmeraum ist besonders leicht möglich, da der Koppeleingriff zwischen dem Tragrahmen und dem Energieversorgungsmodul oder eine wenigstens einen rotatorischen Bewegungsfreiheitsgrad gebende Einrichtung des Modulwechselgeräts erfindungsgemäß ein Verschwenken des am Tragrahmen vorkragend gehaltenen Energieversorgungsmoduls um wenigstens eine sich im Wesentlichen quer zum vorkragenden Energieversorgungsmodul erstreckende Schwenkachse gegen wirkende Gewichtskräfte zulässt, oder/und ein Verdrehen des am Tragrahmen vorkragend gehaltenen Energieversorgungsmoduls um eine in der Einführrichtung oder im Wesentlichen längs des vorkragenden Energieversorgungsmoduls erstreckende Drehachse zulässt. Hierdurch können insbesondere Längs- und Querneigungen des Fahrzeugs ausgeglichen werden. Alternativ oder zusätzlich ist erfindungsgemäß vorgesehen, dass wenigstens eine obere und wenigstens eine untere Modulabstützung des Modulwechselgeräts derart gegeneinander verstellbar sind, dass das am Tragrahmen vorkragend gehaltene Energieversorgungsmodul um eine sich im Wesentlichen quer zum vorkragenden Energieversorgungsmodul erstreckende Schwenkachse gegen wirkende Gewichtskräfte oder/und mit wirkenden Gewichtskräften verschwenkbar ist. Es lassen sich so vorteilhaft sowohl eine Neigung des Fahrzeugs hin zum Modulwechselgerät als auch eine Neigung des Fahrzeugs weg vom Modulwechselgerät gut beherrchen.

Nach einem vierten Aspekt stellt die Erfindung ferner ein Modulwechselgerät gemäß Anspruch 16 bereit, mit dem ein Energieversorgungsmodul in den Aufnahmeraum der Vorrichtung gemäß der zweiten grundsätzlichen Ausführungsweise zuführbar und aus diesem entfernbar ist, umfassend eine zumindest beschränkt relativ zu einem Untergrund der Vorrichtung in horizontaler Richtung verstellbare Basis und eine mittels einer Hubeinrichtung in einer Höhenrichtung relativ zur Basis verstellbare Trageinheit, auf der das Energieversorgungsmodul mit einem hinteren (bzw. unteren) Ende absetzbar ist, wobei durch Verstellen der Trageinheit nach oben das Energieversorgungsmodul in den Aufnahmeraum der darüber angeordneten Vorrichtung, insbesondere des darüber angeordneten Fahrzeugs, zuführbar und in der Betriebsstellung positionierbar ist bzw. durch Verstellen der Trageinheit nach oben gegen das hintere (bzw. untere) Ende das zuvor in der Betriebsstellung befindliche Energieversorgungsmodul abstützbar und dann durch Verstellung der Trageinheit nach unten zur Entfernung aus dem Aufnahmeraum absenkbar ist.

Die Handhabung des Energieversorgungsmoduls einschließlich Zuführen des Energieversorgungsmoduls in den Aufnahmeraum des Fahrzeugs, Entfernen des Energieversorgungsmoduls aus dem Aufnahmeraum des Fahrzeugs, Überführen des Energieversorgungsmoduls zur zugehörigen Ladestation, Zuführen des Energieversorgungsmoduls in den Aufnahmeraum der Ladestation, Entfernen des Energieversorgungsmoduls aus dem Aufnahmeraum der Ladestation und Überführen des Energieversorgungsmoduls zurück zum Fahrzeug wird wesentlich erleichtert.

Das Zuführen in den Aufnahmeraum und Entfernen hieraus ist besonders erleichtert, da die Trageinheit erfindungsgemäß aus einer vorzugsweise eine horizontale Tragfläche für das Energieversorgungsmodul bereitstellenden Normal-Stellung relativ zur Hubeinrichtung in beliebige Richtungen gegen in Richtung zur Normal-Stellung wirkende Rückstellkräfte einer Rückstellfederanordnung schwenkbar ist. Hierdurch können insbesondere Längs- und Querneigungen des Fahrzeugs ausgeglichen werden.

Alternativ oder zusätzlich ist erfindungsgemäß vorgesehen, dass eine wenigstens einen rotatorischen oder/und translatorischen Freiheitsgrad gebende Einrichtung des Modulwechselgeräts ein Verdrehen des von der Trageinheit getragenen Energieversorgungsmodul um eine Hochachse oder/und eine Querverschiebung des von der Trageinheit getragenen Energieversorgungsmoduls in wenigstens eine Querrichtung senkrecht zur Hochachse zulässt. Es ist dann keine exakte vorgegebene rotatorische und translatorische Positionierung des Fahrzeugs oberhalb des Modulwechselgeräts relativ zum Modulwechselgerät erforderlich.

Die Erfindung stellt auch eine Kombination aus wenigstens einem erfindungsgemäßen Fahrzeug und wenigstens einem, vorzugsweise mehreren erfindungsgemäßen Energieversorgungsmodulen zur Aufnahme in den Aufnahmeraum des Fahrzeugs, um das Fahrzeug elektrisch zu betreiben, bereit. Vorzugsweise umfasst die Kombination wenigstens eine erfindungsgemäße Ladestation, zum Laden des wenigstens einen Energieversorgungsmoduls. Ferner kann die Kombination zweckmäßig ein erfindungsgemäßes Modulwechselgerät umfassen, mit dem ein Energieversorgungsmodul in den Aufnahmeraum des Fahrzeugs bzw. der Ladestation zuführbar und aus diesem entfernbar ist.

Nach einem fünften Aspekt stellt die Erfindung ferner ein Verfahren zum Betreiben eines elektrisch betriebenen Fahrzeugs gemäß der Erfindung bereit, bei dem ein geladenes Energieversorgungsmodul in den Aufnahmeraum des Fahrzeugs zugeführt wird, vorzugsweise mit Hilfe eines erfindungsgemäßen Modulwechselgeräts, das Fahrzeug dann unter Entladen des Energieversorgungsmoduls betrieben wird, und dann das zumindest teilweise entladene Energieversorgungsmodul aus dem Aufnahmeraum des Fahrzeugs wieder entfernt wird, vorzugsweise mit Hilfe eines erfindungsgemäßen Modulwechselgeräts.

Gemäß einer bevorzugten Ausgestaltung umfasst das Verfahren ferner das Laden des zumindest teilweise entladenen Energieversorgungsmoduls, vorzugsweise mittels einer erfindungsgemäßen Ladestation, indem das zumindest teilweise entladene Energieversorgungsmodul in den Aufnahmeraum der Ladestation zugeführt wird, vorzugsweise mit Hilfe eines erfindungsgemäßen Modulwechselgeräts, um nach erfolgtem Laden das geladene Energieversorgungsmodul aus dem Aufnahmeraum der Ladestation wieder entfernt wird, vorzugsweise mit Hilfe eines erfindungsgemäßen Modulwechselgeräts, um das Energieversorgungsmodul dann wieder in den Aufnahmeraum des Fahrzeugs zuzuführen für den Betrieb des Fahrzeugs. Zweckmäßig können wenigstens zwei Energieversorgungsmodule verwendet werden, so dass das Fahrzeug mit wenigstens einem Energieversorgungsmodul betrieben wird, während wenigstens ein anderes Energieversorgungsmodul geladen wird.

Anzumerken ist, dass die Verwendung einer speziellen Ladestation mit einem das zu ladende Energieversorgungsmodul aufnehmendem Aufnahmeraum nicht zwingend ist. Man könnte beispielsweise daran denken, das zu ladende Energieversorgungsmodul auf einem verwendeten Modulwechselgerät zu belassen und mittels Ladekabeln an einem herkömmlichen Ladegerät anzuschließen.

Die Erfindung und deren verschiedene Aspekte werden im Folgenden anhand zweier in den Figuren veranschaulichen Ausführungsbeispielen näher erläutert.
- Fig. 1: zeigt ein nicht beschränkendes Ausführungsbeispiel für ein erfindungsgemäßes Fahrzeug mit Elektroantrieb in einer Seitenansicht.
- Fig. 2: zeigt einen Teilschnitt nach Linie A-B in Fig. 1 durch einen horizontalen Aufnahmeraum des Fahrzeugs.
- Fig. 3: zeigt eine Seitenansicht eines dem Fahrzeug zugeordneten, in den Aufnahmeraum des Fahrzeugs einführbaren Energieversorgungsmoduls gemäß einem Ausführungsbeispiel, vorzugsweise enthaltend eine ladbare Batterieanordnung, etwa eine Lithium-Ionen-Batterieanordnung.
- Fig. 4: zeigt eine Hilfseinrichtung in Form eines Modulwechselwagens gemäß einem Ausführungsbeispiel in einer seitlichen Ansicht, mit dem das Energieversorgungsmodul in den Aufnahmeraum einführbar und aus dem Aufnahmeraum entfernbar ist.
- Fig. 5: zeigt den Modulwechselwagen in einer Draufsicht.
- Fig. 6: zeigt in einer seitlichen Ansicht entsprechend den Fig. 3 und 4 den Modulwechselwagen mit dem von diesen aufgenommenen, vorkragend gehaltenen Energieversorgungsmodul.
- Fig.7: zeigt den Aufnahmeraum des in Querrichtung geneigten Fahrzeugs zusammen mit dem das Energieversorgungsmodul haltenden Modulwechselwagen.
- Fig. 8 bis Fig. 13: zeigen eine Sequenz von Zwischenzuständen in einer Darstellung entsprechend Fig. 7 beim Zuführen des Energieversorgungsmoduls in den Aufnahmeraum und beim Positionieren des Energieversorgungsmoduls in einer Betriebsstellung in dem Aufnahmeraum mit Hilfe des Modulwechselwagens.
- Fig. 14: stellt eine Ansicht auf ein beim Einführen des Energieversorgungsmoduls in den Aufnahmeraum nachlaufendes Ende des Energieversorgungsmoduls dar.
- Fig. 15: zeigt in einer Ansicht entsprechend Fig. 14 das teilweise in den Aufnahmeraum eingeführte Energieversorgungsmodul bei in einer Längsrichtung des Fahrzeugs geneigtem Fahrzeug.
- Fig. 16: stellt das Energieversorgungsmodul entsprechend Fig. 15 in einer etwas weiter in den Aufnahmeraum eingeschobenen Stellung dar.
- Fig.17: zeigt in einer Ansicht entsprechend Fig. 15 und 16 das Energieversorgungsmodul in einer weiter in den Aufnahmeraum eingeschobenen Stellung, in der das Modul die Betriebsstellung schon erreicht hat oder sich in einer Endphase des Zuführvorgangs kurz vor Erreichen der Betriebsstellung befindet.
- Fig. 18: zeigt schematisch einen vertikalen Aufnahmeraum eines weiteren Ausführungsbeispiels eines erfindungsgemäßen Fahrzeugs, der bei dem Fahrzeug der Fig. 1 anstelle des horizontalen Aufnahmeraums vorgesehen sein könnte.
- Fig. 19: zeigt ein Ausführungsbeispiel für ein dem Aufnahmeraum der Fig. 18 zugeordnetes, in diesen zuführbares und dort in einer Betriebsstellung positionierbares Energieversorgungsmodul für die Versorgung des Fahrzeugs mit elektrischer Energie.
- Fig. 20: zeigt ein den Beispielen der Fig. 18 und 19 zugeordnetes Modulwechselgerät, mit dem das Energieverlaufsmodul von unten in vertikaler Richtung in den Aufnahmeraum zuführbar ist.
- Fig. 21: zeigt den Aufnahmeraum mit dem in diesem zugeführten, seine Betriebsstellung einnehmenden Energieversorgungsmodul.
- Fig. 22: veranschaulicht, wie das Energieversorgungsmodul in dem vertikalen Aufnahmeraum mittels einer Verriegelungseinrichtung gehalten sein könnte, und stellt überdies das Modulwechselgerät in einem unbeladenen Zustand mit seiner in einer unteren Endposition angeordneten Trageinheit dar.
- Fig. 23: zeigt eine alternative Ausgestaltung des Energieversorgungsmoduls mit Rollelementanordnungen beispielsweise in Form von so genannten "Omnirollen" im Bereich eines vorderen Endes des Energieversorgungsmoduls.
- Fig. 24: zeigt den Aufnahmeraum mit dem seine Betriebsstellung einehmenden Energieversorgungsmodul der Fig. 23.
- Fig. 25: zeigt in einer rechten Teilfigur ein Beispiel für eine derartige Rollenanordnung, die von zwei versetzt zueinander angeordneten Teil-Rollenanordnungen gemäß der linken Teilfigur gebildet ist.
- Fig. 26: zeigt eine Abwandlung des horizontalen Aufnahmeraums mit darin seine Betriebsposition einnehmendem Energieversorgungsmodul, nach der eine Einführöffnung des Aufnahmeraums begrenzende Kanten gerundet ausgeführt sind.
- Fig. 27: ist ein Beispiel für eine zum erfindungsgemäßen System gehörige Ladestation, die eine entsprechend dem Aufnahmeraum des zugeordneten Fahrzeugs entsprechenden Aufnahmeraum aufweist, vorliegend einen horizontalen Aufnahmeraum, so dass das in den Aufnahmeraum des Fahrzeugs einführbare Energieversorgungsmodul auch in den Aufnahmeraum der Ladestation einführbar ist, um das Energieversorgungsmodul zu laden.
- Fig. 28 bis Fig. 30: zeigen eine Sequenz von Zwischenzuständen beim Entfernen des Energieversorgungsmoduls aus dem Aufnahmeraum mit Hilfe einer Ausführungsvariante des Modulwechselwagens für den Fall eines vom Modulwechselwagen weg geneigten Fahrzeugs.
In vielen Bereichen kommen zunehmend elektrisch angetriebene Fahrzeuge zum Einsatz. Als Energiequelle zum Antrieb solcher Fahrzeuge dient überwiegend eine wiederaufladbare Batterie, also ein so genannter Akkumulator. In einer üblichen Betriebsweise wird die im Fahrzeug befindliche Batterie geladen und speist dann während des Fahrzeugeinsatzes die elektrischen Verbraucher. Wenn die Batterie bis zu einem definierten Ladezustand entladen ist, wird die Batterie mit einem Ladegerät verbunden und durch dieses geladen. Nach vollendeter Ladung steht die Batterie für einen weiteren Einsatz zur Verfügung. Es ist auch üblich, die Batterie schon vor Erreichen des ein erneutes Laden erforderlich machenden Ladezustands zu laden, z. B. in einer Arbeitspause, um die Einsatzdauer zu verlängern (so genannte Zwischenladung). Ist ein Mehrschicht-Betrieb vorgesehen, so ist in der Regel nach jeder Schicht ein Austausch der entladenden Batterie durch eine geladene Batterie notwendig. In der Regel muss der Batteriewechsel herkömmlich aufgrund des hohen Eigengewichts der Batterie mit Hilfe von Hilfsmitteln wie Krane und andere Hebezeuge erfolgen.

In der Vergangenheit bei marktgängigen, elektrisch betriebenen Flurförderzeugen eingesetzte Blei-Säure-Batterien waren sehr schwer, wobei die Baugröße und das Gewicht des Batteriebehälters durch die eingesetzte Batterietechnologie und den gewünschten Energiegehalt der Batterie bestimmt waren, wobei der gewünschte Energiegehalt der Batterie wiederum durch die zu gewährleistende Einsatzdauer des Flurförderzeugs bestimmt wurde. Je nach Tragfähigkeit derartiger Flurförderzeuge haben sich in der Einsatzpraxis bestimmte Batteriegrößen (bzw. Energieinhalte) herausgebildet, die eine ausreichende Einsatzdauer über eine Schicht sicherstellen.

Der Aufwand für das Laden einer solchen Batterie im Flurförderzeug und für die Batteriewartung ist aufgrund der notwendigen Arbeitsschritte wie "Batteriehaube öffnen", "Steckerverbindung herstellen" usw. für das Laden und "Elektrolytstand überprüfen", "Nachfüllen von destilliertem Wasser" usw. für die Batteriewartung relativ groß und erfordert entsprechende Sachkenntnis. Ein im Mehrschichteinsatz erforderlicher Batteriewechsel setzte in der Vergangenheit auch entsprechende Räumlichkeiten und, bedingt durch die in der Vergangenheit vorgesehene Batterie-Entnahme nach oben, auch Hebezeuge wie die angesprochenen Krane, voraus.

Demgegenüber ergab sich eine wesentliche Vereinfachung durch das Vorsehen eines Batteriewechsels in seitlicher Richtung, wie etwa in DE 199 56 623 A1 und DE 100 03 271 A1 vorgeschlagen. Anstelle von Hebezeugen wie Krane konnte der Batteriewechsel nur mit Hilfe eines auf der Lastgabel eines Flurförderzeugs aufgenommenen Transportgeräts erfolgen. In diesem Zusammenhang kann als technischer Hintergrund auch auf die DE 102 46 221 A1 und die DE 10 2007 031 149 A1 verwiesen werden.

Aufgrund der schon angesprochenen bzw. offensichtlichen Nachteilen von Bleibatterien (insbesondere Platzbedarf und Kosten für den Batteriewechsel, die Batterieladung und die Batteriewartung, Anforderungen an eine hinreichende Lüftung aufgrund von insbesondere gegen Ende des Ladevorgangs entstehenden Gasen, erhebliche Verluste bei der Ladung und Entladung der Batterie mit entsprechend niedrigem Wirkungsgrad und entsprechenden Nachteilen in Form von Erwärmung und Energiekosten) kommen auch im Flurförderzeugbereich zunehmend Energieträger auf Basis der Lithium-Ionen-Technologie zum Einsatz, die sich durch eine hohe Energiedichte (kleines Volumen pro gespeicherte Energiemenge), kleine Energiewichte (kleines Gewicht pro gespeicherte Energiemenge), vergleichsweise geringe Verluste bei Ladung und Entladung der Batterie (Energieeffizienz), weitgehende Wartungsfreiheit, eine vorteilhafte Hochstromfähigkeit (vergleichsweise hohe Lade- und Entladeströme in Relation zur gespeicherten Energie und dementsprechend eine kurze Ladedauer), eine vergleichsweise hohe Spannungskonstanz während der Einsatzzeit und eine gasungsfreie Batterie-Ladung auszeichnen.

Bei Flurförderzeugen für geringere Tragfähigkeiten bzw. geringeren Energiebedarf ermöglichten die neue Technologie den Einsatz einzelner Lithium-Ionen-Zellen, die teilweise auch verteilt im Fahrzeug untergebracht wurden, oder in Form von manuell auswechselbaren Batteriemodulen realisiert wurden (vgl. DE 10 2010 035 553 A1 und DE 10 2007 034 743 A1).

Obwohl der Einsatz der Lithium-Ionen-Akkumulatortechnologie oder anderer moderner Akkumulatortechnologien gegenüber herkömmlichen Blei-Säure-Akkumulatoren deutlich leichtere Batterien bzw. Batterienmodule bezogen auf eine zu speichernde Energiemenge ermöglicht, wird bei elektrischen Fahrzeugen, insbesondere Flurförderzeugen, mit größeren Tragfähigkeiten oder/und größeren Energiebedarf eine einzelne Batterie bzw. ein einzelnes Batteriemodul immer noch so groß und schwer sein, dass die Batterie bzw. das Batteriemodul von einer Person ohne Hilfseinrichtung schwerlich gehandhabt werden kann, jedenfalls dann, wenn man eine praktisch sinnvolle Energiemenge in einer solchen Batterie bzw. einem solchen Batteriemodul speichern möchte. Es besteht insoweit ein Bedarf an technischen Lösungen, die den Batteriemodulwechsel ermöglichen bzw. erleichtern und dabei den zu erwartenden Modulgewichten angepasst sind. Ein Batteriewechsel soll für eine Bedienperson möglichst einfach möglich sein und schnell erfolgen können, um einen möglichst kontinuierlichen Fahrzeugbetrieb zu ermöglichen und benötigte Personalarbeitszeit einzusparen.

Gemäß DE 199 56 623 A1 wurde schon versucht, das Wechseln eines Batteriemoduls zu erleichtern. Es besteht aber das grundsätzliche Problem, dass ein mit einem solchen Energieversorgungsmodul zu betreibendes Fahrzeug und ggf. auch eine Ladestation nicht unbedingt in der optimalen Ausrichtung (X-, Y-, Z-Richtung) angeordnet ist, so dass dementsprechend auch der Aufnahmeraum für das Batteriemodul nicht richtig ausgerichtet ist. Insbesondere bei einem Fahrzeug besteht das Problem, dass Quer- und Längsneigungen auftreten können, die ein problemloses Einsetzen und wieder Herausnehmen des Batteriemoduls erschweren oder gar unmöglich machen können. Solche Fehlpositionierung bzw. Fehlorientierungen des Aufnahmeraums können beispielsweise infolge von Bodenunebenheiten, unterschiedlich abgefahrenen Reifen, unterschiedlicher Einfederung infolge ungleichmäßiger Beladung des Fahrzeugs, auftreten. Die Folge kann sein, dass das Batteriemodul überhaupt nicht in den Aufnahmeraum einführbar ist oder dass zumindest die Herstellung der nötigen elektrischen Kontaktierung zwischen modulseitigen Kontakten und fahrzeugseitigen Kontakten beispielsweise mit Hilfe eines Steckersystems nicht gewährleistet ist, für die die richtige Ausrichtung und Zentrierung der beiden Kontaktpartner "Fahrzeug" und "Batteriemodul" essentiell ist, ebenso - bei der Verwendung einer Hilfseinrichtung - wie auch die richtige Ausrichtung und Zentrierung der Hilfseinrichtung in Bezug auf das Fahrzeug bzw. das Batteriemodul.

Die vorstehend in Bezug auf Batteriemodule mit ladbaren Akkumulatorzellen angesprochenen Probleme können in entsprechender Weise in Bezug auf allgemeine Energieversorgungsmodule auftreten, wie sie in DE 100 03 271 A1 beschrieben sind. Neben einem Energieversorgungsmodul mit ladbarer Batterie kann auch ein Stromerzeugermodul mit einem verbrennungsmotorischen Generator zum Einsatz kommen. Der Begriff "Energieversorgungsmodul" soll alle technischen Möglichkeiten der Bereitstellung von elektrischer Energie für den Betrieb eines elektrischen Fahrzeugs erfassen.

Im Folgenden werden nun konkrete Ausführungsbeispiele für erfindungsgemäße Lösungen beschrieben.

Die in den Figuren dargestellten Energieversorgungsmodule werden ohne Beschränkung der Allgemeinheit auch kurz als Batterie oder Batteriemodul angesprochen, wie dies der für die Praxis relevantesten Ausführung eines jeweiligen Energieversorgungsmoduls als ladbarer elektrochemischer Energiespeicher entspricht.

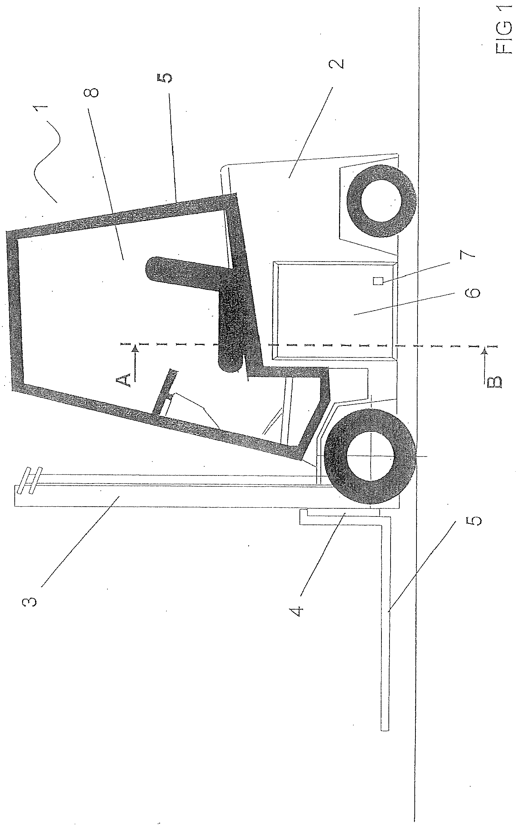

Fig. 1 zeigt ein elektrisch betriebenes Fahrzeug, das beispielhaft als Flurförderzeug in Form eines Gegengewichtstaplers dargestellt ist, in einer Seitenansicht. Das Fahrzeug 1 umfasst einen Grundkörper 2 mit Vorder- und Hinterachse, ein daran neigbar gelagertes Hubgerüst 3, an dem ein Lastschlitten 4 höhenverschieblich geführt ist, und ein mit 5 bezeichnetes Fahrerplatzmodul, welches auf den Grundfahrzeug 2 gelagert ist und einen Bedienplatz für den Fahrer enthält. An den Lastschritten 4 sind typischerweise mehrere, beispielsweise zwei, Gabelzinken 5 eingehängt. Mit 6 ist ein Aufnahmeraum zur Aufnahme eines nicht dargestellten Batteriemoduls vorgesehen, welcher ohne einen Verschlusskörper oder eine Verschlusstür dargestellt ist und der eine Kontaktierungseinrichtung 7 zum automatischen Kontaktieren des in eine Betriebsstellung eingeschobenen Batteriemoduls enthält. Es bestehen im Prinzip viele Möglichkeiten, wie der Aufnahmeraum 6 geometrisch gestaltet und im Fahrzeug angeordnet sein könnte. Für ein horizontales Wechseln des Batteriemodul ist der Aufnahmeraum zur Fahrzeugseite hin (wie in Fig. 1 dargestellt) oder nach hinten (in Fig. 1 nach rechts) hin offen. Je nach Art und Ausgestaltung des Fahrzeugs kommt auch eine Öffnung des Aufnahmeraums nach vorne hin (in Fig. 1 links) in Betracht.

Im Falle der dargestellten Öffnung des Aufnahmeraums zur Seite hin kann sich der Aufnahmeraum über die gesamte Fahrzeugbreite erstrecken. Alternativ ist es auch denkbar, die Tiefe des Aufnahmeraums auf weniger als die halbe Fahrzeugbreite zu reduzieren und dafür einen zweiten Aufnahmeraum auf der entgegengesetzten Fahrzeugseite vorzusehen.

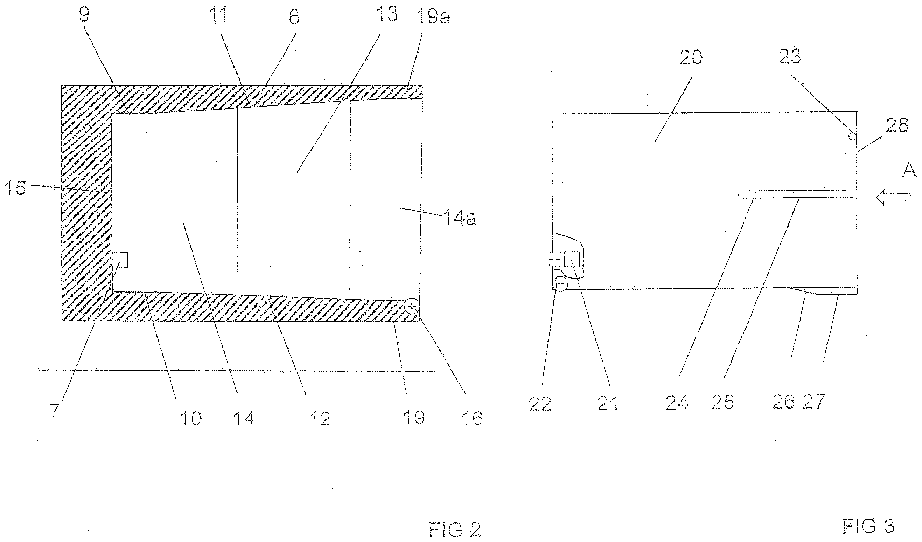

Fig. 2 zeigt den Teilschnitt A-B aus Fig. 1 durch den Aufnahmeraum 6 des Fahrzeugs 1. Durch Anordnung von gegenüber der horizontalen bzw. vertikalen geneigten Flächen vergrößert sich, von links nach rechts betrachtet, der Öffnungsquerschnitt des Raumes 6. Eine Unterseite des Aufnahmeraums wird durch einen mittleren geneigten Innenflächenabschnitt 12 und die horizontale Innenflächenabschnitte 10 und 19 gebildet. Eine Oberseite des Aufnahmeraums wird von einem mittleren geneigten Innenflächenabschnitt 11 und horizontalen Innenflächenabschnitten 9 und 19a gebildet. Eine vertikale Innenfläche 15 bildet einen hinteren, inneren Abschluss und trägt den fahrzeugseitigen Teil 7 der automatischen Kontaktierungseinrichtung. Seitenwände des Raumes sind von einem gegenüber einer vertikalen Fahrzeugquerebene geneigten mittleren Innenflächenabschnitt 13 und zur Fahrzeugquerebene parallelen Innenffächenabschnitten 14 und 14a gebildet.

Bei der vorstehenden Beschreibung des Aufnahmeraums wurde von einer idealen horizontalen Anordnung des Fahrzeugs auf einem horizontalen Untergrund ohne Längs- oder Querneigung ausgegangen.

Die angesprochenen Innenflächenabschnitte können vorteilhaft als Führungs-, Positionierungs- und Zentrierungsmittel für das in den Aufnahmeraum einzuführende Batteriemodul dienen. Ein am weitesten innen liegender Abschnitt des Aufnahmeraums 6 ist von zueinander rechtwinkligen bzw. zueinander parallelen Innenflächenabschnitten 9, 10 und 14 begrenzt, die das Energieversorgungsmodul aufnehmen und es aber dabei so führen und zentrieren, dass das fahrzeugseitige Teil und das batteriemodulseitige Teil der automatischen Kontaktierungseinrichtung hinreichend genau in Bezug aufeinander positioniert sind, um in der Endlage des Energieversorgungsmoduls, also in der angesprochenen Betriebsstellung im Aufnahmeraum, eine sichere Kontaktierung zu gewährleisten.

Die Neigewinkel der mittleren Flächenabschnitte 11 und 12 an der Unterseite und Oberseite des Aufnahmeraums sind gegenüber der Horizontalen so gewählt, dass die Neigewinkel zumindest gleich der maximal zu erwartende Querneigungswinkel des Fahrzeugs, vorzugsweise größer als dieser Querneigungswinkel sind. Dies ermöglicht, dass das Energieversorgungsmodul bzw. Batteriemodul trotz Fahrzeugneigung problemlos in den Aufnahmeraum eingeführt und aus diesem auch wieder entfernt werden kann. Die Neigungswinkel der mittleren Innenflächenabschnitte 13 gegenüber der vertikalen Fahrzeugquerebene sind so gewählt, dass sich ein für die Praxis ausreichender "Zuführtrichter" zur Zentrierung des Energieversorgungsmoduls in Fahrzeuglängsrichtung ergibt.

Die angesprochenen Winkel sind ferner so gewählt, dass der Querschnitt des Aufnahmeraumes an der Fahrzeugaußenseite so groß ist, dass ein sich z. B. auf einer Hilfseinrichtung befindliches Energieversorgungsmodul um einen definierten Winkel, vorzugsweise zumindest entsprechend einer maximal zu erwartenden Längsneigung des Fahrzeugs, gegenüber dem Aufnahmeraum um eine Längsachse des Moduls verdreht sein kann, ohne dass das Einführen des Moduls in den Aufnahmeraum behindert wird. Hierzu sollten die Neigungswinkel mindestens gleich groß (vorzugsweise etwas größer) als der maximale Neigungswinkel des Fahrzeugs sein. Die dem geneigten Fahrzeug entsprechende Neigung des Aufnahmeraums in Fahrzeuglängsrichtung macht dann beim Einführen des diese Neigung noch nicht mitmachenden Moduls keine Probleme.

Der Aufnahmeraum bzw. eine den Aufnahmeraum definierende, die Innenflächen des Aufnahmeraums aufweisende Modulaufnahmestruktur des Fahrzeugs kann mit speziellen Führungs- und Relativbewegungsmitteln ausgeführt sein, beispielsweise mit einer Rollelementanordnung. Gemäß Fig. 2 ist eine zur Fahrzeugaußenseite zeigende Kante des unteren Innenflächenabschnitts 19 durchgehend oder abschnittsweise mit einer Rolle 16 ausgeführt, auf der das Energieversorgungsmodul mit einer unteren Außenfläche abrollen kann.

Fig. 3 zeigt eine Seitenansicht des Energieversorgungsmoduls 20, welches beispielsweise eine Lithium-Ionen-Batterieanordnung enthält. In einem in Einführrichtung vorderen Endbereich (links in Fig. 3) ist der modulseitige Teil 21 der automatischen Kontaktierungseinrichtung in einem geschnitten dargestellten Abschnitt zu erkennen. An einer oberen, äußeren Kante des Energieversorgungsmoduls 20 sind Handhabungsstrukturen zum "Handhaben" des Energieversorgungsmoduls vorgesehen. Gemäß der Darstellung können beispielsweise beidseitig nach außen weisende Rundzapfen 23 vorgesehen sein. Eine untere innere Kante des Energieversorgungsmoduls kann zweckmäßig durchgehend oder abschnittsweise als Rolle 22 ausgeführt sein, mit der das Energieversorgungsmodul auf der unteren Innenfläche des Aufnahmeraums abrollen kann.

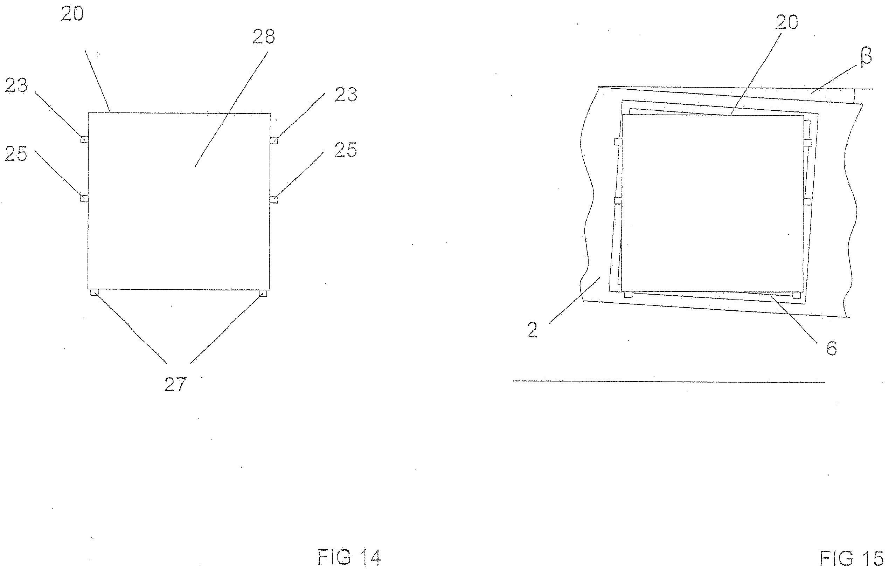

In einem in Einführrichtung hinteren, beim Einführen nachlaufenden Endbereich des Energieversorgungsmoduls sind seitlich und an der Unterseite von der Modulaußenfläche vorstehende Führungsstrukturen ausgebildet, die einen in Einführrichtung vorderen, gegenüber der Modulaußenfläche geneigten Führungsflächenabschnitt 24 bzw. 26 und einen zur Außenfläche parallelen Führungsflächenabschnitt 25 bzw. 27 aufweisen. Die seitlichen Führungsstrukturen mit den Flächenabschnitten 24, 25 erstrecken sich weiter in der Längsrichtung des Moduls 20 nach vorne als die untere Führungsstruktur (oder mehrere untere Führungsstrukturen, vgl. Fig. 14) mit den Flächenabschnitten 26 und 27.

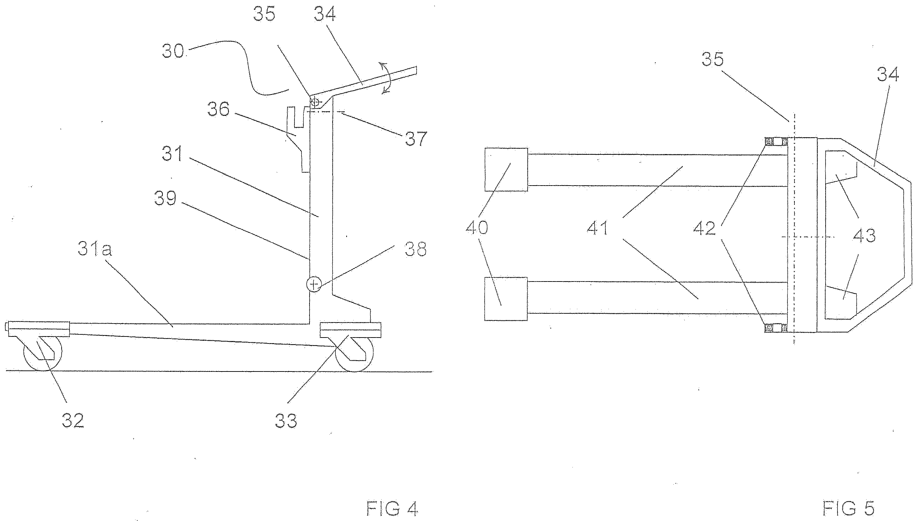

Fig. 4 zeigt ein dem Energieversorgungsmodul der Fig. 3 zugeordnetes Modulwechselgerät in Form eines Modulwechselwagens 30, der dazu dient, die Person, die das Energieversorgungsmodul aus dem Aufnahmeraum des Fahrzeugs zu entfernen und in den Aufnahmeraum der entsprechenden Ladestation einzuführen bzw. aus dem Aufnahmeraum der Ladestation zu entfernen und in den Aufnahmeraum des Fahrzeugs einzuführen hat, zu unterstützen. Der Wagen umfasst beispielsweise einen Rahmen 39 mit einem im Wesentlichen vertikalen Rahmenabschnitt 31 und einen dazu rechtwinklig angeordneten horizontalen Rahmenabschnitt 31a. Am vertikalen Rahmenabschnitt 31 ist gemäß dem Ausführungsbeispiel eine hakenförmige Einrichtung 36 höhenverschieblich geführt. Gegenüber dieser Führung ist die Einrichtung 36 um eine mit der hakenförmigen Einrichtung 36 höhenverschiebliche Achse 37 begrenzt schwenkbar gelagert, so dass das in der Einrichtung 36 "eingehakte" Energieversorgungsmodul vermittels der Einrichtung 36 um die sich in einer Einführrichtung erstreckende Drehachse drehbar ist.

Der Eingriff zwischen der hakenförmigen Einrichtung 36 und den Rundzapfen 23 am Modul ist derart, dass das in der Einrichtung 36 "eingehakte" Energieversorgungsmodul um eine zum Modul quer verlaufende, horizontale Achse schwenkbar ist, die durch die Rundzapfen 23 definiert ist.

Bei der Aufnahme des im Aufnahmeraum des Fahrzeugs angeordneten Energieversorgungsmoduls bzw. des in einem Aufnahmeraum einer zugeordneten Ladestation aufgenommenen Energieversorgungsmoduls durch den Batteriewechselwagen wirkt die hakenförmige Einrichtung 36 oder eine alternative Haltevorrichtung mit der Handhabungseinrichtung des Energieversorgungsmoduls 20 zusammen. Im Falle der Ausführung gemäß Fig. 3 treten die Rundzapfen 23 mit den Hakenelementen der hakenförmigen Einrichtung 36 in Eingriff, indem der Modulwechselwagen mit der hakenförmigen Eingrichtung 36 unter die Rundzapfen geschoben wird und die Einrichtung 36 dann am vertikalen Rahmenabschnitt in Richtung nach oben verstellt wird.

Zum Bewegen und Lenken des Modulwechselwagens kann dieser einen beispielsweise bügelförmigen Griff 34 aufweisen, der, insbesondere nach Lösen einer Sperre, um eine Horizontalachse 35 gegenüber dem vertikalen Rahmenabschnitt 31 verschwenkbar gelagert sein kann.

Die Schwenkbewegung des Griffs kann beispielsweise dazu dienen, eine hydraulische Kolbenpumpe zu betätigen, die in Verbindung mit einer Ventileinrichtung und einem hydraulischen Zylinder steht, um die hakenförmige Einrichtung 36 am vertikalen Rahmenabschnitt 31 nach oben zu verstellen bzw. nach unten abzusenken. Eis können auch anders geartete Hubeinrichtungen mittels eines solchen bügelförmigen Griffs betätigt werden.

Die Funktion und der Zweck des bügelförmigen Griffs kann auch der Funktion und dem Zweck des bügelförmigen Griffs eines üblichen Gepäcktransportwagens entsprechen, wie üblicherweise auf Bahnhöfen und in Flughäfen eingesetzt. In diesem Fall kann im Falle einer hydraulischen Hubeinrichtung wenigstens ein gesondertes Betätigungselement zur Betätigung bzw. Bedienung der hydraulischne Hubeinrichtung dienen. Dient der bügelförmige Griff selbst zur Betätigung der hydraulischen Hubeinrichtung, so können Bedienelemente zur Betätigung der Ventileinrichtung und eine Sperre für die Bügelbewegung am bügelförmigen Griff selbst vorgesehen sein.

An dem unteren, horizontalen Rahmenabschnitt 31a sind jeweils in einem hinteren und vorderen Endbereich Schwenkrollenpaare 32 und 33 angeordnet, die eine leichte Verschieblichkeit des Batteriewechselwagens auf einem Untergrund in allen horizontalen Richtungen erlauben. Man kann vorsehen, dass das in Einführrichtung des Energieversorgungsmoduls in den Aufnahmeraum vordere Rollenpaar 32 mittels einer Bedieneinrichtung beispielsweise am Bügel 34 in einer "Geradeaus-Richtung" fixierbar ist, um das Verfahren des Wagens außerhalb des Fahrzeugs und der Ladestation zu erleichtern. Es können die vorderen Rollen oder/und die hinteren Rollen auch bremsbar sein, beispielsweise mittels einer Bedieneinrichtung am Bügel 34 oder an den Rollen des betreffenden Rollenpaares selbst, um insbesondere den beladenen Modulwechselwagen sicher abstellen zu können und beim Verfahren schnell und sicher abbremsen zu können.

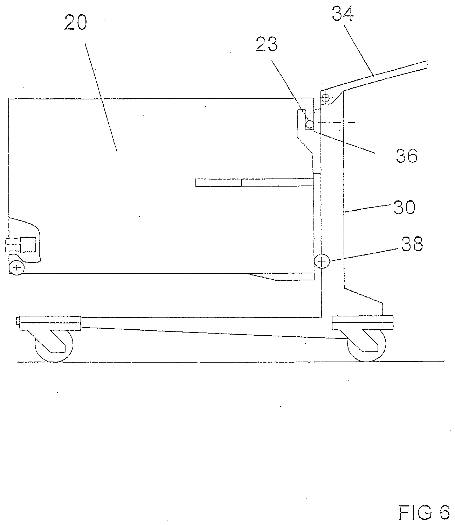

Der vertikale Rahmenabschnitt 31 kann, beispielsweise zumindest in einem unteren Bereich, mit wenigstens einer durchgehend oder abschnittsweise ausgeführten Rolle 38 ausgeführt sein, an welcher das aufgenommene Energieversorgungsmodul beim Transport zwischen dem Fahrzeug und der Ladestation an seinem in Einschubrichtung hinteren Endbereich abstützbar ist, wenn es ist nicht von der unteren Innenfläche 10, 12, 19 im Aufnahmeraum des Fahrzeugs bzw. der Ladestation abgestützt wird. Das Energieversorgungsmodul kann so mit seinem vorderen Endbereich frei vorkragend am vertikalen Rahmenabschnitt 31 gehalten sein, ohne Abstützung unten am horizontalen Rahmenabschnitt 31 a, wie in Fig. 6 gezeigt. Die wenigstens eine Rolle 38 ermöglicht dabei auch eine Höhenverstellung des Energieversorgungsmoduls am vertikalen Rahmenabschnitt 31 durch entsprechende Verstellung der hakenförmigen Einrichtung 36, ohne dass einer solchen Verstellung erhebliche, reibungsbedingte Gegenkräfte aufgrund eines Reibschlusses zwischen dem hinteren Ende des Moduls und der vorderen Oberfläche des vertikalen Rahmenabschnitts entgegenstehen.

Wie in der Draufsicht der Fig. 5 zu erkennen, kann der untere, horizontale Rahmenabschnitt 31a in Form von zwei Tragarmen 41 ausgeführt sein, die an einem vorderen, in Fig. 5 linken Ende eine jeweilige Aufnahme sowie am hinteren, in Fig. 5 rechten Ende eine jeweilige Aufnahme für die angesprochene Fahrrollen aufweisen. Angedeutet ist auch die Schwenkachse 35 des Bügels 34, und die Haken 42 der hakenförmigen Einrichtung sind in der Draufsicht dargestellt.

Fig. 6 zeigt eine Seitenansicht des Modulwechselwagens 30 mit einem aufgenommenen Energieversorgungsmodul 20 in einer Transportstellung. Das Eigengewicht des Energieversorgungsmoduls wird einerseits durch vertikale und horizontale Kräfte, die zwischen den Haken 42 der hakenförmigen Einrichtung 36 und den modulseitigen Rundzapfen 23 wirken, und andererseits durch horizontale Kräfte zwischen der hinteren Außenseite des Moduls 20 und der Rollenanordnung 38 am vertikalen Rahmenabschnitt getragen. Die Position des Energieversorgungsmoduls in Höhenrichtung kann mit Hilfe der angesprochenen Hubeinrichtung durch Entsperrung und Schwenken des Bügels zur Betätigung der Hubeinrichtung zum Anheben nach oben und durch Betätigung der Ventileinrichtung zum Absenken nach unten eingestellt und variiert werden.

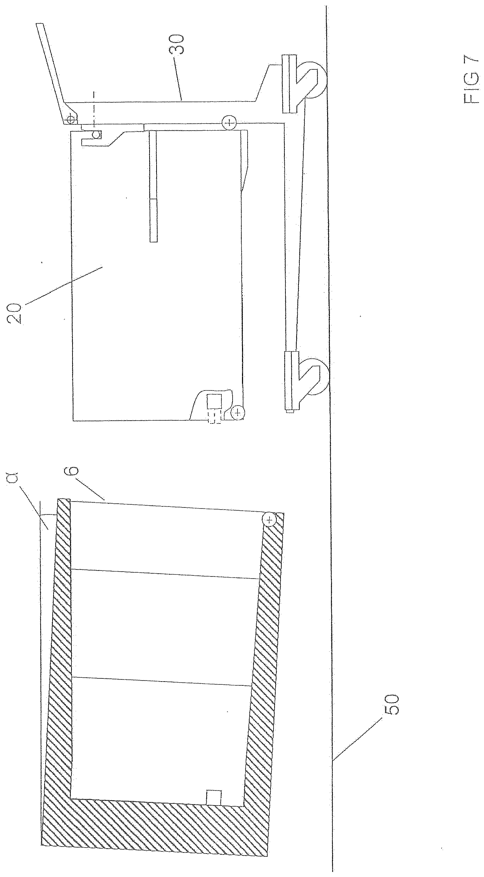

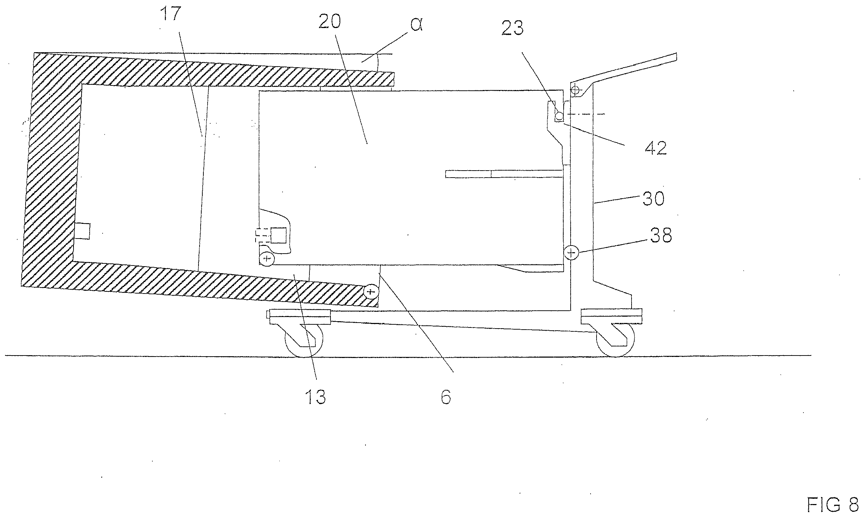

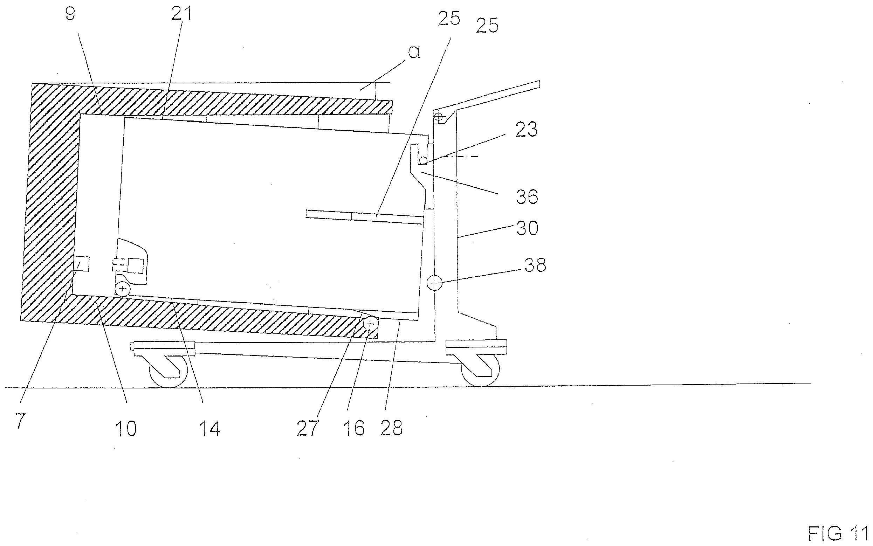

Anhand der Fig. 7 bis 13 wird im Folgenden das Einführen eines Energieversorgungsmoduls in den Aufnahmeraum eines in Querrichtung geneigten Fahrzeugs und die richtige Positionierung des Energieversorgungsmoduls in seiner Betriebsstellung in dem Aufnahmeraum mit Hilfe des Modulwechselwagens erläutert. Fig. 7 zeigt den Aufnahmeraum 6 des um einen Neigungswinkel α in Querrichtung gegenüber dem horizontalen Boden 50 geneigten Fahrzeugs, und den Modulwechselwagen 30 mit dem Energieversorgungsmodul 20 in Transportstellung kurz vor dem Einführen bzw. Zuführen des Energieversorgungsmoduls in den Aufnahmeraum. Gemäß Fig. 8 ist das nach wie vor nur vermittels der Haken 42, der Rundzapfen 23 und der Rolle 38 gehaltene Energieversorungsmodul mit einem vorderen Endabschnitt ein Stück weit in den Aufnahmeraum 6 des geneigten Fahrzeugs 1 eingeführt. Durch Zusammenwirken der vorderen Ecken und Kanten des Energieversorgungsmoduls 20 mit den zur Fahrzeugquerebene geneigten seitlichen Innenflächenabschnitten 13 der seitlichen Begrenzung des Aufnahmeraums 6 erfolgt eine automatische Zwangszentrierung des vorderen Endabschnitts des mittels der Rollen 32 und 33 frei beweglichen Modulwechselwagens und damit des Energieversorgungsmoduls selbst in Fahrzeuglängsrichtung relativ zum Aufnahmeraum.

Anstelle der Rolle 38 oder mehrerer Rollen 38 können vorteilhaft eine oder mehrere Kugelrollen eingesetzt werden, um eine leichtgängige Verdrehung des vorkragend behaltenen Energieversorgungsmoduls zu ermöglichen. Wie beschrieben, erfolgt nämlich in der ersten Phase des Einschiebens eine Zentrierung in Fahrzeuglängsrichtung an den Flächen 13. Ist das Energieversorgungsmodul, in Folge einer Längsneigung des Fahrzeugs, um seine Längsachse gegenüber dem Aufnahmeraum verdreht, so muss sich das Modul beim Zentrieren an den Flächen 13 um die Achse 37 drehen, was durch wenigstens eine Kugelrolle anstelle der Rolle 38 erleichtert wird.

Gemäß Fig. 8 ist das Fahrzeug um den Winkel α zur Hilfseinrichtung 30 hin geneigt. Nimmt man demgegenüber an, dass das Fahrzeug um einen entsprechenden Winkel von der Hilfseinrichtung 30 weg geneigt ist, so könnte es beim Einführen des Energieversorgungsmoduls 20 in den Aufnahmeraum passieren, dass das Modul aufgrund der Abstützung an der Rolle 38 bzw. der alternativ vorgeschlagenen wenigstens einen Kugelrolle sich nicht in seiner Orientierung gegenüber der Horizontalen an die Querneigung des Aufnahmeraums anpassen kann. In entsprechender Weise könnte beim Entnehmen des Energieversorgungsmoduls die Rolle 38 bzw. die wenigstens eine Kugelrolle schon am äußeren Ende des Energieversorgungsmoduls anschlagen, ohne dass die Haken 42 mit den Rundzapfen 23 in Eingriff kommen können.

Um diesem Problem zu begegnen, ist der Modulwelchselwagen 30 vorzugsweise - in Abweichung von den Darstellungen in der Zeichnung - so ausgeführt, dass die hakenförmige Einrichtung 36 einerseits und die Rolle 38 bzw. die wenigstens eine Kugelrolle andererseits in Längsrichtung des Modulwechselwagens 30 entsprechend der Richtung des Einführens bzw. Entnehmens des Moduls gegeneinander verstellbar sind, so dass die Haken 42 und die Rolle 38 bzw. die wenigstens eine Kugelrolle von den in den Figuren dargestellten relativen Stellung, in der sie in Vertikalrichtung fluchten, in eine relative Stellung verstellbar sind, bei der die Haken 42 gegenüber der mit der Rolle 38 bzw. der Kugelrolle fluchtenden Stellung so vorkragen, dass beim Entnehmen des Energieversorgungsmoduls zuerst die Haken 42 mit den Rundzapfen 23 eingreifen können, bevor das Energieversorgungsmodul an der wenigstens einen Rolle 38 bzw. der alternativen wenigstens einen Kugelrolle anschlägt. Das Energieversorgungsmodul würde dann nach Entnahme aus dem Aufnahmeraum entsprechend "durchhängen", was dann durch entsprechende relative Verstellung der Rolle 38 bzw. Kugelrolle einerseits und der Haken 42 andererseits wieder ausgeglichen werden könnte, spätestens beim Einschieben in den Aufnahmeraum einer zugehörigen Ladestation (siehe die Ausführungen unten). In entsprechender Weise könnte man anschließend das Energieversorgungsmodul in den Aufnahmeraum des Fahrzeugs, welches von dem Modulwechselwagen 30 weg geneigt ist, einführen, unter entsprechender relativer Verstellung der Rolle 38 bzw. der wenigstens einen Kugelrolle einerseits und der Haken 42 andererseits gegenüber ihrer in den Figuren gezeigten fluchtenden Stellung in Vertikalrichtung, um die Neigung des Moduls an die Neigung des Aufnahmeraums aufgrund des geneigten Fahrzeugs anzupassen.

Es sind diverse Detailkonstruktionen denkbar, wie der Modulwechselwagen für diese Verstellbarkeit aufgeführt sein könnte. Beispielsweise könnte die wenigstens eine Rolle 38 bzw. die wenigstens eine alternative Kugelrolle von einem vertikal hochkragenden Abschnitt des unteren Rahmenabschnitts 31a gehalten sein, auf dem der demgegenüber gesonderte vertikale Rahmenabschnitt 31 in Längsrichtung des Wagens verschieblich geführt ist. Eine hydraulische oder mechanische Verschiebeeinrichtung könnte dazu dienen, diese Rahmenabschnitte bzw. gesonderten Rahmen und damit die wenigstens eine Rolle 38 bzw. wenigstens eine Kugelrolle einerseits und die hakenförmige Einrichtung 36 andererseits nach Bedarf relativ zueinander zu verstellen.

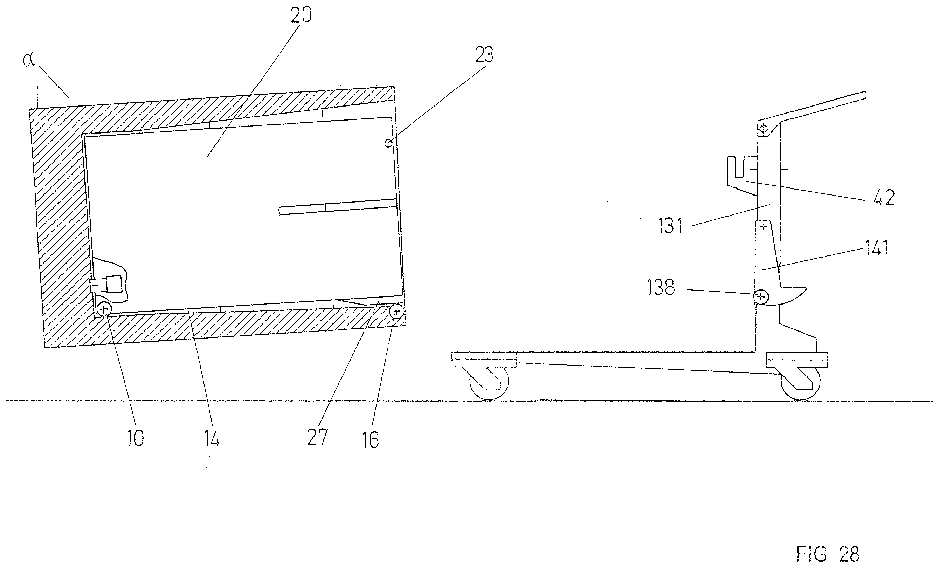

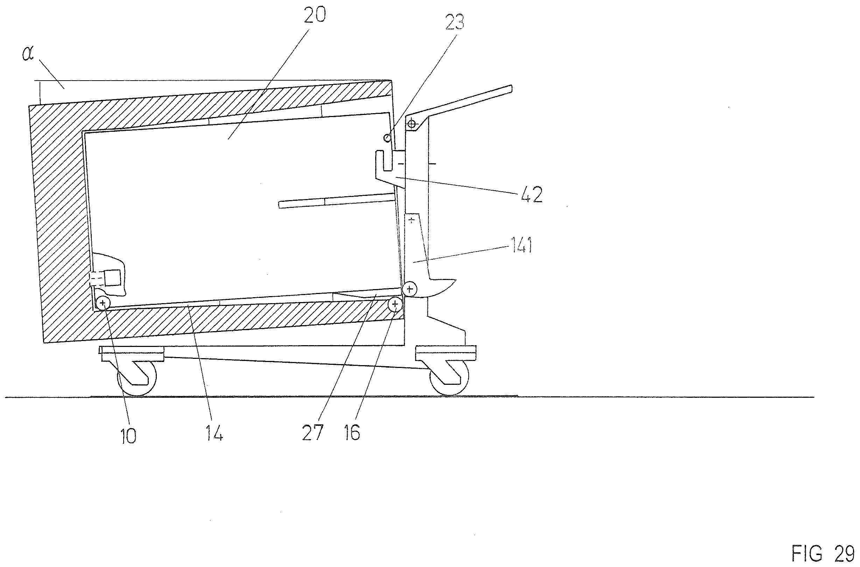

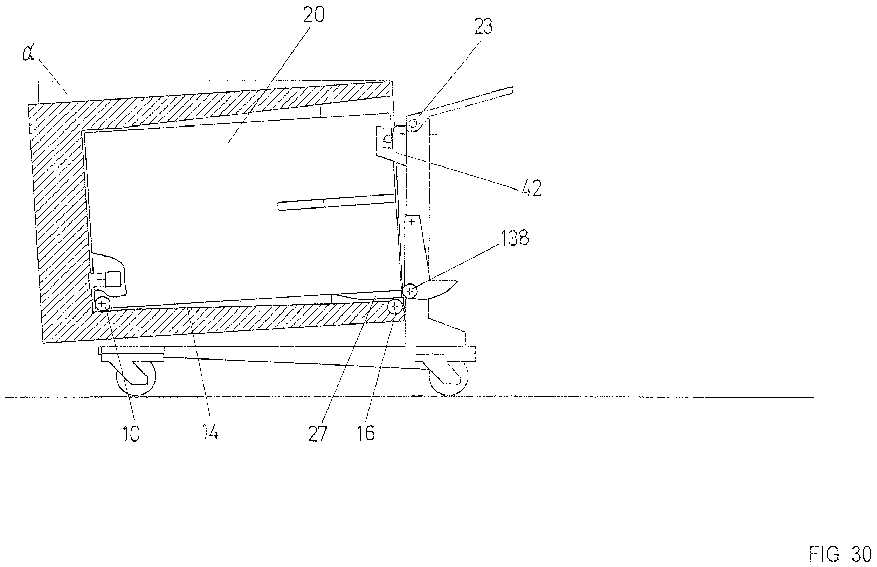

Eine demgegenüber bevorzugte Konstruktion ist in den Fig. 28, 29 und 30 gezeigt. Nach dieser Konstruktion ist die wenigstens eine Rolle 138 mittels eines Schwenkhebels 141 am vertikalen Rahmenabschnitt 131 gehalten, wobei der Schwenkhebel um eine Horizontalachse schwenkbar ist. Anstelle der Rolle 138 kann wenigstens eine Kugelrolle mittels des Schwenkhebels 141 gehalten sein. Bevorzugt sind zwei derartige Schwenkhebel auf einer linken und einer rechten Seite des vertikalen Rahmenabschnitts 131 mit jeweils wenigstens einer Rolle bzw. wenigstens einer Kugelrolle vorgesehen. Durch Verschwenken des Schwenkhebels bzw. der Schwenkhebel sind die Haken 42 und die wenigstens eine Rolle bzw. Kugelrolle auf die angesprochene Art und Weise gegeneinander verstellbar, um die Situation eines vom Modulwechselwagen weg geneigten Fahrzeugs zu beherrschen, wie in den Figuren dargestellt.

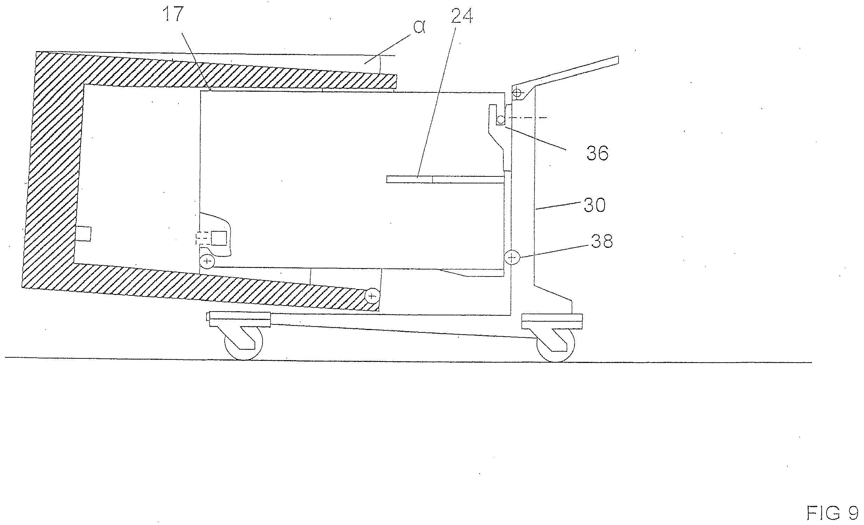

Gemäß Fig. 9 ist der Zentriervorgang des vorderen Endabschnitts des Energieversorgungsmoduls und damit des Modulwechselwagens in Fahrzeuglängsrichtung abgeschlossen, da die vorderen Ecken und Kanten des Energieversorgungsmoduls eine Grenzlinie 17 knapp überschritten haben, an der die geneigten Innenflächenabschnitte 13 an die parallelen Innenflächenabschitte 14 angrenzen. Nun beginnt die Ausrichtung des hinteren Bereichs des Energieversorgungsmoduls 20 und damit des Batteriewechselwagens 30 in Fahrzeuglängsrichtung zum Aufnahmeraum 6, in dem die geneigten Flächenabschnitte 24 an den seitlichen Führungsstrukturen des Energieversorgungsmoduls 20 mit den seitlichen äußeren Kanten des Aufnahmeraums 6 wechselwirken.

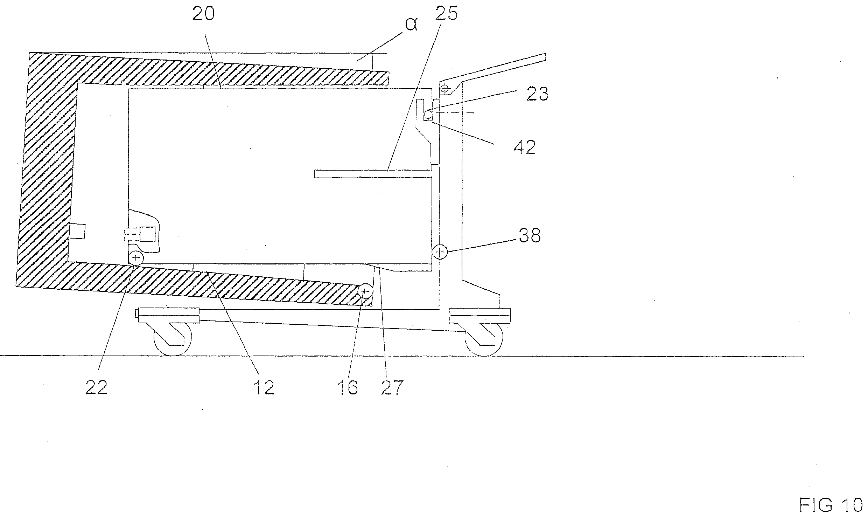

Gemäß Fig. 10 ist auch der hintere Bereich des Energieversorgungsmoduls 20 und damit des dieses haltenden Modulwechselwagens richtig, d. h. exakt und rechtwinklig zum Aufnahmeraum in Bezug auf die Fahrzeuglängsrichtung ausgerichtet, aufgrund der angesprochenen Wechselwirkung der Schrägflächenabschnitte 24 und dann der zu den seitlichen Außenflächen des Energieversorgungsmoduls parallelen Flächenabschnitte 25 der seitlichen Führungsstrukturen mit den äußeren Kanten und den Parallelflächenabschnitten 14a der seitlichen Innenflächen des Aufnahmeraums. Im Zuge dieser Zentrierung und Ausrichtung und anschließend nach erfolgter Zentrierung und Ausrichtung beim weiteren Einschieben des Energieversorgungsmoduls in den Aufnahmeraum, wird die am vorderen unteren Ende des Energieversorgungsmoduls 20 vorgesehene Rollanordnung 22 wirksam, das vordere Ende des Energieversorgungsmoduls auf der unteren Innenfläche des Aufnahmeraums abzustützen, so dass das Energieversorgungsmodul mit dieser Rolle bzw. diesen Rollen auf der unteren Innenfläche abrollen kann.

Es hängt vom Höhenunterschied zwischen dem Modul und dem Aufnahmeraum ab, wann die Rolle bzw. diese Rollen beginnen, das vordere Ende des Energieversorgungsmoduls abzustützen. Dies kann also auch schon während der Zentrierung und Ausrichtung des Moduls beginnen. Beim weiteren Einschieben des Energieversorgungsmoduls wird das Energieversorgungsmodul dann aufgrund der nach innen relativ zur Horizontalen ansteigenden Innenfläche an seinem vorderen Ende angehoben, während der Abstützkontakt zwischen dem hinteren Ende des Energieversorgungsmoduls und der Rollenanordnung 38 des Modulwechselwagens aufgehoben wird, so dass das Energieversorgungsmodul jetzt nur noch von der vorderen Rollenanordnung 22 des Energieversorgungsmoduls und den Haken 42 im Zusammenwirken mit den Rundzapfen 23 gehalten und abgestützt wird. Zur Ermöglichung dieser Schwenkbewegung ist bei der dargestellten Dimensionierung des Aufnahmeraums in Bezug auf das Energieversorgungsmodul eine Absenkung des Energieversorgungsmoduls an seinem hinteren Ende durch entsprechendes Absenken der Haken 42 an dem vertikalen Rahmenabschnitt 31 des Wagens erforderlich.

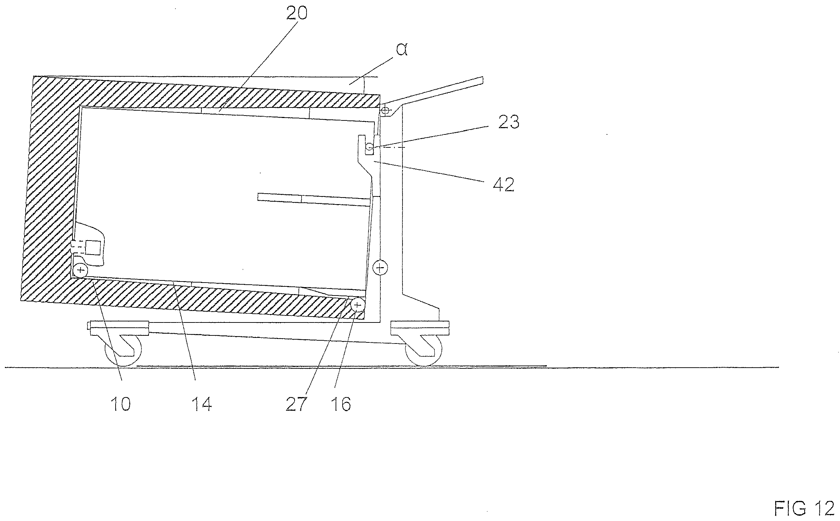

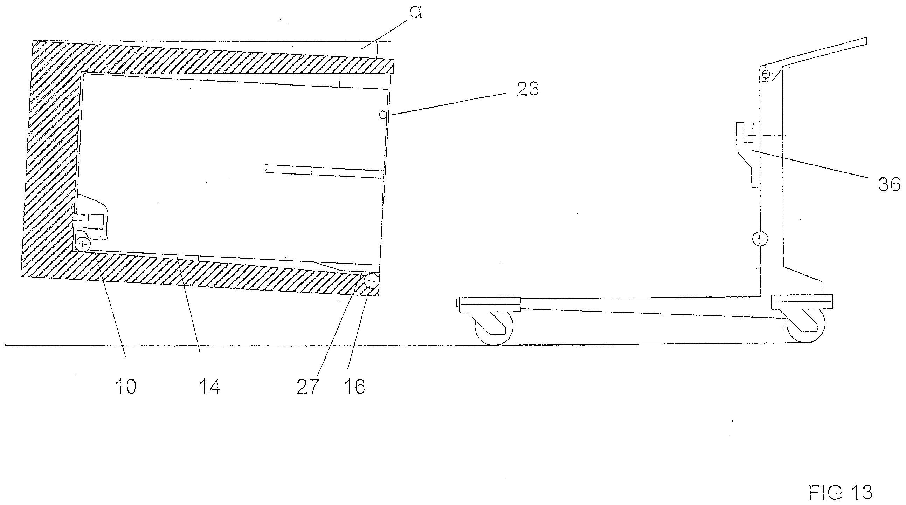

Die hakenförmige Einrichtung 36 mit den Haken 42 wird dabei etwa mittels der am Bügel 34 angeordneten Bedieneinrichtung vorzugsweise maximal so weit abgesenkt, dass der vordere geneigte Führungsflächenabschnitt 27 der Führungsstruktur an der Unterseite des Energieversorgungsmoduls 20 auf die Rolle 16 an der vorderen Kante der unteren Innenfläche des Aufnahmeraums trifft. Das Gewicht des Energieversorgungsmoduls wird nun von den Rollen 22 und 16 abgestützt, so dass zwischen den Rundzapfen 23 an dem Modul und dem Haken 42 nur noch horizontale Kräfte zu übertragen sind, um das Energieversorgungsmodul in seine Endposition im Aufnahmeraum, also in die angesprochene Betriebsstellung, zu bringen. Hierbei wird das Energieversorgungsmodul über die parallelen Innenflächenabschnitte 9, 10 und 14 des Aufnahmeraums sowie die Führungsstrukturen 25 und 28 an der Außenseite des Energieversorgungsmoduls in dessen hinteren Endbereich so geführt, dass der erforderliche elektrische Kontaktierungseingriff etwa über die angesprochenen steckerförmigen Teile 7 und 21 des Aufnahmeraums und des Energieversorgungsmoduls zuverlässig hergestellt wird. Fig. 12 zeigt das Energieversorgungsmodul 20 in dieser Endposition, also in der sich durch die Kontaktherstellung auszeichnenden Betriebsstellung. Nun wird das Energieversorgungsmodul auf geeignete Weise in dem Aufnahmeraum des Fahrzeugs verriegelt, so dass dann der Modulwechselwagen nach erneutem Absenken der hakenförmigen Einrichtung 36 entfernt werden kann, wie in Fig. 13 dargestellt.

Fig. 14 zeigt eine Ansicht auf das äußere Ende des Energieversorgungsmoduls in der Sichtrichtung A gemäß einem Pfeil A in Fig. 3. Es sind die nahe der äußeren Außenfläche 28 des Energieversorgungsmoduls seitlich und unten angeordneten Führungselemente 25 und 27 und die Rundzapfen 23 zu erkennen.

Die erläuterte Ausgestaltung des Energieversorgungsmoduls und des Aufnahmeraums in Bezug aufeinander ermöglicht auch, das Energieversorgungsmodul bei in Längsrichtung geneigtem Fahrzeug in den Aufnahmeraum des Fahrzeugs einzuführen. In Fig. 15 ist der in der Fahrzeuglängsrichtung um den Winkel β geneigte Grundkörper 2 des Fahrzeugs 1 gezeigt. Vor der Öffnung des Aufnahmeraumes 6 ist das entsprechend der Ausrichtung des Modulwechselwagens auf einem horizontalen Untergrund horizontal ausgerichtete Energieversorgungsmodul 20 angeordnet und mittels des nicht dargestellten Modulwechselwagens 30 gehalten. In der dargestellten Konstellation ist das in der Einführrichtung in den Aufnahmeraum vordere Ende des Energieversorgungsmoduls schon etwas in den Aufnahmeraum 6 hineingeschoben, was aufgrund des öffnungsseitig vergrößerten Öffnungsquerschnitts des Aufnahmeraums ohne weiteres möglich ist. Die Führungsstrukturen 25 und 27 und die Rundzapfen 23 stören dabei nicht, da diese in einem beim Einführen des Energieversorgungsmoduls nachlaufenden hinteren Endbereich des Moduls vorgesehen sind.

Wird beim weiteren Einführen dann, wenn die in der Darstellung gemäß Fig. 15 linke vordere Ecke des Energieversorgungsmoduls auf dem geneigten unteren Flächenabschnitt 12 des Aufnahmeraums 6 trifft, das Energieversorgungsmodul mittels des nicht dargestellten Modulwechselwagens 30 abgesenkt, so richtet sich das Energieversorgungsmodul mit der hakenförmigen Einrichtung 36 unter Drehung um die Drehachse 37 (im Uhrzeigersinn gemäß Fig. 15) relativ zum vertikalen Rahmenabschnitt 31 des Modulwechselwagens entsprechend der Fahrzeugneigung β aus, so dass das Energieversorgungsmodul nun rotatorisch richtig in Bezug auf den Aufnahmeraum ausgerichtet ist. Das hintere Ende des Energieversorgungsmoduls löst sich dabei von der Abstützrolle 38 des Modulwechselwagens 30.

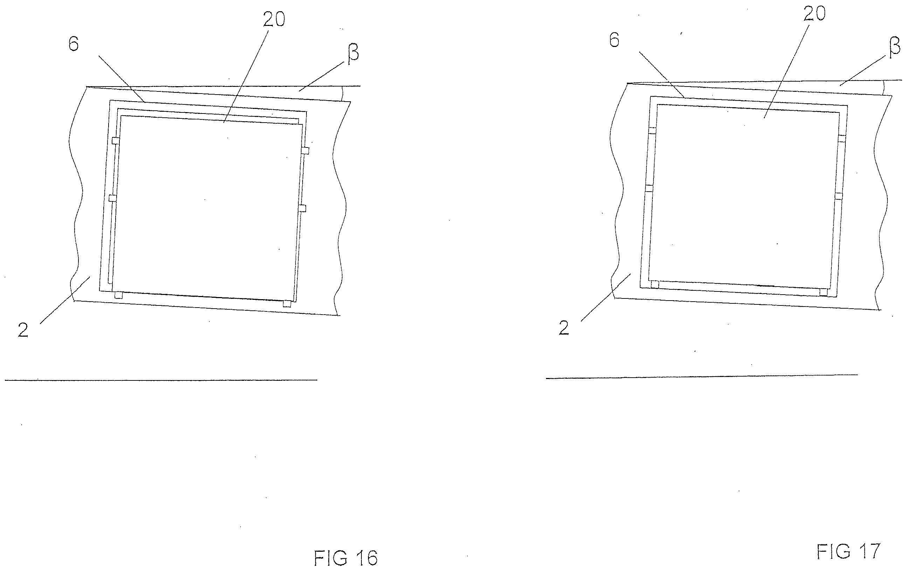

Fig. 16 zeigt die so erreichte richtige rotatorische Orientierung des Energieversorgungsmoduls in Bezug auf den Aufnahmeraum des in Fahrzeuglängsrichtung geneigten Fahrzeugs. Translatorisch ist das Energieversorgungsmodul aber in Quer- und Höhenrichtung des Fahrzeugs noch nicht richtig positioniert bzw. zentriert, wie anhand der seitlichen und unteren Führungsstrukturen 25 und 27 in Bezug auf den Aufnahmeraum zu erkennen. Beim weiteren Einschieben des Energieversorgungsmoduls erfolgt dann automatisch die richtige Zentrierung und translatorische Positionierung des Energieversorgungsmoduls im Aufnahmeraum über die dem Fahrzeug zugewandten Ecken und Kanten des Energieversorgungsmoduls und in der Endphase des Einschiebvorgangs über die von der Moduloberfläche vorstehenden Führungsstrukturen, die die Führungsflächen 24, 25, 26 und 27 aufweisen. Dieser gegenseitige Eingriff zwischen den Innenflächenabschnitten des Aufnahmeraums und den Ecken und Kanten und Führungsflächen des Energieversorgungsmoduls erzeugt aus der Einschubbewegung des Moduls in den Aufnahmeraum translatorische Korrekturbewegungen sowie ggf. auch rotatorische Korrekturbewegungen um eine Querachse des Energieversorgungsmoduls. Soweit das Energieversorgungsmodul in einem vorderen Ende im Falle einer der Längsneigung β überlagerten Querneigung α nach oben zu schwenken ist, muss wie beim ersten erläuterten Beispiel mit der reinen Querneigung α das Energieversorgungsmodul am hinteren Ende mittels des Modulwechselwagens abgesenkt werden.

Wie anhand der vorangehend beschriebenen Figuren erläutert, erreicht das Energieversorgungsmodul seine Betriebsstellung im Aufnahmeraum, in der die automatische Kontaktierung die nötigen elektrischen Verbindungen hergestellt hat.

In Abweichung von der erläuterten Ausgestaltung kann das Energieversorgungsmodul an seiner dem Aufnahmeraum zugewandten, unteren vorderen Kante anstelle mit der Rolle 22 bzw. mehreren Rollen 22, die ein leichtes Verschieben nur in Längsrichtung des Moduls ermöglichen, mit so genannten "Kugelrollen" ausgestattet sein, die ein leichtes Verschieben des vorderen Endes des Energieversorgungsmoduls durch Abrollen auf den unteren Innenflächenabschnitt in alle in der Fläche liegenden Richtungen, bei nicht geneigtem Fahrzeug in alle horizontalen Richtungen, zulassen. Alternativ können so genannte "Omnirollen" verwendet werden, die ein Abrollen in zwei Richtungen erlauben.

Nach einer weiteren vorteilhaften Ausgestaltung können auch an der Oberseite des Energieversorgungsmoduls in einem in Einschubrichtung hinteren Endbereich Führungsstrukturen vorgesehen sein, etwa wie sie das gezeigte Ausführungsbeispiel seitlich und unten aufweist. Solche Führungsstrukturen können einerseits dem Bedienpersonal zeigen, ob das Energieversorgungsmodul beim weiteren Einführen weiter abgesenkt werden muss, bzw. durch Eingriff mit der oberen Innenfläche des Aufnahmeraums dafür sorgen, dass das Energieversorgungsmodul richtig abgesenkt wird, um eine einwandfreie Kontaktierung in der Endphase des Einführvorganges zu erreichen. Soweit es nur darum geht, dem Bediener entsprechend Hinweis zu geben, können anstelle der vorgeschlagenen Führungsstrukturen auch einfach nur visuell die nötigen Hinweise gebende Elemente vorgesehen sein.

Betreffend die die elektrischen Verbindungen herstellenden Kontaktierungselemente wird vorgeschlagen, dass wenigstens eines der Teile 7 und 21 mit einer trichterförmigen bzw. sich zum freien Ende hin verjüngenden Kontaktierungseinrichtung ausgeführt ist, um trotz der erläuterten translatorischen und rotatorischen Zentrierung und Positionierung etwaige noch verbleibende Positionsungenauigkeiten vor dem endgültigen Zusammenführen der Kontaktpartner auszugleichen.

Nach anderen in Frage kommenden Ausführungsformen kann sich der Aufnahmeraum des Fahrzeugs nach unten oder oben öffnen, so dass der Wechsel des Energieversorgungsmoduls in Vertikalrichtung erfolgt, wobei anders geartete Hilfseinrichtungen anstelle eines Modulwechselwagens wie erläutert zum Einsatz kommen können. Das zuvor beschriebene Einsetzen/Entnehmen des Energieversorgungsmoduls aus dem Fahrzeug bzw. in das Fahrzeug in horizontaler Richtung (von der etwaigen Fahrzeugneigung abgesehen), also von der Fahrzeugseite bzw. zur Fahrzeugseite bzw. nach vorne oder hinten, steht also nur eine bevorzugte Ausgestaltung dar. Für den Fall, dass das Energieversorgungsmodul in Vertikalrichtung in den Aufnahmeraum zugeführt bzw. aus diesem entfernt werden soll, wird insbesondere an eine Zuführung in den Aufnahmeraum von unten und eine Entfernung aus dem Aufnahmeraum nach unten gedacht. Eine solche Einführrichtung bzw. Entnahmerichtung kommt insbesondere dann in Betracht, wenn das zu wechselnde Energieversorgungsmodul z. B. bei einem Elektro-Personenkraftwagen eingesetzt wird und dort z. B. in einem Unterflur-Bereich in einen Aufnahmeraum aufgenommen ist.

Beim zuvor beschriebenen Einsetzen oder Entnehmen des Energieversorgungsmoduls in horizontaler Richtung verlagert sich das Gewicht des Energieversorgungsmoduls während des Vorgangs schrittweise vom Batteriewechselwagen auf das Fahrzeug und umgekehrt, wobei beim Einsetzen in das Fahrzeug gleichzeitig eine Anpassung an die Neigung des Fahrzeugs erfolgt.

Demgegenüber muss bei der vertikalen Zufuhr und Entnahme die zum Einsatz kommende Hilfseinrichtung das Gewicht des Energieversorgungsmoduls während des gesamten Vorgangs tragen und wird erst nach Verriegeln des Energieversorgungsmoduls im Fahrzeug entlastet. Dabei sollte aber stets zugleich eine hinreichende freie Beweglichkeit des einzusetzenden Energieversorgungsmoduls in beide horizontale Richtungen ermöglicht sein, so dass sich die Position des Energieversorgungsmoduls an die Position des vertikalen Aufnahmeraums anpassen kann. Zusätzlich sollte eine Anpassung der Orientierung des Energieversorgungsmoduls an die Orientierung des Aufnahmeraums je nach Längs- und Querneigung und relativer Drehstellung des Fahrzeugs möglich sein.

Ein weiterer Unterschied gegenüber dem zuvor erörterten horizontalen Energiemodulwechsel liegt darin, dass beim horizontalen Wechsel des Energieversorgungsmoduls die Wirkrichtung der Gewichtskraft eine Vorzugsrichtung zur Orientierung des Energieversorgungsmoduls relativ zum Aufnahmeraum hin darstellt, wohingegen beim vertikalen Einsetzen die Orientierung zum Aufnahmeraum alleine durch die vertikale Hubkraft bewerkstelligt werden muss, die die Hilfseinrichtung aufbringen muss.

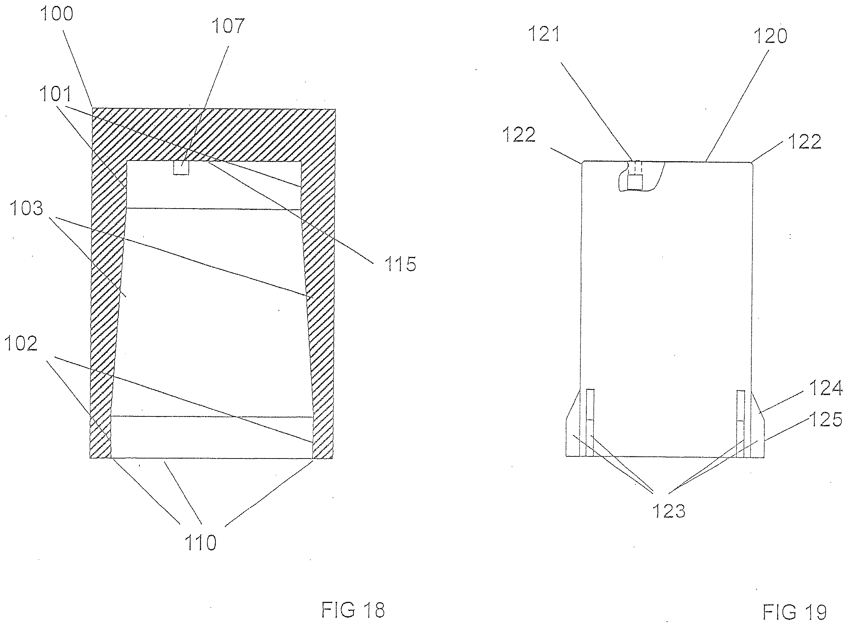

Fig. 18 zeigt einen Teilschnitt durch einen vertikalen Aufnahmeraum eines Fahrzeugs. Die Querschnitts-Öffnungsfläche des Raumes vergrößert sich trichterförmig nach unten hin. Die Seitenwände des Raumes weisen vertikale Innenflächenabschnitte 101 und 102 und zur Vertikalen geneigte mittlere Innenflächenabschnitte 103 auf. Ein innerer oberer Abschluss ist von einer horizontalen Innenfläche 115 gebildet, die auch den fahrzeugseitigen Kontaktierungsteil 107 der automatischen Kontaktierungseinrichtung aufnimmt.

Fig. 19 zeigt ein Beispiel für ein zugehöriges Energieversorgungsmodul für das vertikale Einsetzen in den Aufnahmeraum in einer Art Seitenansicht. Die oberen vier Ecken 122 des Moduls sind gerundet ausgeführt, um den Zentriervorgang im Aufnahmeraum zu erleichtern. An der Oberseite befindet sich in einem geschnitten dargestellten Abschnitt das modulseitige Kontaktierungsteil 121 der automatischen Kontaktierungseinrichtung. An unteren Endabschnitten der vier Modul-Außenflächen befinden sich Führungsstrukturen 123 ähnlich den Führungsstrukturen 26, 27 des ersten Ausführungsbeispiels, die jeweils einen geneigten Flächenabschnitt 124 und einen zur Außenoberfäche des Moduls parallelen Führungsflächenabschnitt 125 aufweisen.

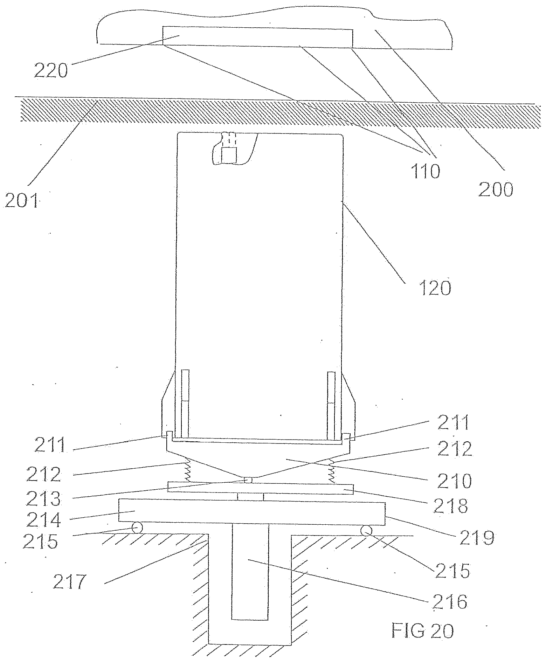

Fig. 20 zeigt ein Beispiel für eine Hilfseinrichtung 219, also ein Modulwechselgerät 219 zum Wechseln des Energieversorgungsmoduls 120 in vertikaler Richtung. Eine Trageinheit der Hilfseinrichtung ist mit einer Tragplatte 210 ausgeführt, die Einrichtungen 211 zur Zentrierung und Fixierung des Energieversorgungsmoduls aufweist. Insbesondere umfassen die Einrichtungen 211 von einer Tragfläche der Tragplatte vorstehende Zentrierungselemente, die eine bestimmte richtige Positionierung des unteren Endes des Moduls auf der Tragplatte definieren und erhalten.

Die Tragplatte 210 stützt sich über eine allseitig winkelbewegliche Lagerung 213 auf einer Hubeinheit in Form einer Hubplatte 218 ab. Es sind vorzugsweise wenigstens drei elastisch vorgespannte Federelemente 212 zwischen der Tragplatte 210 und der Hubplatte 218 wirksam, die diese zueinander parallel halten, so lange keine eine Neigung der Tragplatte relativ zur Hubplatte herbeiführenden Kräfte auf die Tragplatte wirken.

Die Hubplatte ist in einem Zentrierwagen 214 höhenverschieblich gelagert und kann mit Hilfe einer vorzugsweise hydraulischen, nicht näher dargestellten Hubeinrichtung 216 gegenüber dem Zentrierwagen 214 angehoben werden. Der Zentrierwagen 214 ist gegenüber dem Untergrund 217 begrenzt frei horizontal verschiebbar. Diese Funktion wird durch in den Figuren dargestellte Rollelemente 215 repräsentiert, die zwischen dem Zentrierwagen 214 und dem Untergrund wirksam sind.

Bei dem dargestellten Ausführungsbeispiel ist davon ausgegangen, dass in der Darstellung gemäß Fig. 20 die gesamte Anordnung aus der Hilfseinrichtung 219 und dem auf der Tragplatte 210 angeordneten, in den Aufnahmeraum des Fahrzeugs einzuführenden Energieversorgungsmodul 120 unterhalb einer Standfläche für das Fahrzeug angeordnet ist, beispielsweise in einer Grube im Untergrund, über die das Fahrzeug fahren kann. In Fig. 20 ist eine der Standfläche für das Fahrzeug entsprechende Ebene 201 angedeutet, und es ist nur ein Ausschnitt eines unteren Abschnitts des Fahrzeugs dargestellt und mit 200 bezeichnet. Zu erkennen an der Unterseite des Fahrzeugs 200 ist die Öffnung 220 des nach unten offenen Aufnahmeraums 100.

Zum Einführen des Energieversorgungsmoduls 120 wird dieses also unterhalb der Öffnung des Aufnahmeraums des Fahrzeugs positioniert. Sodann wird das Energieversorgungsmodul mit Hilfe der Hubeinrichtung 216 des Modulwechselgeräts angehoben, bis das Energieversorgungsmodul in die Öffnung 220 des Aufnahmeraums 100 eintaucht, und wenigstens eine der Flächen 101 und 103 des Aufnahmeraums mit seinen oberen Kanten und Ecken berührt. Je nach momentaner Positionierung des Energieversorgungsmoduls relativ zum Aufnahmeraum beginnt jetzt, sofern zum Zentrieren erforderlich, eine Verdrehung des Energieversorgungsmoduls mit den das Energieversorgungsmodul haltenden Elementen der Hilfseinrichtung 219 um eine Hochachse. Hierbei treten die oberen, abgerundeten Ecken des Moduls speziell mit den geneigten Innenflächenabschnitten 103 des Aufnahmeraums in Wechselwirkung. Die Drehung kann zweckmäßig zwischen dem Kolben und dem Zylinder der Hubeinrichtung 216 erfolgen. Alternativ kann man eine Drehbarkeit der kompletten Hilfseinrichtung 219 mit Hilfe der Rollen 215 vorsehen.

Sobald die Oberseite des Energieversorgungsmoduls die Grenzlinie zwischen den geneigten Flächenabschnitten 103 und den oberen parallelen Flächenabschnitten 101 erreicht hat, ist der Zentriervorgang für das obere Ende des Energieversorgungsmoduls 120 in den horizontalen Richtungen und in Bezug auf den relativen Drehwinkel zum Aufnahmeraum 100 abgeschlossen.

Beim weiteren Hubvorgang erfolgt nun eine Anpassung der Neigung des Energieversorgungsmoduls an die Neigung des Fahrzeuges und des Aufnahmeraums 100 entsprechend der Längs- und Querneigung des Fahrzeugs. Hierzu treten die Führungsstrukturen 123 mit ihren geneigten Führungsflächenabschnitten 124 mit den unteren Kanten 110 des Aufnahmeraums in Wechselwirkung. Sobald dann die parallelen Führungsflächenabschnitte 125 der Führungsstrukturen in den Aufnahmeraum eintauchen, ist die Zentrierung und Positionierung in Bezug auf alle translatorischen und rotatorischen Freiheitsgrade des Energieversorgungsmoduls abgeschlossen, so dass das Modul richtig positioniert und geneigt ist. Es erfolgt dann in der letzten Phase des Einschiebens in den Aufnahmeraum die automatische gegenseitige Kontaktierung der fahrzeugseitigen und modulseitigen Kontaktteile 107 und 121. Der Modulwechselvorgang wird dann abgeschlossen durch die Verriegelung des Energieversorgungsmoduls in seiner Betriebsstellung im Aufnahmeraum des Fahrzeugs und das anschließende Absenken der leeren Hubplatte 218 unter die Ebene 201.

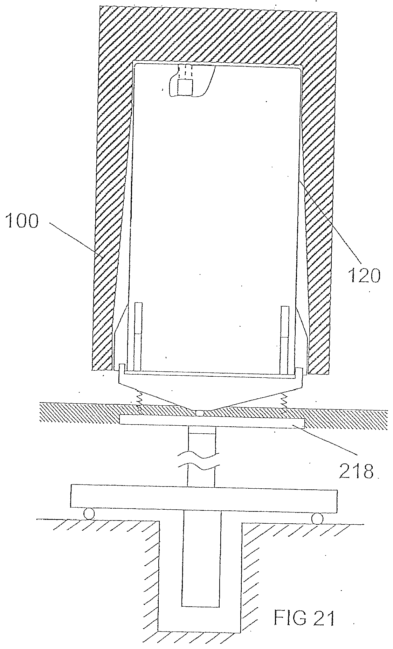

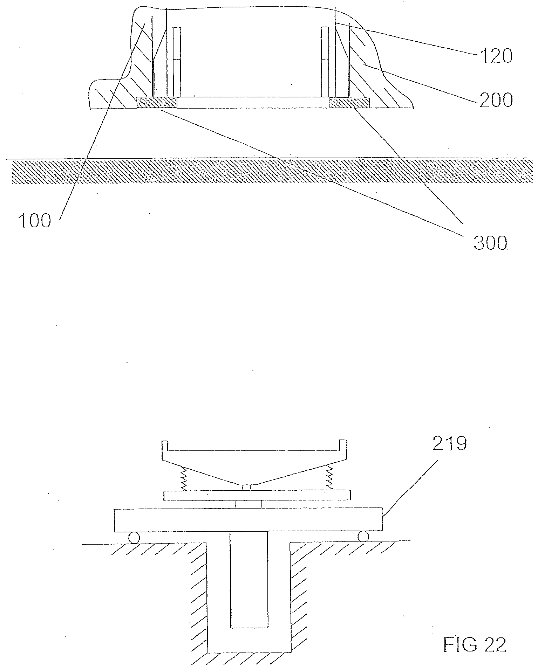

Fig. 21 zeigt, wie das Energieversorgungsmodul 120 nach erfolgter Zentrierung und Kontaktierung über die automatische Kontaktierungseinrichtung seine Betriebsstellung in dem vertikalen Aufnahmeraum 100 erreicht hat, durch entsprechendes Anheben der Hubseite 218. Nach der angesprochenen Verriegelung kann die Hubplatte 218 nun abgesenkt werden. Die erfolgte Verriegelung und der abgesenkte Zustand der Hubplatte 218 ist in Fig. 22 dargestellt. Zur Verriegelung dient eine nicht näher dargestellte und zu erläuternde Verriegelungseinrichtung 300, die das Energieversorgungsmodul mit dem Fahrzeug verriegelt und damit sicher in seiner Betriebsstellung in dem Aufnahmeraum hält. Die Hilfseinrichtung 219 ist im unbeladenen Zustand mit der eine untere Endposition einnehmenden Hubplatte gezeigt.

Nach einer vorteilhaften Ausgestaltung des erfindungsgemäßen Energieversorgungsmoduls 120 kann dieses an den vier oberen Ecken mit Kunststoffelementen ausgestattet sein, um beim vorstehend beschriebenen Zentriervorgang die auftretenden Reibungskräfte und den Verschleiß zu reduzieren.

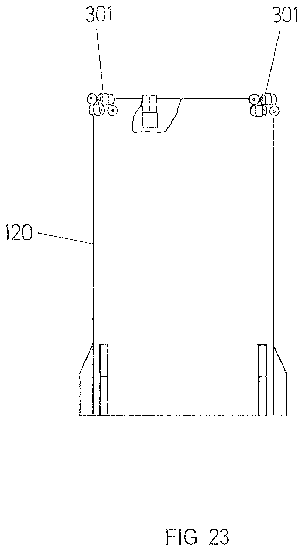

Gemäß Fig. 23 ist das Energieversorgungsmodul an den vier oberen Ecken vorteilhaft mit Rollelementen ausgestattet, speziell mit so genannten "Omnirollen" 301, die ein Abrollen in zwei Richtungen erlauben. Alternativ können auch so genannte "Kugelrollen" zum Einsatz kommen.

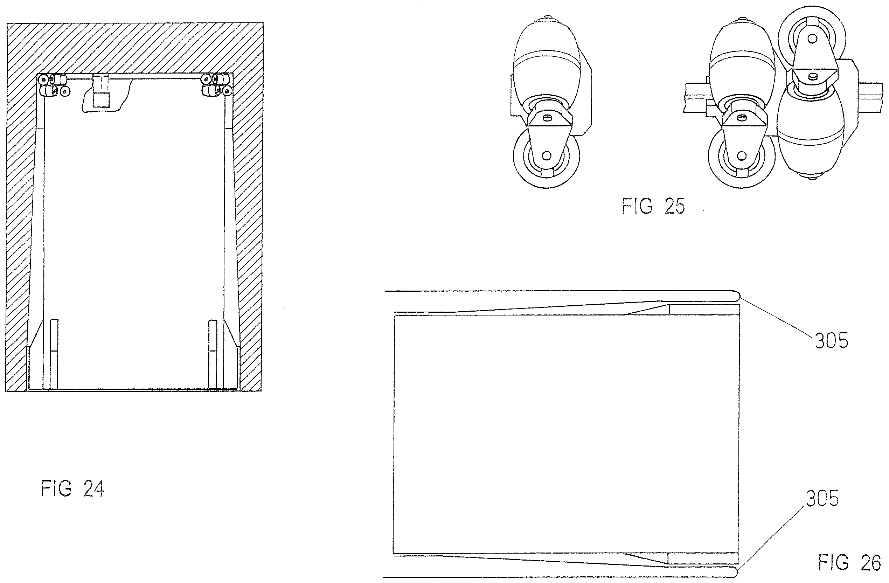

Fig. 24 zeigt das mit den Omnirollen bestückte Energieversorgungsmodul, wie es in den entsprechen geometrisch angepassten Aufnahmeraum des Fahrzeugs von unten her eingesetzt wurde. Fig. 25 zeigt in der rechten Teilfigur eine solche Omnirollenanordnung, die aus zwei zueinander versetzt angeordneten Teilrollenanordnungen gemäß der linken Teilfigur gebildet ist.

Sowohl betreffend den horizontalen als auch betreffend den vertikalen Aufnahmeraum sind diverse Ausgestaltungen denkbar. So können die Zugangsöffnungen in den Aufnahmeraum begrenzende Kanten und Ecken abgerundet ausgeführt sein, wie in Fig. 26 für den horizontalen Aufnahmeraum betreffend Begrenzungskanten 305 veranschaulicht.

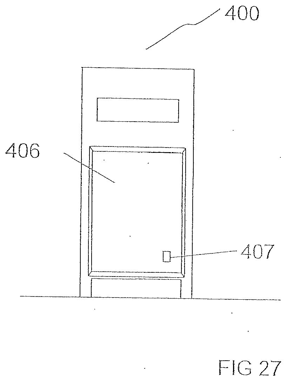

Zweckmäßig kann zum System eine Ladestation gehören, wie schon angesprochen. Eine solche Ladestation kann zweckmäßig einen dem horizontalen bzw. vertikalen Aufnahmeraum des Fahrzeugs im Wesentlichen gleich gestalteten horizontalen bzw. vertikalen Aufnahmeraum mit entsprechender Kontaktierungseinrichtung aufweisen. Fig. 27 zeigt eine entsprechende Ladestation 400 mit einem horizontalen Aufnahmeraum 406 mit einem Kontaktteil 407. Der Einsetz- und Entnahmevorgang sowie die Kontaktierung erfolgen analog zum oben beschriebenen Ablauf beim Fahrzeug mit dem horizontalen Aufnahmeraum. In entsprechender Weise kann eine Ladestation einen vertikalen Aufnahmeraum aufweisen, in die das Energieversorgungsmodul mittels der Hilfseinrichtung zum Laden einführbar ist. Im Falle der Hilfseinrichtung der Fig. 20, 21 und 22 könnte die die Hilfseinrichtung enthaltene Grube sich bis in einen Bereich unterhalb der Ladestation erstrecken, und das Modulwechselgerät könnte auf dem Boden der Grube von dem Bereich unterhalb des Fahrzeugs in den Bereich unterhalb der Ladestation verschiebbar sein, um das aus dem Aufnahmeraum des Fahrzeugs entfernte Modul in den Aufnahmeraum der Ladestation überführen zu können.

Gemäß Vorstehendem wird ein System für den Wechsel von Energieversorgungsmodulen in Fahrzeugen, insbesondere Flurförderzeugen, bereitgestellt, welches dem erforderlichen Gewicht jeweiliger Energieversorgungsmodule Rechnung trägt und einen schnellen und einfachen Modulwechsel ermöglicht. Quer- und Längsneigungen des Fahrzeugs sowie Abweichungen der Ausrichtung des Moduls in allen Raumrichtungen relativ zum Fahrzeug sind gut beherrschbar. Es können an die benötigte Kapazität angepasste, wartungsfreie Akkumulatoren mit hoher Energie- und Leistungsdichte verwendet werden. Die entsprechenden Energieversorgungsmodule werden vorzugsweise in einem seitlich, nach vorne oder hinten, oder in vertikaler Richtung, vorzugsweise nach unten, offenen bzw. zu öffnenden Aufnahmeraum des Fahrzeugs aufgenommen, und sind vorzugsweise mittels einer vergleichsweise einfachen Hilfseinrichtung aus dem Aufnahmeraum entnehmbar bzw. in diesen einsetzbar. Durch geeignete Gestaltung des Aufnahmeraums einerseits und des Energieversorgungsmoduls andererseits in Bezug aufeinander kann beim Einführen des Energieversorgungsmoduls quasi automatisch die richtige rotatorische und translatorische Positionierung und Zentrierung im Aufnahmeraum erfolgen. Die Kontaktierung des Moduls im Fahrzeug bzw. in einer einen entsprechenden Aufnahmeraum aufweisenden Ladestation kann zweckmäßig automatisch erfolgen, beispielsweise unter Nutzung üblicher Steckverbindungen.

Das System kann allgemein bei elektrischen Fahrzeugen, beispielsweise bei Elektro-Personenkraftwagen, Elektro-Lastkraftwagen und anderen gewerblichen Fahrzeugen, wie beispielsweise Flurförderzeugen, zum Einsatz kommen. Ein Modulwechsel in vertikaler Richtung bietet sich insbesondere für Elektro-Pkws und Elektro-Lkws an, vorzugsweise mit dem angesprochenen Zugang zum Aufnahmeraum von unten. Betreffend Flurförderzeuge bietet sich insbesondere ein Wechsel in horizontaler Richtung an, da die tragende Bodenplatte eines Flurförderzeugs üblicher Konstruktion erhalten bleiben kann.

Für ein mittels eines Energieversorgungsmoduls elektrisch betriebenes Fahrzeug und eine zum Laden des ggf. ladbaren Energieversorgungsmoduls ggf. vorgesehene Ladestation wird vorgeschlagen, dass eine Modulaufnahmestruktur und das Energieversorgungsmodul derart in Bezug aufeinander ausgeführt sind, dass das Energieversorgungsmodul beim Zuführen in einen Aufnahmeraum der Modulaufnahmestruktur anfänglich, nach Einführung eines in einer Einführrichtung vorderen Endes des Energieversorgungsmoduls in den Aufnahmeraum oder einen zu diesem führenden Zuführkanal der Modulaufnahmestruktur, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls in den Aufnahmeraum zunehmend reduzieren, bis spätestens beim Erreichen einer Betriebsstellung des Energieversorgungsmoduls im Aufnahmeraum das relative translatorische Bewegungsspiel und das relative rotatorische Bewegungsspiel verschwinden oder auf ein minimales relatives Rest-Bewegungsspiel reduziert sind, so dass das Energieversorgungsmodul in der Betriebsstellung translatorisch, in Bezug auf alle drei zueinander orthogonalen Raumrichtungen, und rotatorisch, in Bezug auf eine Neigung um drei zueinander orthogonale Neigungsachsen, definiert relativ zur Modulaufnahmestruktur und damit in dem Aufnahmeraum positioniert und orientiert ist.

## Patentansprüche

1. Vorrichtung in Form eines elektrisch betriebenen Fahrzeugs (1), insbesondere elektrisch betriebenen gewerblichen Fahrzeugs, wie etwa ein Flurförderzeug oder ein Gabelstapler, welches zur Bereitstellung von elektrischer Energie für den Betrieb des Fahrzeugs in wenigstens einem Aufnahmeraum (6; 100) einer Modulaufnahmestruktur des Fahrzeugs wenigstens ein mindestens eine elektrische Energiequelle oder/und mindestens einen ladbaren elektrischen Energiespeicher enthaltendes Energieversorgungsmodul (20; 120) aufnimmt,
wobei das Energieversorgungsmodul (20; 120) von einer Zuführseite in Bezug auf die Modulaufnahmestruktur her entlang einem Einführpfad in den Aufnahmeraum (6; 100) zuführbar und in einer definierten Betriebsstellung positionierbar ist und zur Zuführseite hin aus dem Aufnahmeraum (6; 100) entfernbar ist und wobei in der Betriebsstellung eine erste elektrische Kontaktanordnung (7; 107) der Modulaufnahmestruktur mit einer zweiten elektrischen Kontaktanordnung (21; 121) des Energieversorgungsmoduls (20; 120) eingreift oder in Eingriff bringbar ist, um eine an der ersten Kontaktanordnung angeschlossene erste elektrische Leiteranordnung an einer an der zweiten elektrischen Leiteranordnung angeschlossenen zweiten elektrischen Leiteranordnung anzuschließen,
wobei die Modulaufnahmestruktur den Aufnahmeraum (6; 100) begrenzende Innenflächen (9, 10, 11, 12, 19, 19a, 13, 14, 14a) aufweist, denen zugeordnete Außenflächen des in der Betriebsstellung angeordneten Energieversorgungsmoduls gegenüber liegen,
wobei die Modulaufnahmestruktur mit ersten Führungsmitteln (10, 12, 16; 103) im Aufnahmeraum (6; 100) ausgeführt ist, die beim Zuführen des Energieversorgungsmoduls in den Aufnahmeraum mit zweiten Führungsmitteln (22; 24, 25; 26, 27; 122, 123, 124, 125) des Energieversorgungsmoduls in Bezug auf die Positionierung des Energieversorgungsmoduls in der Betriebsstellung zusammen wirken, und
wobei das Energieversorgungsmodul (20; 120) in der Betriebsstellung translatorisch, in Bezug auf alle drei zueinander orthogonalen Raumrichtungen, und rotatorisch, in Bezug auf eine Neigung um drei zueinander orthogonale Neigungsachsen, definiert relativ zur Modulaufnahmestruktur und damit in dem Aufnahmeraum (6; 100) positioniert und orientiert ist, so dass das die Betriebsstellung einnehmende Energieversorgungsmodul zum Entfernen aus dem Aufnahmeraum zumindest zu Beginn der Bewegung des Energieversorgungsmoduls weg von der Betriebsstellung in einer vordefinierten, von der Gestaltung der Modulaufnahmestruktur und des Energieversorgungsmoduls bestimmten und im Folgenden als Referenzrichtung angesprochenen Bewegungsrichtung zu bewegen ist;
**dadurch gekennzeichnet,**
**dass** die Modulaufnahmestruktur und das Energieversorgungsmodul (20; 120) derart in Bezug aufeinander ausgeführt sind, dass das Energieversorgungsmodul beim Zuführen in den Aufnahmeraum (6; 100) anfänglich, nach Einführung eines in einer Einführrichtung vorderen Endes des Energieversorgungsmoduls in den Aufnahmeraum oder einen zu diesem führenden Zuführkanal der Modulaufnahmestruktur, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls (20; 120) in den Aufnahmeraum (6; 100) zunehmend reduzieren, bis spätestens beim Erreichen der Betriebsstellung das relative translatorische Bewegungsspiel und das relative rotatorische Bewegungsspiel verschwinden oder auf ein minimales relatives Rest-Bewegungsspiel reduziert sind.

2. Vorrichtung in Form einer Ladestation (400) zum elektrischen Laden eines mindestens einen ladbaren elektrischen Energiespeicher enthaltenden Energieversorgungsmoduls (20; 120), welches für die Bereitstellung von elektrischer Energie für den Betrieb eines elektrisch betriebenen Fahrzeugs (1), insbesondere elektrisch betriebenen gewerblichen Fahrzeugs, wie etwa ein Flurförderzeug oder ein Gabelstapler, vorgesehen ist,
wobei eine Modulaufnahmestruktur der Ladestation (400) wenigstens einen Aufnahmeraum (406) aufweist, in dem ein zu ladendes Energieversorgungsmodul (10; 120) aufnehmbar ist,
wobei das Energieversorgungsmodul von einer Zuführseite in Bezug auf die Modulaufnahmestruktur her entlang einem Einführpfad in den Aufnahmeraum (406) zuführbar und in einer definierten Betriebsstellung positionierbar ist und zur Zuführseite hin aus dem Aufnahmeraum (406) entfernbar ist und wobei in der Betriebsstellung eine erste elektrische Kontaktanordnung (407) der Modulaufnahmestruktur mit einer zweiten elektrischen Kontaktanordnung (21; 121) des Energieversorgungsmoduls (20; 120) eingreift oder in Eingriff bringbar ist, um eine an der ersten Kontaktanordnung angeschlossene erste elektrische Leiteranordnung an einer an der zweiten elektrischen Leiteranordnung angeschlossenen zweiten elektrischen Leiteranordnung anzuschließen,
wobei die Modulaufnahmestruktur den Aufnahmeraum (406) begrenzende Innenflächen aufweist, denen zugeordnete Außenflächen des in der Betriebsstellung angeordneten Energieversorgungsmoduls gegenüber liegen,
wobei die Modulaufnahmestruktur mit ersten Führungsmitteln im Aufnahmeraum ausgeführt ist, die beim Zuführen des Energieversorgungsmoduls in den Aufnahmeraum mit zweiten Führungsmitteln (22; 24, 25; 26, 27; 122, 123, 124, 125) des Energieversorgungsmoduls in Bezug auf die Positionierung des Energieversorgungsmoduls in der Betriebsstellung zusammen wirken, und
wobei das Energieversorgungsmodul in der Betriebsstellung translatorisch, in Bezug auf alle drei zueinander orthogonalen Raumrichtungen, und rotatorisch, in Bezug auf eine Neigung um drei zueinander orthogonale Neigungsachsen, definiert relativ zur Modulaufnahmestruktur und damit in dem Aufnahmeraum positioniert und orientiert ist, so dass das die Betriebsstellung einnehmende Energieversorgungsmodul zum Entfernen aus dem Aufnahmeraum zumindest zu Beginn der Bewegung des Energieversorgungsmoduls weg von der Betriebsstellung in einer vordefinierten, von der Gestaltung der Modulaufnahmestruktur und des Energieversorgungsmoduls bestimmten und im Folgenden als Referenzrichtung angesprochenen Bewegungsrichtung zu bewegen ist;
**dadurch gekennzeichnet,**
**dass** die Modulaufnahmestruktur und das Energieversorgungsmodul (20; 120) derart in Bezug aufeinander ausgeführt sind, dass das Energieversorgungsmodul beim Zuführen in den Aufnahmeraum (406) anfänglich, nach Einführung eines in einer Einführrichtung vorderen Endes des Energieversorgungsmoduls in den Aufnahmeraum oder einen zu diesem führenden Zuführkanal der Modulaufnahmestruktur, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls (20; 120) in den Aufnahmeraum (406) zunehmend reduzieren, bis spätestens beim Erreichen der Betriebsstellung das relative translatorische Bewegungsspiel und das relative rotatorische Bewegungsspiel verschwinden oder auf ein minimales relatives Rest-Bewegungsspiel reduziert sind.

3. Vorrichtung nach Anspruch 1 oder 2 oder nach dem Oberbegriff von Anspruch 1 oder 2, **dadurch gekennzeichnet, dass** die Außenflächen und die Innenflächen (9, 10, 11, 12, 19, 19a, 13, 14, 14a) oder/und die ersten und zweiten Führungsmittel derart in Bezug aufeinander ausgeführt sind, dass das Energieversorgungsmodul (20; 120) beim Zuführen in den Aufnahmeraum (6; 100; 406) anfänglich, nach Einführung eines in der/einer Einführrichtung vorderen Endes des Energieversorgungsmoduls in den Aufnahmeraum, ein definiertes relatives translatorisches Bewegungsspiel in zwei zueinander und zur Einführrichtung orthogonale Raumrichtungen und ein relatives rotatorisches Bewegungsspiel um drei zueinander orthogonale Neigungsachsen relativ zur Modulaufnahmestruktur aufweist, wobei das relative translatorische Bewegungsspiel und das relative rotatorische Bewegungsspiel sich beim weiteren Zuführen des Energieversorgungsmoduls in den Aufnahmeraum (6; 100; 406) zunehmend reduzieren, bis spätestens beim Erreichen der Betriebsstellung das relative translatorische Bewegungsspiel und das relative rotatorische Bewegungsspiel verschwinden oder auf ein minimales relatives Rest-Bewegungsspiel reduziert sind.

4. Vorrichtung nach Anspruch 1 oder 3, **dadurch gekennzeichnet, dass** das anfängliche translatorische Bewegungsspiel oder/und das anfängliche relative rotatorische Bewegungsspiel an eine im Betrieb des Fahrzeugs (1) zu erwartende maximale Querneigung des Fahrzeugs oder/und an eine im Betrieb des Fahrzeug zu erwartende maximale Längsneigung des Fahrzeugs angepasst ist, um auch bei geneigtem Fahrzeug die Zufuhr des Energieversorgungsmoduls (2; 120) in den Aufnahmeraum und die Entfernung des Energieversorgungsmoduls aus dem Aufnahmeraum zu ermöglichen.

5. Vorrichtungen nach einem der Ansprüche 1 bis 4 oder nach dem Oberbegriff von Anspruch 1 oder 2, **dadurch gekennzeichnet, dass** wenigstens ein Paar von zwei in entgegengesetzten Richtungen den Aufnahmeraum (6; 100; 106) entlang dem Einfühpfad begrenzenden Innenflächen (11, 12; 13; 103) oder/und wenigstens ein Paar von zwei Außenflächen des Energieversorgungsmoduls, die jeweils einer von zwei in entgegengesetzte Richtungen den Aufnahmeraum entlang dem Einführpfad begrenzenden Innenflächen zugeordnet sind und in der Betriebsstellung dieser gegenüber liegen, zumindest bereichsweise entlang dem Einführpfad aufeinander zu laufen.

6. Vorrichtung nach einem der Ansprüche 1, 3, 4 und 5, **dadurch gekennzeichnet, dass** der Verlauf wenigstens einer Innenfläche (11, 12; 13; 103) oder/und der Verlauf wenigstens einer Außenfläche an eine/die im Betrieb des Fahrzeugs (1) zu erwartende maximale Querneigung des Fahrzeugs, wenn dieses auf einem horizontalen Untergrund steht, oder/und an eine/die im Betrieb des Fahrzeug zu erwartende maximale Längsneigung des Fahrzeugs, wenn dieses auf einem horizontalen Untergrund steht, angepasst ist, um auch bei geneigtem Fahrzeug die Zufuhr des Energieversorgungsmoduls in den Aufnahmeraum und die Entfernung des Energieversorgungsmoduls aus dem Aufnahmeraum zu ermöglichen,
sowie vorzugsweise **dadurch gekennzeichnet, dass** ein Neigungswinkel wenigstens eines Flächenabschnitts (11, 12; 13; 103) der wenigstens einen Innenfläche oder/und ein Neigungswinkel wenigstens eines Flächenabschnitts der wenigstens einen Außenfläche gegenüber der Referenzrichtung an die im Betrieb des Fahrzeugs zu erwartende maximale Querneigung (α) des Fahrzeugs, wenn dieses auf einem horizontalen Untergrund steht, oder/und an die im Betrieb des Fahrzeug zu erwartende maximale Längsneigung (β) des Fahrzeugs, wenn dieses auf einem horizontalen Untergrund steht, angepasst ist, vorzugsweise mindestens einem zu erwartendem maximalen Neigungswinkel (α; β) des Fahrzeugs, wenn dieses auf einem horizontalen Untergrund steht, gegenüber der Horizontalen entspricht.

7. Vorrichtung nach einem der Ansprüche 1 bis 6, **dadurch gekennzeichnet, dass** wenigstens eine den Aufnahmeraum (6; 100; 406) entlang dem Einführpfad begrenzende Innenfläche (9, 10, 11, 12, 13, 14, 14a, 19, 19a; 103) zumindest bereichsweise als ein erstes Führungsmittel dient, welches beim Zuführen des Energieversorgungsmoduls (20; 120) in den Aufnahmeraum (6; 100; 406) mit einem zweiten Führungsmittel (22; 24, 25; 26, 27; 122, 123, 124, 125) des Energieversorgungsmoduls in Bezug auf die Positionierung des Energieversorgungsmoduls in der Betriebsstellung zusammenwirkt.

8. Vorrichtung nach einem der Ansprüche 1 bis 7, **dadurch gekennzeichnet, dass** die den Aufnahmeraum entlang dem Einführpfad begrenzenden Innenflächen plane Flächenabschnitte (9, 10, 14, 14a, 19, 19a; 102, 103, 101) mit unterschiedlichen Orientierungswinkeln relativ zur Referenzrichtung aufweisen, oder/und dass die zumindest bereichsweise entlang dem Einführpfad aufeinander zu laufenden Innenflächen (11, 12; 13; 103) zumindest im Bereich eines jeweiligen planen Flächenabschnitts (11, 12; 13; 103) entlang dem Einführpfad aufeinander zu laufen, wobei von den entlang dem Einführpfad aufeinander zu laufenden planen Flächenabschnitte zumindest einer (11, 12; 13) gegenüber der Referenzrichtung geneigt ist,
sowie vorzugsweise **dadurch gekennzeichnet, dass** von den zumindest bereichsweise entlang dem Einführpfad aufeinander zu laufenden Innenflächen zumindest eine Innenfläche einen planen äußeren Innenflächenabschnitt (14a; 19; 19a; 102), einen planen mittleren Innenflächenabschnitt (11; 12; 13; 103) mit gegenüber dem äußeren Innenflächenabschnitt unterschiedlichem Orientierungswinkel relativ zur Referenzrichtung und einen planen inneren Innenflächenabschnitt (9; 10, 14; 101) mit gegenüber dem mittleren Innenflächenabschnitt unterschiedlichem Orientierungswinkel relativ zur Referenzrichtung aufweist, wobei die Innenflächen zumindest im Bereich des mittleren Innenflächenabschnitts (11; 12; 13; 103) entlang dem Einführpfad aufeinander zu laufen, wobei vorzugsweise die inneren Innenflächenabschnitte (9; 10; 14; 101) und die äußeren Innenflächenabschnitte (14a, 19; 19a; 102) von zwei in entgegengesetzte Richtungen den Aufnahmeraum entlang der Einführrichtung begrenzenden Innenflächen zueinander parallel orientiert sind.

9. Vorrichtung nach einem der Ansprüche 1 bis 8, **dadurch gekennzeichnet, dass** das Energieversorgungsmodul (20; 120) in einem in Einführrichtung vorderen Abschnitt Außenflächenabschnitte aufweist, die im wesentlichen komplementär zu gegenüberliegenden Innenflächenabschnitten ausgeführt sind, insbesondere in der Betriebsstellung an diesen anliegen oder eng von diesen beabstandet sind oder/und parallel zu diesen sind.

10. Vorrichtung nach einem der Ansprüche 1 bis 9,
**dadurch gekennzeichnet, dass** das Energieversorgungsmodul (20; 120), vorzugsweise zumindest an einem in Einführrichtung vorderen Abschnitt des Energieversorgungsmoduls, mit wenigstens einer Rollelementanordnung (22; 301) ausgeführt ist, welche dafür geeignet ist, beim Zuführen des Energieversorgungsmodul in den Aufnahmeraum zumindest über einen Teil des Zuführungswegs an einer zugeordneten Innenfläche (12; 103) des Aufnahmeraums abzurollen, wobei die wenigstens eine Rollelementanordnung (22; 301) vorzugsweise für ein Abrollen in mehrere Rollrichtungen, höchstvorzugsweise zumindest in zwei zueinander orthogonale Rollrichtungen, ausgeführt ist.

11. Vorrichtung nach einem der Ansprüche 1 bis 10,
**dadurch gekennzeichnet, dass** die Modulaufnahmestruktur, vorzugsweise zumindest in einem äußeren Bereich des Aufnahmeraums (6; 100; 406) oder eines/des zu diesem führenden Zuführkanals der Modulaufnahmestruktur, mit wenigstens einer Rollelementanordnung (16) ausgeführt ist, welche dafür geeignet ist, beim Zuführen des Energieversorgungsmoduls (20; 120) in den Aufnahmeraum zumindest über einen Teil des Zuführungswegs an einer zugeordneten Führungsfläche des Energieversorgungsmoduls abzurollen, wobei die wenigstens eine Rollelementanordnung (16) vorzugsweise für ein Abrollen in mehrere Rollrichtungen, höchstvorzugsweise zumindest in zwei zueinander orthogonale Rollrichtungen, ausgeführt ist.

12. Vorrichtung nach einem der Ansprüche 1 bis 11, **dadurch gekennzeichnet, dass** das Energieversorgungsmodul (20; 120) an einem in Einführrichtung hinteren Abschnitt wenigsten eine Führungsstruktur (24, 25; 26, 27; 123) aufweist, die von einer einer Innenfläche des Aufnahmeraums zugeordneten, in der Betriebsstellung des Energieversorgungsmoduls dieser gegenüberliegenden Außenfläche des Energieversorgungsmoduls vorsteht und dafür geeignet ist, in einer Endphase der Zufuhr des Energieversorgungsmoduls (20; 120) in den Aufnahmeraum (6; 106; 406) mit wenigstens einem zugeordneten Führungsmittel (16; 19; 14a; 102) der Modulaufnahmestruktur zusammenzuwirken, um das Energieversorgungsmoduls (20; 120) relativ zur Modulaufnahmestruktur auszurichten und zu positionieren zum Erreichen und ggf. Halten der Betriebsstellung.

13. Vorrichtung nach einem der Ansprüche 1 bis 12, **dadurch gekennzeichnet, dass** - im Falle des Fahrzeugs (1) bezogen auf das ohne Längs- oder Querneigung auf einem horizontalen Untergrund stehende Fahrzeug - die Referenzrichtung eine horizontale Richtung ist, oder/und dass - im Falle des Fahrzeugs bezogen auf das ohne Längs- oder Querneigung auf einem horizontalen Untergrund stehende Fahrzeug - das Energieversorgungsmodul (20) in horizontaler Richtung von außerhalb der Vorrichtung in den Aufnahmeraum (6; 406) zuführbar ist.

14. Vorrichtung nach einem der Ansprüche 1 bis 12, **dadurch gekennzeichnet, dass** - im Falle des Fahrzeugs bezogen auf das ohne Längs- oder Querneigung auf einem horizontalen Untergrund stehende Fahrzeug - die Referenzrichtung eine vertikale Richtung ist, oder/und dass - im Falle des Fahrzeugs bezogen auf das ohne Längs- oder Querneigung auf einem horizontalen Untergrund stehende Fahrzeug - das Energieversorgungsmodul (120) in vertikaler Richtung von außerhalb der Vorrichtung, insbesondere von unterhalb der Vorrichtung, in den Aufnahmeraum (100) zuführbar ist.

15. Modulwechselgerät (30), mit der ein Energieversorgungsmodul (20) in den Aufnahmeraum (6) der Vorrichtung nach Anspruch 13 zuführbar und aus diesem entfernbar ist, umfassend einen auf einem dem Modulwechselgerät und der Vorrichtung gemeinsamen Untergrund bewegbaren Hauptrahmen (31, 31a), an dem ein Tragrahmen (36) in einer Höhenrichtung verstellbar und in einer momentanen Höhe fixierbar geführt ist, welcher wenigstens einen Koppelabschnitt (42) aufweist, wobei der Tragrahmen (36) mit seinem wenigstens einen Koppelabschnitt (42) mit wenigstens einem Gegen-Koppelabschnitt (23) des Energieversorgungsmoduls (20) in vorzugsweise formschlüssigen Koppeleingriff bringbar ist, um das Energieversorgungsmodul mit seinem vorderen Ende von dem Tragrahmen vorkragend an dem Tragrahmen zu halten, so dass das Energieversorgungsmodul durch Bewegen des Modulwechselgeräts (30) auf dem Untergrund und ggf. Verstellen des das Energieversorgungsmodul haltenden Tragrahmens (36) an dem Hauptrahmen (31, 31a) in den Aufnahmeraum (6) zuführbar und in der Betriebsstellung positionierbar ist, wobei nach der Positionierung des Energieversorgungsmoduls in der Betriebsstellung der Koppeleingriff lösbar und das Modulwechselgerät (30) von der Vorrichtung wegbewegbar ist, und wobei der Koppeleingriff zwischen dem Tragrahmen (36) und dem in der Betriebsstellung befindlichen Energieversorgungsmodul (20) später wieder herstellbar ist, um durch Bewegen des Modulwechselgeräts auf dem Untergrund und ggf. Verstellen des das Energieversorgungsmodul haltenden Tragrahmens an dem Hauptrahmen das Energieversorgungsmodul aus dem Aufnahmeraum zu entfernen; sowie **dadurch gekennzeichnet, dass** der Koppeleingriff oder eine wenigstens einen rotatorischen Bewegungsfreiheitsgrad gebende Einrichtung des Modulwechselgeräts ein Verschwenken des am Tragrahmen (36) vorkragend gehaltenen Energieversorgungsmoduls (20) um wenigstens eine sich im Wesentlichen quer zum vorkragenden Energieversorgungsmodul erstreckende Schwenkachse gegen wirkende Gewichtskräfte zulässt, oder/und ein Verdrehen des am Tragrahmen vorkragend gehaltenen Energieversorgungsmoduls um eine in der Einführrichtung oder im Wesentlichen längs des vorkragenden Energieversorgungsmoduls erstreckende Drehachse zulässt, oder/und dass wenigstens eine obere (42) und wenigstens eine untere (138) Modulabstützung des Modulwechselgeräts derart gegeneinander verstellbar sind, dass das am Tragrahmen vorkragend gehaltene Energieversorgungsmodul um eine sich im Wesentlichen quer zum vorkragenden Energieversorgungsmodul erstreckende Schwenkachse gegen wirkende Gewichtskräfte oder/und mit wirkenden Gewichtskräften verschwenkbar ist.

16. Modulwechselgerät (219), mit der ein Energieversorgungsmodul (120) in den Aufnahmeraum (100) der Vorrichtung nach Anspruch 14 zuführbar und aus diesem entfernbar ist, umfassend eine zumindest beschränkt relativ zu einem Untergrund der Vorrichtung in horizontaler Richtung verstellbare Basis (214) und eine mittels einer Hubeinrichtung (216) in einer Höhenrichtung relativ zur Basis verstellbare Trageinheit (210), auf der das Energieversorgungsmodul (120) mit einem hinteren Ende absetzbar ist, wobei durch Verstellen der Trageinheit (210) nach oben das Energieversorgungsmodul (120) in den Aufnahmeraum der darüber angeordneten Vorrichtung, insbesondere des darüber angeordneten Fahrzeugs, zuführbar und in der Betriebsstellung positionierbar ist bzw. durch Verstellen der Trageinheit (210) nach oben gegen das hintere Ende das zuvor in der Betriebsstellung befindliche Energieversorgungsmodul abstützbar und dann durch Verstellung der Trageinheit nach unten zur Entfernung aus dem Aufnahmeraum absenkbar ist;
**dadurch gekennzeichnet, dass** die Trageinheit (210) aus einer vorzugsweise eine horizontale Tragfläche für das Energieversorgungsmodul bereitstellenden Normal-Stellung relativ zur Hubeinrichtung (216) in beliebige Richtungen gegen in Richtung zur Normal-Stellung wirkende Rückstellkräfte einer Rückstellfederanordnung schwenkbar ist,
oder/und
**dadurch gekennzeichnet, dass** eine wenigstens einen rotatorischen oder/und translatorischen Freiheitsgrad gebende Einrichtung des Modulwechselgeräts ein Verdrehen des von der Trageinheit (210) getragenen Energieversorgungsmodul (120) um eine Hochachse oder/und eine Querverschiebung des von der Trageinheit (210) getragenen Energieversorgungsmoduls (120) um wenigstens eine Querrichtung senkrecht zur Hochachse zulässt.

17. Kombination aus wenigstens einem Fahrzeug (1) nach einem der vorhergehenden Ansprüchen 1, 3 bis 14 und wenigstens einem, vorzugsweise mehreren Energieversorgungsmodulen (20; 120) zur Aufnahme in den Aufnahmeraum des Fahrzeugs, um das Fahrzeug elektrisch zu betreiben, wobei die Kombination vorzugsweise wenigstens eine Ladestation (400) nach einem der Ansprüche 2 bis 14 umfasst, zum Laden des wenigstens einen Energieversorgungsmoduls, und wobei die Kombination vorzugsweise ferner wenigstens ein Modulwechselgerät (70; 219) nach Anspruch 15 oder 16 umfasst, mit der ein Energieversorgungsmodul in den Aufnahmeraum (6; 100; 406) des Fahrzeugs bzw. der Ladestation zuführbar und aus diesem entfernbar ist.

18. Verfahren zum Betreiben eines elektrisch betriebenen Fahrzeugs nach einem der Ansprüche 1, 3 bis 14, bei dem ein geladenes Energieversorgungsmodul (20; 120) in den Aufnahmeraum (6; 100) des Fahrzeugs (1) zugeführt wird, vorzugsweise mit Hilfe eines Modulwechselgeräts (30; 219) nach einem der Ansprüche 15 bis 17, das Fahrzeug dann unter Entladen des Energieversorgungsmoduls betrieben wird, und dann das zumindest teilweise entladene Energieversorgungsmodul aus dem Aufnahmeraum des Fahrzeugs wieder entfernt wird, vorzugsweise mit Hilfe eines Modulwechselgeräts nach einem der Ansprüche 15 bis 17, vorzugsweise ferner umfassend: das Laden des zumindest teilweise entladenen Energieversorgungsmoduls (20; 120), vorzugsweise mittels einer Ladestation (400) nach einem der Ansprüche 2 bis 14, indem das zumindest teilweise entladene Energieversorgungsmodul in den Aufnahmeraum (406) der Ladestation zugeführt wird, vorzugsweise mit Hilfe eines Modulwechselgeräts nach Anspruch 15 oder 16, und nach erfolgtem Laden das geladene Energieversorgungsmodul aus dem Aufnahmeraum der Ladestation wieder entfernt wird, vorzugsweise mit Hilfe eines Modulwechselgeräts nach einem der Ansprüche 15 bis 17, um das Energieversorgungsmodul dann wieder in den Aufnahmeraum des Fahrzeugs (1) zuzuführen für den Betrieb des Fahrzeugs, wobei vorzugsweise wenigstens zwei Energieversorgungsmodule verwendet werden, so dass das Fahrzeug mit wenigstens einem Energieversorgungsmodul betrieben wird während wenigstens ein anderes Energieversorgungsmodul geladen wird.

## Claims

1. Device in the form of an electrically operated vehicle (1), in particular an electrically operated commercial vehicle such as an industrial truck or forklift truck, which receives at least one power supply module (20; 120) containing at least one electrical power source and/or at least one chargeable electrical power accumulator in at least one receiving space (6; 100) in a module-receiving structure of the vehicle in order to provide electrical power for operating the vehicle,
it being possible for the power supply module (20; 120) to be introduced into the receiving space (6; 100) along an insertion path from an introduction side in relation to the module-receiving structure, to be positioned in a defined operating position and to be removed from the receiving space (6; 100) towards the introduction side, and, in the operating position, a first electrical contact assembly (7; 107) of the module-receiving structure engaging or being able to be brought into engagement with a second electrical contact assembly (21; 121) of the power supply module (20; 120) in order to connect a first electrical conductor assembly that is connected to the first contact assembly to a second electrical conductor assembly that is connected to the second electrical contact assembly,
the module-receiving structure comprising inner surfaces (9, 10, 11, 12, 19, 19a, 13, 14, 14a) which define the receiving space (6; 100) and are opposite associated outer surfaces of the power supply module arranged in the operating position,
the module-receiving structure comprising first guide means (10, 12, 16; 103) in the receiving space (6; 100) that interact with second guide means (22; 24, 25; 26; 27; 122, 123, 124, 125) of the power supply module in the operating position in relation to the positioning of the power supply module when the power supply module is introduced into the receiving space, and
the power supply module (20; 120) being positioned and oriented in a defined manner relative to the module-receiving structure and thus in the receiving space (6; 100) in a translational manner in relation to all three mutually orthogonal spatial directions and in a rotational manner in relation to an inclination about three mutually orthogonal axes of inclination, such that the power supply module, when in the operating position, can be moved away from the operating position in a predefined movement direction, which is determined by the design of the module-receiving structure and the power supply module and is referred to in the following as the reference direction, for the purpose of being removed from the receiving space, at least at the start of the movement of the power supply module; **characterised in that**
the module-receiving structure and the power supply module (20; 120) are configured relative to one another such that the power supply module, when being introduced into the receiving space (6; 100), initially, after an end of the power supply module that is at the front in an insertion direction is inserted into the receiving space or an introduction channel of the module-receiving structure leading to said space, has a defined relative translational movement clearance in two spatial directions that are orthogonal to one another and to the insertion direction and a relative rotational movement clearance about three mutually orthogonal axes of inclination relative to the module-receiving structure, the relative translational movement clearance and the relative rotational movement clearance being increasingly reduced as the power supply module (20; 120) is introduced further into the receiving space (6; 100), until, no later than when said module reaches the operating position, the relative translational movement clearance and the relative rotational movement clearance disappear or are reduced to a minimal relative residual movement clearance.

2. Device in the form of a charging station (400) for electrically charging a power supply module (20; 120) that contains at least one chargeable electrical power accumulator and is intended to provide electrical power for operating an electrically operated vehicle (1), in particular an electrically operated commercial vehicle such as an industrial truck or forklift truck,
a module-receiving structure of the charging station (400) comprising at least one receiving space (406) in which a power supply module (10; 120) to be charged can be received,
it being possible for the power supply module to be introduced into the receiving space (406) along an insertion path from an introduction side in relation to the module-receiving structure, to be positioned in a defined operating position and to be removed from the receiving space (406) towards the introduction side, and, in the operating position, a first electrical contact assembly (407) of the module-receiving structure engaging or being able to be brought into engagement with a second electrical contact assembly (21; 121) of the power supply module (20; 120) in order to connect a first electrical conductor assembly that is connected to the first contact assembly to a second electrical conductor assembly that is connected to the second electrical contact assembly,
the module-receiving structure comprising inner surfaces which define the receiving space (406) and are opposite associated outer surfaces of the power supply module arranged in the operating position,
the module-receiving structure comprising first guide means in the receiving space that interact with second guide means (22; 24, 25; 26; 27; 122, 123, 124, 125) of the power supply module in the operating position in relation to the positioning of the power supply module when the power supply module is introduced into the receiving space, and
the power supply module being positioned and oriented in a defined manner relative to the module-receiving structure and thus in the receiving space in a translational manner in relation to all three mutually orthogonal spatial directions and in a rotational manner in relation to an inclination about three mutually orthogonal axes of inclination, such that the power supply module, when in the operating position, can be moved away from the operating position in a predefined movement direction, which is determined by the design of the module-receiving structure and the power supply module and is referred to in the following as the reference direction, for the purpose of being removed from the receiving space, at least at the start of the movement of the power supply module;
**characterised in that**
the module-receiving structure and the power supply module (20; 120) are configured relative to one another such that the power supply module, when being introduced into the receiving space (406), initially, after an end of the power supply module that is at the front in an insertion direction is inserted into the receiving space or an introduction channel of the module-receiving structure leading to said space, has a defined relative translational movement clearance in two spatial directions that are orthogonal to one another and to the insertion direction and a relative rotational movement clearance about three mutually orthogonal axes of inclination relative to the module-receiving structure, the relative translational movement clearance and the relative rotational movement clearance being increasingly reduced as the power supply module (20; 120) is introduced further into the receiving space (406), until, no later than when said module reaches the operating position, the relative translational movement clearance and the relative rotational movement clearance disappear or are reduced to a minimal relative residual movement clearance.

3. Device according to either claim 1 or claim 2 or according to the preamble of either claim 1 or claim 2, **characterised in that** the outer surfaces and the inner surfaces (9, 10, 11, 12, 19, 19a, 13, 14, 14a) and/or the first and second guide means are configured relative to one another such that the power supply module (20; 120), when being introduced into the receiving space (6; 100; 406), initially, after an end of the power supply module that is at the front in the/an insertion direction is inserted into the receiving space, has a defined relative translational movement clearance in two spatial directions that are orthogonal to one another and to the insertion direction and a relative rotational movement clearance about three mutually orthogonal axes of inclination relative to the module-receiving structure, the relative translational movement clearance and the relative rotational movement clearance being increasingly reduced as the power supply module is introduced further into the receiving space (6; 100; 406), until, no later than when said module reaches the operating position, the relative translational movement clearance and the relative rotational movement clearance disappear or are reduced to a minimal relative residual movement clearance.

4. Device according to either claim 1 or claim 3, **characterised in that** the initial translational movement clearance and/or the initial relative rotational movement clearance is adjusted to a maximum transverse inclination of the vehicle (1) to be expected during operation of the vehicle and/or to a maximum longitudinal inclination of the vehicle to be expected during operation of the vehicle, in order to make it possible to introduce the power supply module (2; 120) into the receiving space and to remove the power supply module from the receiving space even when the vehicle is on an incline.

5. Devices according to any of claims 1 to 4 or according to the preamble of either claim 1 or claim 2, **characterised in that** at least one pair of two inner surfaces (11, 12; 13; 103) defining the receiving space (6; 100; 406) along the insertion path in opposite directions and/or at least one pair of two outer surfaces of the power supply module which are each associated with one of two inner surfaces defining the receiving space along the insertion path in opposite directions and are opposite said inner surfaces in the operating position, extend towards one another at least in regions along the insertion path.

6. Device according to any of claims 1, 3, 4 and 5, **characterised in that** the shape of at least one inner surface (11, 12; 13; 103) and/or the shape of at least one outer surface is adjusted to a/the maximum transverse inclination of the vehicle (1) to be expected during operation of the vehicle when it is on a horizontal surface and/or to a/the maximum longitudinal inclination of the vehicle to be expected during operation of the vehicle when it is on a horizontal surface, in order to make it possible to introduce the power supply module into the receiving space and to remove the power supply module from the receiving space even when the vehicle is on an incline,
and preferably **characterised in that** an inclination angle of at least one surface portion (11, 12; 13; 103) of the at least one inner surface and/or an inclination angle of at least one surface portion of the at least one outer surface relative to the reference direction is adjusted to the maximum transverse inclination (α) of the vehicle to be expected during operation of the vehicle when it is on a horizontal surface and/or to the maximum longitudinal inclination (ß) of the vehicle to be expected during operation of the vehicle when it is on a horizontal surface, and said angle preferably corresponds to at least one maximum inclination angle (α; ß) of the vehicle to be expected when it is on a horizontal surface relative to the horizontal.

7. Device according to any of claims 1 to 6, **characterised in that** at least one inner surface (9, 10, 11, 12, 13, 14, 14a, 19, 19a; 103) defining the receiving space (6; 100; 406) along the insertion path is used, at least in regions, as a first guide means, which interacts with a second guide means (22; 24, 25; 26, 27; 122, 123, 124, 125) of the power supply module in the operating position in relation to the positioning of the power supply module when the power supply module (20; 120) is introduced into the receiving space (6; 100; 406).

8. Device according to any of claims 1 to 7, **characterised in that** the inner surfaces defining the receiving space along the insertion path comprise planar surface portions (9, 10, 14, 14a, 19, 19a; 102, 103, 101) having different angles of orientation relative to the reference direction, and/or **in that** the inner surfaces (11, 12; 13; 103) extending towards one another along the insertion path at least in regions extend towards one another along the insertion path at least in the region of one planar surface portion (11, 12; 13; 103) in each case, at least one (11, 12; 13) of the planar surface portions extending towards one another along the insertion path being inclined relative to the reference direction,
and preferably **characterised in that**, of the inner surfaces extending towards one another along the insertion path at least in regions, at least one inner surface has a planar external inner-surface portion (14a; 19; 19a; 102), a planar central inner-surface portion (11; 12; 13; 103) having an angle of orientation that is different from the external inner-surface portion relative to the reference direction and a planar internal inner-surface portion (9; 10, 14; 101) having an angle of orientation that is different from the central inner-surface portion relative to the reference direction, the inner surfaces extending towards one another along the insertion path at least in the region of the central inner-surface portion (11; 12; 13; 103), the internal inner-surface portions (9; 10; 14; 101) and the external inner-surface portions (14a, 19; 19a; 102) of two inner surfaces defining the receiving space in the insertion direction in opposite directions preferably being oriented in parallel with one another.

9. Device according to any of claims 1 to 8, **characterised in that** the power supply module (20; 120) comprises outer-surface portions in a portion that is at the front in the insertion direction, which portions are substantially complementary to opposing inner-surface portions, and in particular contact these portions or are a small distance therefrom and/or are in parallel therewith in the operating position.

10. Device according to any of claims 1 to 9, **characterised in that** the power supply module (20; 120), preferably at least on a portion of the power supply module that is at the front in the insertion direction, comprises at least one roller-element assembly (22; 301), which is suitable for rolling over at least part of the introduction path on an associated inner surface (12; 103) of the receiving space when the power supply module is introduced into the receiving space, the at least one roller-element assembly (22; 301) preferably being designed to roll in a plurality of rolling directions, most preferably at least in two mutually orthogonal rolling directions.

11. Device according to any of claims 1 to 10, **characterised in that** the module-receiving structure, preferably at least in an external region of the receiving space (6; 100; 406) or of a/the introduction channel of the module-receiving structure leading to said space, comprises at least one roller-element assembly (16), which is suitable for rolling over at least part of the introduction path on an associated guide surface of the power supply module (20; 120) when the power supply module is introduced into the receiving space, the at least one roller-element assembly (16) preferably being designed to roll in a plurality of rolling directions, most preferably at least in two mutually orthogonal rolling directions.

12. Device according to any of claims 1 to 11, **characterised in that** the power supply module (20; 120) comprises at least one guide structure (24, 25; 26, 27; 123) on a portion that is at the rear in the insertion direction, which guide structure projects from an outer surface of the power supply module that is associated with an inner surface of the receiving space and is opposite said inner surface in the operating position of the power supply module, and which guide structure is suitable for interacting with at least one associated guide means (16; 19; 14a; 102) of the module-receiving structure in an end phase of introducing the power supply module (20; 120) into the receiving space (6; 106; 406), in order to orient and position the power supply module (20; 120) relative to the module-receiving structure for the purpose of reaching and optionally maintaining the operating position.

13. Device according to any of claims 1 to 12, **characterised in that**, if the vehicle (1) is a vehicle that is on a horizontal surface without any longitudinal or transverse inclination, the reference direction is a horizontal direction, and/or **in that**, if the vehicle is a vehicle that is on a horizontal surface without any longitudinal or transverse inclination, the power supply module (20) can be introduced into the receiving space (6; 406) in a horizontal direction from outside the device.

14. Device according to any of claims 1 to 12, **characterised in that**, if the vehicle is a vehicle that is on a horizontal surface without any longitudinal or transverse inclination, the reference direction is a vertical direction, and/or **in that**, if the vehicle is a vehicle that is on a horizontal surface without any longitudinal or transverse inclination, the power supply module (120) can be introduced into the receiving space (100) in a vertical direction from outside the device, in particular from underneath the device.

15. Module changeover apparatus (30), using which a power supply module (20) can be introduced into and removed from the receiving space (6) in the device according to claim 13, comprising a main frame (31, 31 a) which is movable on a surface shared by the module changeover apparatus and the device and on which a supporting frame (36) can be vertically adjusted and is guided such that it can be fixed at a currently applicable height, which supporting frame comprises at least one coupling portion (42), it being possible for the supporting frame (36) together with its at least one coupling portion (42) to be brought into preferably interlocking coupling engagement with at least one mating coupling portion (23) of the power supply module (20) in order to retain the power supply module on the supporting frame by its front end such that it protrudes from the supporting frame, and therefore the power supply module can be introduced into the receiving space (6) and positioned in the operating position by moving the module changeover apparatus (30) on the surface and optionally adjusting the supporting frame (36), which retains the power supply module, on the main frame (31, 31 a), it being possible for the coupling engagement to be released after the power supply module is positioned in the operating position and for the module changeover apparatus (30) to be moved away from the device, and it being possible for the coupling engagement between the supporting frame (36) and the power supply module (20) that is in the operating position to be subsequently re-established, in order to remove the power supply module from the receiving space by moving the module changeover apparatus on the surface and optionally adjusting the supporting frame, which retains the power supply module, on the main frame;
and **characterised in that** the coupling engagement or a means of the module changeover apparatus that provides at least one rotational degree of freedom allows the power supply module (20) retained on the supporting frame (36) in a protruding manner to pivot about at least one pivot axis extending substantially transversely to the protruding power supply module counter to weight forces that are exerted, and/or allows the power supply module retained on the supporting frame in a protruding manner to rotate about a rotational axis extending in the insertion direction or substantially along the protruding power supply module, and/or **in that** at least one upper module support (42) and at least one lower module support (138) of the module changeover apparatus can be adjusted relative to one another such that the power supply module retained on the supporting frame in a protruding manner can pivot about a pivot axis extending substantially transversely to the protruding power supply module counter to weight forces that are exerted and/or with weight forces that are exerted.

16. Module changeover apparatus (219), using which a power supply module (120) can be introduced into and removed from the receiving space (100) in the device according to claim 14, comprising a base (214) that is adjustable in a horizontal direction relative to a surface below the device at least in a limited manner, and comprising a supporting unit (210), which can be adjusted relative to the base in a vertical direction by means of a lifting means (216) and on which the power supply module (120) can be positioned by a rear end thereof, it being possible to introduce the power supply module (120) into the receiving space in the device arranged thereabove, in particular in the vehicle arranged thereabove, by adjusting the supporting unit (210) upwards and to position said module in the operating position, and it being possible to support the power supply module that was previously in the operating position by adjusting the supporting unit (210) upwards against the rear end and to then lower said module to remove it from the receiving space by adjusting the supporting unit downwards;
**characterised in that** the supporting unit (210) can be pivoted in any direction counter to restoring forces from a restoring-spring assembly acting in the direction of the normal position, relative to the lifting means (216), out of a normal position that preferably provides a horizontal supporting surface for the power supply module,
and/or
**characterised in that** a means of the module changeover apparatus that provides at least one rotational and/or translational degree of freedom allows the power supply module (120) retained by the supporting unit (210) to rotate about a vertical axis and/or allows the power supply module (120) retained by the supporting unit (210) to perform a transverse movement in at least one transverse direction perpendicular to the vertical axis.

17. Combination of at least one vehicle (1) according to any of the preceding claims 1 and 3 to 14 and at least one power supply module (20; 120), preferably a plurality of power supply modules, to be received in the receiving space in the vehicle in order to electrically operate the vehicle, the combination preferably comprising at least one charging station (400) according to any of claims 2 to 14 for charging the at least one power supply module, and the combination preferably further comprising at least one module changeover apparatus (70; 219) according to either claim 15 or claim 16, using which a power supply module can be introduced into and removed from the receiving space (6; 100; 406) in the vehicle or the charging station.

18. Method for operating an electrically operated vehicle according to any of claims 1 and 3 to 14, in which a charged power supply module (20; 120) is introduced into the receiving space (6; 100) in the vehicle (1), preferably by means of a module changeover apparatus (30; 219) according to any of claims 15 to 17, the vehicle is then operated as the power supply module discharges, and then the at least partially discharged power supply module is removed from the receiving space in the vehicle again, preferably by means of a module changeover apparatus according to any of claims 15 to 17, preferably further comprising:
charging the at least partially discharged power supply module (20; 120), preferably by means of a charging station (400) according to any of claims 2 to 14, by the at least partially discharged power supply module being introduced into the receiving space (406) in the charging station, preferably by means of a module changeover apparatus according to either claim 15 or claim 16, and after charging has been carried out, the charged power supply module being removed from the receiving space in the charging station again, preferably by means of a module changeover apparatus according to any of claims 15 to 17, in order to then re-introduce the power supply module into the receiving space in the vehicle (1) for operating the vehicle, at least two power supply modules preferably being used such that the vehicle is operated by at least one power supply module while at least one other power supply module is being charged.

## Revendications

1. Dispositif sous la forme d'un véhicule (1) à fonctionnement électrique, en particulier d'un véhicule utilitaire à fonctionnement électrique, par exemple un chariot de manutention ou un chariot élévateur, qui reçoit, afin de fournir de l'énergie électrique pour le fonctionnement du véhicule, dans au moins un espace de réception (6 ; 100) d'une structure de réception modulaire du véhicule, au moins un module d'alimentation en énergie (20 ; 120) contenant au moins une source d'énergie électrique et/ou au moins un accumulateur d'énergie électrique rechargeable,
le module d'alimentation en énergie (20 ; 120) pouvant être amené dans l'espace de réception (6 ; 100) depuis un côté d'amenée par rapport à la structure de réception modulaire et étant positionné dans une position de fonctionnement définie et pouvant être retiré de l'espace de réception (6 ; 100) en direction du côté d'amenée, et un premier ensemble de contacts électrique (7 ; 107) de la structure de réception modulaire venant en prise ou pouvant être amené en prise avec un deuxième ensemble de contacts électrique (21 ; 121) du module d'alimentation en énergie (20 ; 120) afin de raccorder un premier ensemble de conducteurs électrique raccordé au premier ensemble de contacts à un deuxième ensemble de conducteurs électrique raccordé au deuxième ensemble de contacts électrique,
la structure de réception modulaire présentant des surfaces intérieures (9, 10, 11, 12, 19, 19a, 13, 14, 14a) délimitant l'espace de réception (6 ; 100), auxquelles des surfaces extérieures associées du module d'alimentation en énergie disposé dans la position de fonctionnement font face,
la structure de réception modulaire étant réalisée avec des premiers moyens de guidage (10, 12, 16 ; 103) dans l'espace de réception (6 ; 100), lesquels coopèrent, lors de l'amenée du module d'alimentation en énergie dans l'espace de réception et pour ce qui concerne le positionnement du module d'alimentation en énergie dans la position de fonctionnement, avec des deuxièmes moyens de guidage (22 ; 24, 25 ; 26, 27 ; 122, 123, 124, 125) du module d'alimentation en énergie,
et
le module d'alimentation en énergie (20 ; 120) étant positionné et orienté, dans la position de fonctionnement, par translation, par rapport à l'ensemble des trois directions spatiales perpendiculaire les unes par rapport aux autres, et par rotation, par rapport à une inclinaison autour de trois axes d'inclinaison perpendiculaires les uns par rapport aux autres, de manière définie par rapport à la structure de réception modulaire et, ainsi, dans l'espace de réception (6 ; 100) si bien que, pour le retrait hors de l'espace de réception, le module d'alimentation en énergie adoptant la position de fonctionnement est à déplacer, au moins au début du déplacement du module d'alimentation en énergie, hors de la position de fonctionnement dans une direction de déplacement prédéfinie, déterminée par la configuration de la structure de réception modulaire et du module d'alimentation en énergie et désignée ci-après comme la direction de référence,
**caractérisé en ce que**
la structure de réception modulaire et le module d'alimentation en énergie (20 ; 120) sont réalisés l'un par rapport à l'autre de telle manière que le module d'alimentation en énergie présente, au début lors de l'amenée dans l'espace de réception (6 ; 100), après l'introduction d'une extrémité avant suivant une direction d'introduction du module d'alimentation en énergie, dans l'espace de réception ou dans un canal d'amenée menant à ce dernier de la structure de réception modulaire, un jeu de déplacement défini relatif par translation dans deux directions spatiales perpendiculaires l'une par rapport à l'autre et par rapport à la direction d'introduction et un jeu de déplacement relatif par rotation autour de trois axes d'inclinaison perpendiculaires les uns par rapport aux autres par rapport à la structure de réception modulaire, le jeu de déplacement relatif par rotation se réduisant lors de l'amenée ultérieure du module d'alimentation en énergie (20 ; 120) dans l'espace de réception (6 ; 100) de manière croissante jusqu'à ce que le jeu de déplacement relatif par translation et le jeu de déplacement relatif par rotation disparaissent ou soient réduits à un jeu de déplacement résiduel relatif minimal au plus tard lorsque la position de fonctionnement est atteinte.

2. Dispositif se présentant sous la forme d'une station de charge (400) servant à recharger de manière électrique un module d'alimentation en énergie (20 ; 120) contenant au moins un accumulateur d'énergie électrique rechargeable, lequel est destiné à fournir de l'énergie électrique pour le fonctionnement d'un véhicule (1) à fonctionnement électrique, en particulier d'un véhicule utilitaire à fonctionnement électrique, par exemple un chariot de manutention ou un chariot élévateur,
dans lequel une structure de réception modulaire de la station de charge (400) présente au moins un espace de réception (406) dans lequel un module d'alimentation en énergie (10 ; 120) à recharger peut être reçu,
le module d'alimentation en énergie pouvant être amené, depuis un côté d'amenée par rapport à la structure de réception modulaire, le long d'un chemin d'introduction, dans l'espace de réception (406) et pouvant être positionné dans une position de fonctionnement définie et pouvant être retiré de l'espace de réception (406) en direction du côté d'amenée, et un premier ensemble de contacts (407) électrique de la structure de réception modulaire venant en prise ou pouvant être amené en prise, dans la position de fonctionnement, avec un deuxième ensemble de contacts (21 ; 121) électrique du module d'alimentation en énergie (20 ; 120) afin de raccorder un premier ensemble de conducteurs électriques raccordé au premier ensemble de contacts à un deuxième ensemble de conducteurs électrique raccordé au deuxième ensemble de contacts électrique,
la structure de réception modulaire présentant des surfaces intérieures délimitant l'espace de réception (406), auxquelles des surfaces extérieures associées du module d'alimentation en énergie disposé dans la position de fonctionnement font face,
la structure de réception modulaire étant réalisée avec des premiers moyens de guidage dans l'espace de réception, lesquels coopèrent, lors de l'amenée du module d'alimentation en énergie dans l'espace de réception et pour ce qui concerne le positionnement du module d'alimentation en énergie dans la position de fonctionnement, avec des deuxièmes moyens de guidage (22 ; 24, 25 ; 26, 27 ; 122, 123, 124, 125) du module d'alimentation en énergie, et
le module d'alimentation en énergie étant positionné et orienté, dans la position de fonctionnement, par translation, par rapport à l'ensemble des trois directions spatiales perpendiculaire les unes par rapport aux autres, et par rotation, par rapport à une inclinaison autour de trois axes d'inclinaison perpendiculaires les uns par rapport aux autres, de manière définie par rapport à la structure de réception modulaire et, ainsi, dans l'espace de réception si bien que pour le retrait hors de l'espace de réception, le module d'alimentation en énergie adoptant la position de fonctionnement est à déplacer, au moins au début du déplacement du module d'alimentation en énergie, hors de la position de fonctionnement suivant une direction de déplacement prédéfinie, déterminée par la configuration de la structure de réception modulaire et du module d'alimentation en énergie et désignée ci-après comme la direction de référence,
**caractérisé en ce que**
la structure de réception modulaire et le module d'alimentation en énergie (20 ; 120) sont réalisés l'un par rapport à l'autre de telle manière que le module d'alimentation en énergie présente, au début lors de l'amenée dans l'espace de réception (406), après l'introduction d'une extrémité avant suivant une direction d'introduction du module d'alimentation en énergie dans l'espace de réception ou dans un canal d'amenée menant à ce dernier de la structure de réception modulaire, un jeu de déplacement défini relatif par translation dans deux directions spatiales perpendiculaires l'une par rapport à l'autre et par rapport à la direction d'introduction et un jeu de déplacement relatif par rotation autour de trois axes d'inclinaison perpendiculaires les uns par rapport aux autres par rapport à la structure de réception modulaire, le jeu de déplacement relatif par rotation se réduisant lors de l'amenée ultérieure du module d'alimentation en énergie (20 ; 120) dans l'espace de réception (406) de manière croissante jusqu'à ce que le jeu de déplacement relatif par translation et le jeu de déplacement relatif par rotation disparaissent ou soient réduits à un jeu de déplacement résiduel relatif minimal au plus tard lorsque la position de fonctionnement est atteinte.

3. Dispositif selon la revendication 1 ou 2 ou selon le préambule de la revendication 1 ou 2, **caractérisé en ce que** les surfaces extérieures et les surfaces intérieures (9, 10, 11, 12, 19, 19a, 13, 14, 14a) et/ou les premiers et deuxièmes moyens de guidage sont réalisés les uns par rapport aux autres de telle manière que le module d'alimentation en énergie (20 ; 120) présente, au début lors de l'amenée dans l'espace de réception (6 ; 100 ; 406) après l'introduction d'une extrémité avant dans la/une direction d'introduction du module d'alimentation en énergie dans l'espace de réception, un jeu de déplacement défini relatif par translation dans deux directions spatiales perpendiculaires l'une par rapport à l'autre et par rapport à la direction d'introduction et un jeu de déplacement relatif par rotation autour de trois axes d'inclinaison perpendiculaires les uns par rapport aux autres par rapport à la structure de réception modulaire, le jeu de déplacement relatif par translation et le jeu de déplacement relatif par rotation se réduisant lors de l'amenée ultérieure du module d'alimentation en énergie dans l'espace de réception (6 ; 100 ; 406) de manière croissante jusqu'à ce que le jeu de déplacement relatif par translation et le jeu de déplacement relatif par rotation disparaissent ou soient réduits à un jeu de déplacement résiduel relatif minimal au plus tard lorsque la position de fonctionnement est atteinte.

4. Dispositif selon la revendication 1 ou 3, **caractérisé en ce que** le jeu de déplacement par translation initial et/ou le jeu de déplacement relatif par rotation initial sont adaptés à une inclinaison transversale maximale, attendue lors du fonctionnement du véhicule (1), du véhicule et/ou à une inclinaison longitudinale maximale du véhicule, escomptée lors du fonctionnement du véhicule, afin de permettre, également lorsque le véhicule est incliné, l'amenée du module d'alimentation en énergie (2 ; 120) dans l'espace de réception et le retrait du module d'alimentation en énergie de l'espace de réception.

5. Dispositifs selon l'une quelconque des revendications 1 à 4 ou selon le préambule de la revendication 1 ou 2, **caractérisés en ce qu'**au moins une paire de deux surfaces intérieures (11, 12 ; 13 ; 103) délimitant, dans des directions opposées, l'espace de réception (6 ; 100 ; 406) le long du chemin d'introduction et/ou au moins une paire de deux surfaces extérieures du module d'alimentation en énergie, qui sont associées respectivement à une parmi deux surfaces intérieures délimitant, dans des directions opposées, l'espace de réception le long du chemin d'introduction et qui font face à cette dernière dans la position de fonctionnement, se déplacent au moins par endroits l'une vers l'autre le long du chemin d'introduction.

6. Dispositif selon l'une quelconque des revendications 1, 3, 4 et 5, **caractérisé en ce que** le profil d'au moins une surface intérieure (11, 12 ; 13 ; 103) et/ou le profil d'au moins une surface extérieure sont adaptés à une inclinaison transversale/l'inclinaison transversale maximale du véhicule, escomptée lors du fonctionnement du véhicule (1), lorsque ce dernier se trouve sur un sol horizontal, et/ou à une inclinaison longitudinale/l'inclinaison longitudinale maximale du véhicule, escomptée lors du fonctionnement lorsque ce dernier se trouve sur un sol horizontal afin de permettre également lorsque le véhicule est incliné, l'amenée du module d'alimentation en énergie dans l'espace de réception et le retrait du module d'alimentation en énergie de l'espace de réception,
et de préférence **caractérisé en ce qu'**un angle d'inclinaison d'au moins un segment de surface (11, 12 ; 13 ; 103) de l'au moins une surface intérieure et/ou un angle d'inclinaison d'au moins un segment de l'au moins une surface extérieure sont adaptés, par rapport à la direction de référence, à l'inclinaison transversale (α) maximale du véhicule, attendue lors du fonctionnement du véhicule, quand ce dernier se trouve sur un sol horizontal, et/ou à l'inclinaison longitudinale (ß) maximale du véhicule, attendue lors du fonctionnement du véhicule, quand ce dernier se trouve sur un sol horizontal, et correspondent de préférence à au moins un angle d'inclinaison (α ; ß) maximal attendu du véhicule quand ce dernier se trouve sur un sol horizontal, par rapport à l'horizontale.

7. Dispositif selon l'une quelconque des revendications 1 à 6, **caractérisé en ce qu'**au moins une surface intérieure (9, 10, 11, 12, 13, 14, 14a, 19, 19a; 103) délimitant l'espace de réception (6 ; 100 ; 406) le long du chemin d'introduction fait office au moins par endroits de premier moyen de guidage, qui coopère, lors de l'amenée du module d'alimentation en énergie (20 ; 120) dans l'espace de réception (6 ; 100 ; 406), avec un deuxième moyen de guidage (22 ; 24, 25 ; 26, 27 ; 122, 123, 124, 125) du module d'alimentation en énergie pour ce qui concerne le positionnement du module d'alimentation en énergie dans la position de fonctionnement.

8. Dispositif selon l'une quelconque des revendications 1 à 7, **caractérisé en ce que** les surfaces intérieures délimitant l'espace de réception le long du chemin de guidage présentent des portions de surface (9, 10, 14, 14a, 19, 19a ; 102, 103, 101) planes comprenant des angles d'orientation différents par rapport à la direction de référence, et/ou **en ce que** les surfaces intérieures (11, 12 ; 13 ; 103) se rapprochant au moins par endroits le long du chemin d'introduction se rapprochent les unes vers les autres au moins dans la zone d'une portion de surface (11, 12 ; 13 ; 103) plane respective le long du chemin d'introduction, au moins une portion de surface (11, 12 ; 13) parmi les portion de surface planes se rapprochant les unes des autres le long du chemin d'introduction étant incliné par rapport à la direction de référence,
et de préférence **caractérisé en ce que** parmi les surfaces intérieures se rapprochant au moins par endroits le long du chemin d'introduction, au moins une surface intérieure présente une portion de surface intérieure (14a ; 19 ; 19a ; 102) plane et externe, une portion de surface intérieure (11 ; 12 ; 13 ; 103) plane et centrale présentant un angle d'orientation par rapport à la direction de référence qui est différent de celui de la portion de surface intérieure externe, et une portion de surface intérieure (9 ; 10, 14 ; 101) plane et interne présentant un angle d'orientation par rapport à la direction de référence différent par rapport à la portion de surface intérieure centrale, les surfaces intérieures se rapprochant les unes vers les autres au moins dans la zone de la portion de surface intérieure (11 ; 12 ; 13 ; 103) centrale le long du chemin d'introduction, de préférence les portions de surface intérieure (9 ; 10 ; 14 ; 101) internes et les portions de surface intérieure (14a ; 19 ; 19a ; 102) externes étant orientées de manière parallèle les uns par rapport aux autres dans deux surfaces intérieures délimitant, suivant des orientations opposées, l'espace de réception le long de la direction d'introduction.

9. Dispositif selon l'une quelconque des revendications 1 à 8, **caractérisé en ce que** le module d'alimentation en énergie (20 ; 120) présente, dans un tronçon avant dans la direction d'introduction, des portions de surface extérieure, qui sont configurées sensiblement de manière complémentaire aux portions de surface intérieure en vis-à-vis, et reposent en particulier au niveau de ces dernières dans la position de fonctionnement ou sont étroitement espacées les unes des autres et/ou sont parallèles les unes par rapport aux autres.

10. Dispositif selon l'une quelconque des revendications 1 à 9,
**caractérisé en ce que** le module d'alimentation en énergie (20 ; 120) est configuré, de préférence au niveau au moins d'un tronçon avant dans la direction d'introduction du module d'alimentation en énergie, avec au moins un ensemble d'éléments de roulement (22 ; 301), qui est approprié pour se dérouler, lors de l'amenée du module d'alimentation en énergie dans l'espace de réception, au moins sur une partie du chemin d'amenée, au niveau d'une surface intérieure (12 ; 103) associée de l'espace de réception, l'ensemble d'éléments de roulement (22 ; 301) au moins au nombre d'un étant configuré de préférence en vue d'un déroulement dans plusieurs directions de roulement, idéalement au moins dans deux directions de roulement perpendiculaire l'une par rapport à l'autre.

11. Dispositif selon l'une quelconque des revendications 1 à 10,
**caractérisé en ce que** la structure de réception modulaire est configurée, de préférence au moins dans une zone extérieure de l'espace de réception (6 ; 100 ; 406) ou d'un/du canal d'amenée menant à ce dernier de la structure de réception modulaire, avec au moins un ensemble d'éléments de roulement (16), qui est approprié pour se dérouler, lors de l'amenée du module d'alimentation en énergie (20 ; 120) dans l'espace de réception, au moins sur une partie du trajet d'amenée, au niveau d'une surface de guidage associée du module d'alimentation en énergie, l'ensemble d'éléments de roulement (16) au moins au nombre d'un est configuré de préférence en vue d'un déroulement dans plusieurs directions de roulement, idéalement au moins dans deux directions de roulement perpendiculaires l'une par rapport à l'autre.

12. Dispositif selon l'une quelconque des revendications 1 à 11, **caractérisé en ce que** le module d'alimentation en énergie (20 ; 120) présente, au niveau d'un tronçon arrière dans la direction d'introduction, au moins une structure de guidage (24, 25 ; 26, 27 ; 123), qui fait saillie d'une surface extérieure, associée à une surface intérieure de l'espace de réception, faisant face à cette dernière dans la position de fonctionnement du module d'alimentation en énergie, du module d'alimentation en énergie et qui est appropriée pour coopérer, dans une phase finale de l'amenée du module d'alimentation en énergie (20 ; 120) dans l'espace de réception (6 ; 106 ; 406), avec au moins un moyen de guidage (16 ; 19 ; 14a ; 102) associé de la structure de réception modulaire afin d'aligner et de positionner le module d'alimentation en énergie (20 ; 120) par rapport à la structure de réception modulaire afin d'atteindre et, le cas échéant, de maintenir la position de fonctionnement.

13. Dispositif selon l'une quelconque des revendications précédentes 1 à 12, **caractérisé en ce que** - dans le cas du véhicule (1) se trouvant sur un sol horizontal sans inclinaison longitudinale ou transversale par rapport au véhicule - la direction de référence est une direction horizontale, et/ou **en ce que** - dans le cas du véhicule se trouvant sur un sol horizontal sans inclinaison longitudinale ou transversale par rapport au véhicule - le module d'alimentation en énergie (20) peut être amené dans une direction horizontale, de l'extérieur du dispositif, dans l'espace de réception (6 ; 406).

14. Dispositif selon l'une quelconque des revendications 1 à 12, **caractérisé en ce que** - dans le cas du véhicule se trouvant sur un sol horizontal sans inclinaison longitudinale ou transversale par rapport au véhicule - la direction de référence est une direction verticale, et/ou **en ce que** - dans le cas du véhicule se trouvant sur un sol horizontal sans inclinaison longitudinale ou transversale par rapport au véhicule - le module d'alimentation en énergie (120) peut être amené, dans une direction verticale, depuis l'extérieur du dispositif, en particulier depuis le dessous du dispositif, dans l'espace de réception (100).

15. Appareil de remplacement de module (30), à l'aide duquel un module d'alimentation en énergie (20) peut être amené dans l'espace de réception (6) du dispositif selon la revendication 13 et peut être retiré de ce dernier, comprenant un cadre principal (31, 31a) pouvant être déplacé sur un sol commun à l'appareil de remplacement de module et au dispositif, au niveau duquel un cadre porteur (36) est guidé de manière à pouvoir être ajusté dans une direction en hauteur et de manière à pouvoir être fixé à une hauteur momentanée, lequel cadre porteur présente au moins un segment de couplage (42), le cadre porteur (36) pouvant être amené en prise par couplage, de préférence par complémentarité de forme, par son segment de couplage (42) au moins au nombre de un, avec au moins un segment de couplage antagoniste (23) du module d'alimentation en énergie (20) afin de maintenir au niveau du cadre porteur le module d'alimentation en énergie tout en dépassant en porte-à-faux, par son extrémité avant, du cadre porteur de sorte que le module d'alimentation en énergie peut être amené, par le déplacement de l'appareil de remplacement de module (30) sur le sol et le cas échéant par l'ajustement du cadre porteur (36) maintenant le module d'alimentation en énergie au niveau du cadre principal (31, 31a), dans l'espace de réception (6) et qu'il peut être positionné dans la position de fonctionnement,
dans lequel la prise par couplage peut être défaite après le positionnement du module d'alimentation en énergie dans la position de fonctionnement et l'appareil de remplacement de module (30) peut être éloigné par déplacement du dispositif,
et dans lequel la prise par couplage entre le cadre porteur (36) et le module d'alimentation en énergie (20) qui se trouve dans la position de fonctionnement peut être rétablie ultérieurement afin de retirer de l'espace de réception le module d'alimentation en énergie par le déplacement de l'appareil de remplacement de module sur le sol et, le cas échéant, par l'ajustement du cadre porteur, maintenant le module d'alimentation en énergie, au niveau du cadre principal ;
et **caractérisé en ce que** la prise par couplage ou un système offrant au moins un degré de liberté de déplacement par rotation de l'appareil de remplacement de module, autorise un pivotement du module d'alimentation en énergie (20) maintenu en porte-à-faux au niveau du cadre porteur (36) autour au moins d'un axe de pivotement s'étendant sensiblement de manière transversale par rapport au module d'alimentation en énergie en porte-à-faux, à l'encontre de l'action de forces de poids, et/ou autorise un gauchissement du module d'alimentation en énergie, maintenu en porte-à-faux au niveau du cadre porteur, autour d'un axe de rotation s'étendant dans la direction d'introduction ou sensiblement le long du module d'alimentation en énergie en porte-à-faux, et/ou **en ce qu'**au moins un appui de module supérieur (42) et au moins un appui de module inférieur (138) de l'appareil de remplacement de module peuvent être ajustés l'un contre l'autre de telle manière que le module d'alimentation en énergie maintenu en porte-à-faux au niveau du cadre porteur peut pivoter autour d'un axe de pivotement s'étendant sensiblement de manière transversale par rapport au module d'alimentation en énergie en porte-à-faux à l'encontre de l'action de forces de poids et/ou sous l'action de forces de poids.

16. Appareil de remplacement de module (219), à l'aide duquel un module d'alimentation en énergie (120) peut être amené dans l'espace de réception (100) du dispositif selon la revendication 14 et peut en être retiré, comprenant au moins une base (214) à ajustement limité dans une direction horizontale par rapport à une sous-structure du dispositif et une unité porteuse (210) pouvant être ajustée par rapport à la base dans une direction en hauteur au moyen d'un système de hissage (216), sur laquelle le module d'alimentation en énergie (120) peut être déposé par une extrémité arrière, le module d'alimentation en énergie pouvant être amené dans l'espace de réception du dispositif disposé par-dessus, en particulier du véhicule disposé par-dessus par l'ajustement de l'unité porteuse (210) vers le haut et pouvant être positionné dans la position de fonctionnement ou le module d'alimentation en énergie (120) se trouvant au préalable dans la position de fonctionnement pouvant être soutenu par le déplacement de l'unité porteuse (210) vers le haut contre l'extrémité arrière puis être abaissé vers le bas par l'ajustement de l'unité porteuse aux fins du retrait hors de l'espace de réception,
**caractérisé en ce que** l'unité porteuse (210) peut être pivotée hors d'une position normale fournissant de préférence une surface porteuse horizontale pour le module d'alimentation en énergie, par rapport au système de hissage (216), dans des directions quelconques à l'encontre de forces de rappel, agissant en direction de la position normale, d'un ensemble de ressorts de rappel,
et/ou
**caractérisé en ce qu'**un système, offrant au moins un degré de liberté par rotation et/ou par translation, de l'appareil de remplacement de module autorise un gauchissement du module d'alimentation en énergie (120) porté par l'unité porteuse (210) autour d'un axe en hauteur et/ou un coulissement transversal du module d'alimentation en énergie (120) porté par l'unité porteuse (210) autour au moins d'une direction transversale de manière perpendiculaire par rapport à l'axe en hauteur.

17. Combinaison composée au moins d'un véhicule (1) selon l'une quelconque des revendications précédentes 1, 3 à 14 et au moins d'un et de préférence de plusieurs modules d'alimentation en énergie (20 ; 120) destinés à être reçus dans l'espace de réception du véhicule afin de faire fonctionner le véhicule de manière électrique, la combinaison comprenant de préférence au moins une station de charge (400) selon l'une quelconque des revendications 2 à 14, afin de charger le module d'alimentation en énergie au moins au nombre d'un, et la combinaison comprenant de préférence en outre au moins un appareil de remplacement de module (70 ; 219) selon la revendication 15 ou 16, à l'aide duquel un module d'alimentation en énergie peut être amené dans l'espace de réception (6 ; 100 ; 406) du véhicule ou de la station de charge et peut en être retiré.

18. Procédé servant à faire fonctionner un véhicule à fonctionnement électrique selon l'une quelconque des revendications 1, 3 à 14, dans lequel un module d'alimentation en énergie (20 ; 120) rechargé est amené dans l'espace de réception (6 ; 100) du véhicule (1), de préférence à l'aide d'un appareil de remplacement de module (30 ; 219) selon l'une quelconque des revendications 15 à 17, sachant que le véhicule fonctionne alors en déchargeant le module d'alimentation en énergie puis le module d'alimentation en énergie au moins en partie déchargé est à nouveau retiré de l'espace de réception du véhicule, de préférence à l'aide d'un appareil de remplacement de module selon l'une quelconque des revendications 15 à 17, comprenant en outre de préférence : la recharge du module d'alimentation en énergie (20 ; 120) au moins en partie déchargé, de préférence au moyen d'une station de charge (400) selon l'une quelconque des revendications 2 à 14, en ce que le module d'alimentation en énergie au moins en partie déchargé est amené dans l'espace de réception (406) de la station de charge, de préférence à l'aide d'un appareil de remplacement de module selon la revendication 15 ou 16 et en ce qu'une fois la recharge effectuée, le module d'alimentation en énergie rechargé est à nouveau retiré de l'espace de réception de la station de charge, de préférence à l'aide d'un appareil de remplacement de module selon l'une quelconque des revendications 15 à 17 afin d'amener le module d'alimentation en énergie alors à nouveau dans l'espace de réception du véhicule (1) pour le fonctionnement du véhicule, de préférence au moins deux modules d'alimentation en énergie étant utilisés de sorte que le véhicule fonctionne avec au moins un module d'alimentation en énergie, alors qu'au moins un autre module d'alimentation en énergie est chargé.
